# EUROPEAN PATENT APPLICATION

(11) **EP 1 457 909 A2**
(43) Date of publication of application: **15.09.2004**
(21) Application number: 04075838.5
(22) Date of filing: 15.03.2004
(51) Int. Cl.: G06F 17/60

(54) **Method of facilitating an enterprise change**

(30) Priority: 14.03.2003 US 455087 P; 30.01.2004 US 769472; 30.01.2004 US 768402; 30.01.2004 US 768967; 30.01.2004 US 769297
(71) Applicant: SAP AG, 69190 Walldorf (DE)
(72) Inventor: Schwerin-Wenzel, Sven, 69234 Dielheim (DE); Wood, Eric, Menlo Park, CA 94025 (US); Kol, Nir, Sunnyvale, CA 94087 (US); Moore, Dennis B, Palo Alto, CA 94304 (US)
(74) Representative: Winckels, Johannes Hubertus F.

(57) **Abstract**

A method of facilitating an enterprise change comprising: providing one or more information systems of at least two enterprises, wherein the enterprises are being combined to execute pre-change due diligence and/or post-change integration of the enterprise change, the enterprise change comprising at least one of a merger and an acquisition; treating said two or more information systems as a single logical information system; and providing a user interface to access the logical information system. In a preferred embodiment, the method may comprise providing a clean room object that is arranged for meeting and exchanging information and objects on a clean room user access level.

## Description

The present application describes systems, methods and software for enterprise change as a result of restructuring, such as mergers & acquisitions (M&As), for one or more organizations.

During an organizational restructuring, such as a merger or acquisition, an organization needs to adjust supplier relationships. In order to obtain one or more merger goals, merger organizations may desire to share supplier information and resources. Moreover, merger organizations may want to devise new supplier relationships and reduce procurement costs. Furthermore an organization needs to determine how to effectively serve current customers. In order to obtain one or more restructuring goals, organizations desire to share customer information and resources to reduce the risk of unwanted redundant customer services and support. Moreover, organizations want to ensure that customer concerns and sales-related issues are addressed in the restructuring process. Another aspect of such an organizational restructuring is that managers and human resource personnel often need to reassign employees to other groups, divisions, and departments in a merged organization. Managers and human resource personnel can also want to hire new candidates, or reduce their workforce through attrition. Sometimes, the merger organizations are overwhelmed with the prospects of determining and managing benefit and compensation packages for all merger employees.

In one aspect, the invention offers a method and system which effectively provides a structure for facilitating the above mentioned aspects. In another aspect, the invention offers a method and system to facilitate effectively the process of organizational restructuring.

In order to achieve the above mentioned goals, the invention provides a method according to the independent claim 1. In another aspect, the invention provides a system according to the independent claim 19. In yet another aspect, the invention provides a machine-readable medium storing instructions operable to cause one or more machines to perform operations according to the inventive method.

These and other aspects will now be described in detail with reference to the following drawings.
FIG. 1 is a block diagram of a system.
FIG. 2 is a flow diagram.
FIG. 3 is a block diagram of an architecture.
FIG. 4 is a block diagram of a platform.
FIGS. 5-16 illustrate exemplary user interfaces generally relating to a procurement framework in a method according to the invention.
FIGS. 17-38 illustrate exemplary user interfaces generally relating to sales management in a method according to the invention.
FIGS. 39-46 illustrate exemplary user interfaces generally relating to services integration in a method according to the invention.
FIGS. 47-68 illustrate exemplary user interfaces generally relating to benefits and compensation realignment in a method according to the invention.

Like reference symbols in the various drawings indicate like elements.

The systems and techniques described here relate to software for organizations in a restructuring environment, such as doing a merger and acquisition (M&A).

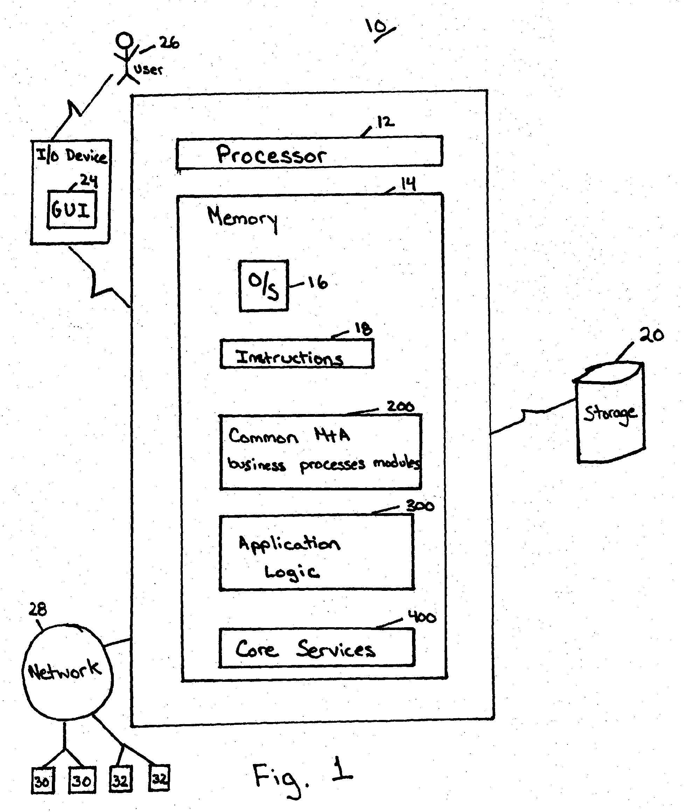

As shown in FIG. 1, a system 10 includes a processor 12 and a memory 14. Memory 14 includes an operating system 16, and instructions 18, that when executed by the processor 12, perform an exemplary restructuring integration process 100, described below. A specific restructuring process, referred to as a merger and acquisition (M&A), will be used as an example throughout this description. However, the process 100 can be applied to most corporate change or restructuring activities, such as spin-offs, department mergers and splits, and so forth. Memory 14 also includes common restructuring business processes modules 200, application logic 300, and a core framework of services 400 that support the restructuring integration process 100. The system 10 includes a link to a storage device 20 and an input/output device 22. The input/output device 22 can include a graphical user interface (GUI) 24 for display to a user 26.

The system 10 includes a link to a network 28. Network 28 links the system 10 to other systems 30 within a single entity and to systems 32 in one or more other entities. Systems 30, 32, generally referred to as clients or source systems, access data through a portal 34. Systems 10, 30, 32 are designed to act as a single logical physically distributed information system representing multiple enterprise information systems of organizations residing in the systems 30, 32. Information is exchanged between the system 10 and systems 30, 32 through the portal 34 and through user interfaces (UIs) of an architecture, described below.

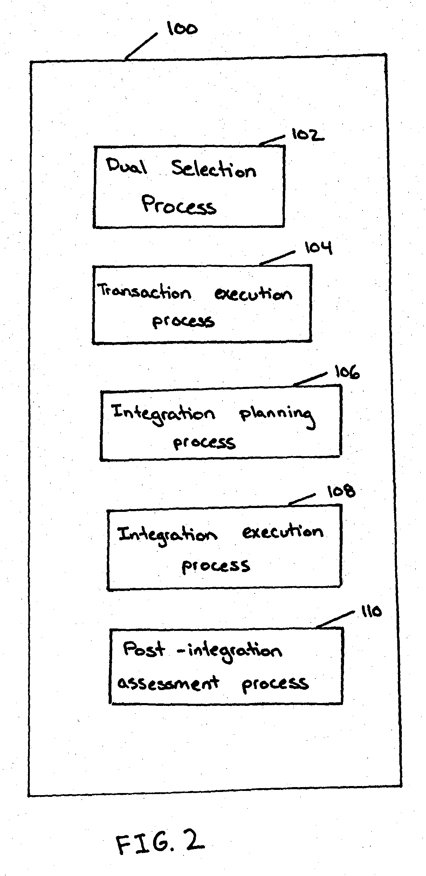

As shown in FIG. 2, the restructuring integration process 100 includes a deal selection process 102. The deal selection process 102 defines acquisition objectives and strategies. The deal selection process 102 searches for the best fit target company to meet a set of objectives and manages detailed due diligence on the target company. The deal selection process 102 also identifies synergies, risks and a realization plan for acquiring the target company.

A transaction execution process 104 structures an acquisition in terms of type, tax implications, legal issues and so forth. The transaction execution process 104 closes an acquisition deal and provides for a rollback in the event the acquisition deal fails.

An integration planning process 106 provides a plan for short term and long term tasks of acquisition integration and communicates goals and decisions to all stakeholders.

The restructuring integration process 100 includes an integration execution process 108. The integration execution process 108 manages an integration project and it sub-projects, designs a new organization, and minimizes disruptions to customers by rolling out combined field organizations quickly. The integration execution process 108 manages the integration of information technology (IT), human resources (HR), financials and procurement. The integration execution process 108 provides for the retention of key employees, manages field organization integration, and identifies cross-selling opportunities and rolls the opportunities out. The integration execution process 108 manages stakeholders, tracks an acquisition, and reports issues and successes.

The restructuring integration process 100 includes a post-integration assessment process 110. The post-integration assessment process 110 measures achieved synergies against targets, accesses where improvements can be made in synergy estimation and/or in integration execution, and applies history to a next transaction.

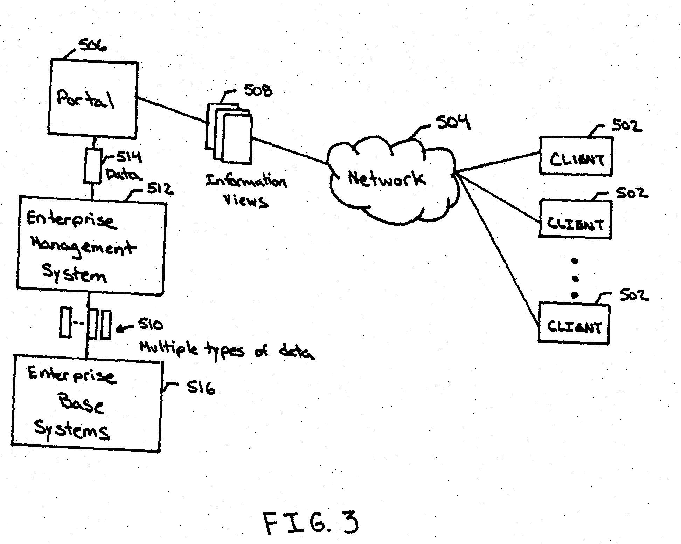

As shown in FIG. 3, the restructuring integration process 100, common restructuring business processes modules 200, application logic 300, and core framework of services 400 are designed to conform to an architecture 500 designed to a platform 600 that represents a single logical physically distributed information system representing multiple enterprise information systems of organizations. The architecture 500 / platform 600 insure consistency of data exchange between system 10 and source systems 30, 32, and a separation of source systems 30, 32, when appropriate during phases of the restructuring integration process 100.

The single logical physically distributed information system architecture 500 representing multiple enterprise information systems of organizations includes multiple clients 502 accessing data over a network 504 through a portal 506. In one embodiment, the clients 502 are processes and/or web browsers that are coupled to the network 504 through a proxy server (not shown).

The portal 506 provides a common interface to program management services through user interface (UI) components 508. The portal 506 receives requests from the clients 502 and generates information views (iViews) 510, such as web pages, in response. In embodiments, the portal 506 implements a user roles-based system to personalize a common interface and the iViews 510 for a user of one of the clients 502. The user can have one or more associated roles that allow personalized tailoring of a presented interface through the iViews 510.

The portal 506 communicates with an enterprise management system 512 that consolidates multiple application services.

The portal 506 receives data 514 from the system 512 to fulfill the requests of the clients 502. The system 512 provides integrated application services to manage business objects and processes in a business enterprise. The business objects and processes include resources such as personnel, development projects, business programs, inventories, clients, accounts, business products, business services and so forth.

The system 512 communicates with enterprise base systems 516 to obtain multiple types of enterprise base system data 518. The base systems 516 include application services, such as human resource management systems, customer relationship management services, financial management systems, project management systems, knowledge management systems, business warehouse systems, time management systems, electronic file systems and mail systems. In embodiments, the enterprise base systems 516 include a single integration tool, such as eXchange from SAP AG of Germany, which provides an additional level of integration among the enterprise base systems 516. The enterprise management system 512 consolidates and integrates data and functionality of the enterprise base systems 516 into the single management tool.

The single management tool includes systems and methods to facilitate generation of new applications within the enterprise management system 512. The new applications, generally referred to as cross-functional or composite applications, draw on resources of the enterprise base systems 516 to cross over traditional application boundaries and handle new business scenarios in a flexible and dynamic manner.

A virtual business cycle can be generated using such composite applications, where executive level business strategy can feed management level operational planning, which in turn can feed employee level execution, which can feed management level evaluation, which can feed executive level enterprise strategy. Information generated in each of these stages in an enterprise management cycle can be consolidated and presented by the enterprise management system 512 using the customized cross-functional applications. The stages provide and consume determined services that are integrated across multiple disparate platforms.

The portal 506, enterprise management system 512 and enterprise base systems 516 can reside on one or more programmable machines, which communicate over the network 504 or one or more communication busses. In embodiments, the base systems 516 reside in multiple servers connected to the network 504, and the portal 506 and enterprise management system 512 reside in a server connected to a public network (not shown). Thus, the architecture 500 can include customized, web-based, cross-functional applications, and a user can access and manage enterprise programs and resources using these customized web-based, cross-functional applications from anywhere that access to the public network is available.

A user interface (UI) provides UI patterns used to link new objects and workflow together and generate standardized views into results generated by one or more cross-functional applications.

An object modeling tool enables generation of new business objects in a persistency/repository layer by providing a mechanism to extend a data object model dynamically according to the needs of an enterprise.

A process modeling tool enables generation of new business workflow and ad hoc collaborative workflow. The process modeling tool includes procedure templates with pre-configured work procedures that reflect best practices of achieving a work objective. A work procedure can include contributions from several individuals, generation of multiple deliverables, and milestones/phases. Whenever an instantiated business object or work procedure has a lifetime and status, a progress and status of the object or work procedure is trackable by a process owner or by involved contributors using a "dashboard" that displays highly aggregated data. The dashboard and a "myOngoingWork place" can be two UI patterns that are provided by the UI components 508.

Whenever there is a concept of "myObjects," "myRecentObjects," "myRelatedObjects" or "myPreferredObjects," then an object picker UI pattern, provided by the UI components 508, is included that lets users pick their favorite object directly. Whenever people are to be searched, either for choosing one individual person or for generating a collection of people meeting some criterion, a "People Finder" concept can be applied. A key aspect of searching for a person is described as an attribute within the user's activity, qualification, interest, and collaboration profile. For a given cross-functional application, people collections can be stored as personal or shared collections using the People Finder to make them available for further operations later on.

Whenever there is a strategic view on a cross-functional application scenario, analytics of the overall portfolio can be made available in the form of a collection of the UI components 508. A view selector is used to display/hide components, and a component can be toggled between graphical and numerical display and include a drop-down list or menu to select sub-categories or different views.

Cross-functional application scenarios provide related information to the user when possible, and some parts within a larger cross-functional application define what kind of related information is to be offered. Heuristics can be used to identify such relatedness, such as follows: (1) information that is related to the user due to explicit collaborative relationships, such as team/project membership or community membership; (2) information that is similar to a given business object in a semantic space based on text retrieval and extraction techniques; (3) recent objects/procedures of a user; (4) other people doing the same or similar activity (using the same object or procedure template, having the same work set); (5) instances of the same object class; (6) next abstract or next detailed class; (7) explicit relationships on the organizational or project structure; (8) proximity on the time scale; (9) information about the underlying business context; and/or (10) information about the people involved in a collaborative process.

Cross-functional applications also can include generic functionality in the form of "Control Center Pages" that represent generic personal resources for each user. These cross-functional applications can refer to the following pages, where appropriate: (1) A "MyOngoingWork" page that provides instant access to all dashboards that let users track their ongoing work. Ongoing work refers to the state of business objects as well as guided procedures. (2) A "MyDay" page that lists today's time based events that are assigned or related to the user. (3) "MyMessageCenter" page that displays all pushed messages and work triggers using a universal inbox paradigm with user selected categorical filters. (4) "MyInfo" that provides access to all personal information collections (documents, business objects, contacts) including those located in shared folders of teams and communities of which the user is a member. MyInfo can also provide targeted search in collaborative information spaces such as team rooms, department home pages, project resource pages, community sites, and/or personal guru pages.

The object modeling tool, process modeling tool and user interfaces are used to build components of cross-functional applications to implement new enterprise management functions without requiring detail coding development by a system architect or programmer.

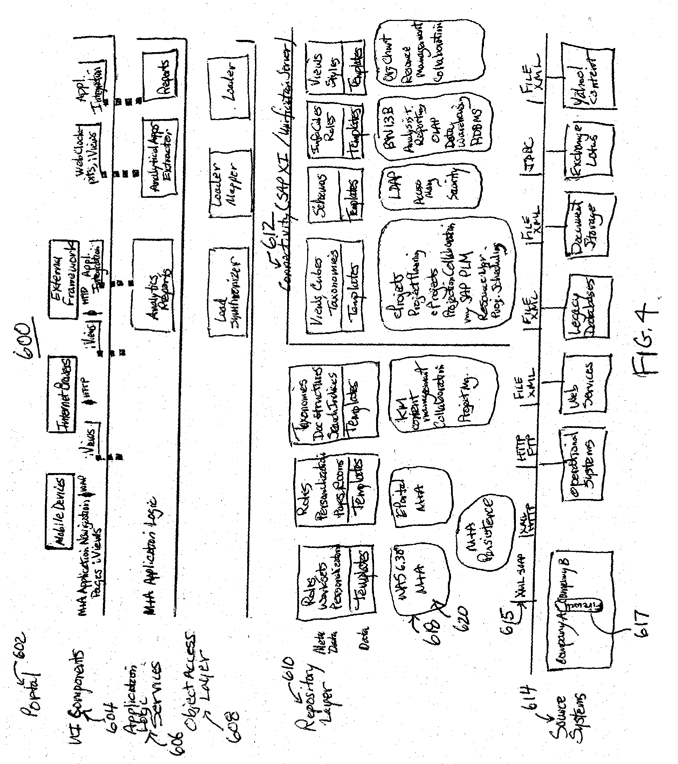

As shown in FIG. 4, a platform 600 that supports the architecture 500 includes a portal 602, user interface (UI) components 604 and application services logic 606. The platform 600 includes an object access layer 608, a persistence/repository layer 610, connectivity layer 612, and source systems 614. In embodiments, the architecture includes software and components from SAP AG of Germany, as well as special corporate restructuring modules.

Graphical user interfaces (GUIs) provide interaction between a user and the UI components 604 through the portal 602. The UI components 604 interact with the application services logic 606. The application services logic 606 interact with databases and repositories in the persistence/repository layer 610. The user requests information via a GUI through the portal 602. The application services logic 606 processes the user request, retrieves the appropriate requested information from the databases and repositories in the persistence/repository layer 610, and sends the requested information to GUI for display to the user.

The databases and repositories in the persistence/repository layer 610 can contain metadata. Metadata refers to data that describes other data, such as data pertaining to roles, work sets and personalization information, for example. The metadata can interact with the object access layer 608, connectivity layer 612 and application services logic 606. The metadata can also interact with templates 616. The templates 616 provide a format or organization of information according to preset conditions. The templates 616 can interface with Web application server (WAS) processes 618 and core merger processes 620 in the repository layer 610.

In embodiments, the databases and repositories in the persistence/repository layer 610 interact with the source systems 614 through base system connectors 615 using a markup language such as extensible markup language (XML), web services such as Simple Object Access Protocol (SOAP), request for comments (RPC), or Transmission Control Protocol/Internet Protocol (TCP/IP). The source systems of one organization can interact with the source systems of another organization through a firewall 617.

The base system connectors 615 can include a enterprise connector (BC) interface, Internet communication manager/Internet communications framework (ICM/ICF), an encapsulated postscript (EPS) interface and/or other interfaces that provide remote function call (RFC) capability.

The persistence/repository layer 610 provides the platform 600 with its own database and data object model. The database and data object model provides a consolidated knowledge base to support multiple enterprise functions, including functions generated as cross-applications. Active communication between the persistence/repository layer 610 and the base systems 516/614 provides a linkage between real time relational data from multiple base systems 516/614 and an integrated enterprise tool to permit strategic enterprise management and planning.

The data object model represents a subset of data objects managed by base systems 516/614. Not all of the data aspects tracked in the base systems 516/614 need to be recorded in the data object model. The data object model has defined relationships with data objects stored in the base systems 516/614. For example, certain data objects in the data object model have "read-only" or "write-only" relationships with data objects in the base systems 516/614. These types of defined relationships are enforced through a communication process between the persistence/ repository layer 610 and the base systems 516/614. The persistence/repository layer 610 decouples application development from the underlying base systems 516/614.

In embodiments, the source systems 516/614 interact with third party applications, such as Lotus software from IBM or data provided by other content providers, such as Yahoo!

As described above, the portal 602 provides a common interface to management services. The management services include a merger project management service and a merger integration project management service. The network 504 links the clients 502 to the portal 602 for exchange of information pertaining to a merger of two organization organizations or an acquisition involving two organizations.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the invention, or any combination of such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

As used herein, the terms "electronic document" and "document" mean a set of electronic data, including both electronic data stored in a file and electronic data received over a network.

The term "organization" can refer to a company, enterprise, business, government, educational institution, or the like. The term "organization" can also refer to a group of persons, such as an association or society.

An "enterprise change" or "organization change" can refer to a merger, an acquisition, a combination of a merger and acquisition or some other type of change in an organization's structure, leadership, governance, personnel, business, direction, purpose, strategy, and so forth.

A "synergy" can be a value, performance or effect that can be achieved as resources of two organizations combined will be greater than the sum of the separate individual resources. The term "synergy" can also refer to cooperative interaction among groups, especially among the acquired subsidiaries or merged parts of an organization, which generates an enhanced combined effect.

The term "object" can refer to information sources such as documents, reports, presentations, files and directories.

A "template" is an interface that can include parameters or a format from a previous merger, or can be transferred or copied from another employee in the same organization or a customer.

The disclosed merger software, among other functions, can offer an object management tool in the pre-merger due diligence process and provide accurate information hand-over to a next phase of the merger process. The "next phase" of the merger process can be the next goal or milestone for the same person or group or it could involve transferring the accumulated merger information to another person or group.

"Stakeholders" are exemplary merger members described herein with an interest or stake in the progress of the merger, or persons who are involved in some aspect of the merger or its effects.

"Strategy" users can include executives or steering committee members who assign and monitor one or more transactions.

"Management" users can include corporate development team members or merger integration team members who are responsible for executing various aspects of the merger. Employee users can include one or more employees who are impacted by the merger.

A "deliverable" can be referred to as a "task" that one or more stakeholders can be responsible for producing for other stakeholders. A deliverable can be referred to as a goal, objective, result or procedure that can be fulfilled, promised, achieved, produced or expected. A deliverable can also be referred to as a merger-related project.

"Due diligence" can involve investigation and examination into one or more details of a potential investment, such as an examination of operations and management and a verification of material facts. Due diligence can serve to confirm material facts regarding a merger or offer, such as reviewing financial records and other items deemed material to the merger.

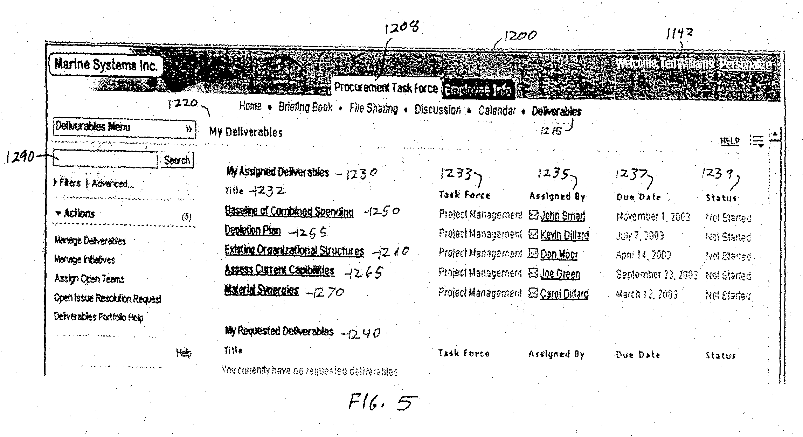

FIGS. 5-16 illustrate exemplary user interfaces generally relating to a procurement framework.

In an aspect, there is disclosed a method of facilitating an enterprise change including treating two or more information systems as a single logical information system to execute pre-change due diligence and post-change integration of the enterprise change, the enterprise change including at least one of a merger and an acquisition, and providing a user interface to access the logical information system to manage supplier information and supplier resources. In embodiments, the method can include providing a procurement user interface to access the logical information system to manage procurement information and resources, and allowing the procurement user interface to present at least one of a synergies panel, a merger risk, a synergy target, and a sub-deliverable, the procurement user interface presenting an impact of a synergy and a risk level impact.

In another aspect, there is disclosed a method including providing a single logical physically distributed information system across one or more information systems of at least two enterprises, wherein the enterprises are being combined, and providing a user interface to access the single logical physically distributed information system to execute one or more pre-merger activities, merger activities, and post-merger activities, wherein the merger activities can include procurement realignment. In embodiments, the user interface can be adapted to at least one of a role of the user and a phase of the merger, wherein the user role can include a procurement stakeholder, an internal expert, and an external expert of one of the enterprises.

In another aspect, there is disclosed a system for planning a merger of at least two organizations, the system including a clean room object and a module to consolidate suppliers of at least one of the organizations, the system further including a list of consolidated items, the list including a lowest negotiated supplier price and a resulting post-merger cost savings. In embodiments, the system can include at least one of a list of consolidated items with volume information and a list of consolidated suppliers with volume information, at least one of the lists presenting a percent change in volume.

In another aspect, there is disclosed a system for planning a merger of at least two organizations, the system including a process adapted to allow one or more merger members to access procurement information, the process including a user interface adapted to allow a user to search for stakeholders, a deliverables view, and a financial impact of obtaining one or more goods from a supplier. In embodiments the process can include a planned timeline and a risk level, the process presenting merger financial information, the financial information including a budget and a return on investment, the deliverables view including one or more sub-deliverables, the system further including one or more procurement-related messages, the messages including supplier contract information.

In another aspect, there is disclosed a method including facilitating consolidation of suppliers for an organization in a merger of at least two organizations, facilitating an assessment of supplier information of at least one of the organizations, and presenting a user interface adapted to facilitate the consolidation of the suppliers and facilitate the assessment of supplier information, the user interface including personalized tasks.

In another aspect, there is disclosed a system for planning a merger of at least two organizations including a procurement synergy, a procurement initiative item related to the procurement synergy, and an attachment related to the item, the attachment being a supply-related clean-room object.

In another aspect, there is disclosed a system for implementing a merger of at least two organizations, wherein the system can include a first user interface adapted for a procurement stakeholder for a first organization, and a second user interface adapted for a procurement stakeholder for a second organization, the second user interface facilitating sharing of one or more procurement objects with the first user interface.

In embodiments, the at least one of the interfaces presents contact information for at least one procurement stakeholder of one of the organizations, the system further including a synergy item.

In another aspect, there is disclosed a system for planning a merger of at least two organizations, the system including information repositories, a clean room, and an interface adapted to present research information, the research information including one or more lists of legal, accounting, commercial, and internal data. In embodiments, the system can include at least one of information on suppliers and customers, supplier contracts, customer lists, procurement item lists, credit terms for one or more supplier, supplier prices, and sample procurement reports. The system can also include a supplier contract document.

Turning now to the figures, FIG. 5 shows an exemplary interface 1200 with a procurement task force tab 1208 that has a menu of views including a deliverables view 1215. The interface 1200 includes a panel 1220 with personalized assigned deliverables 1230 and requested deliverables 1150. Some deliverable topics 1232 can include a baseline of combined spending 1250, a depletion plan 1255, an organizational structure 1260, a view of current capabilities 1265, and a view of material synergies 1270. In addition to presenting deliverable topics 1232, the panel 1220 can present a targeted merger task force 1233, an initiating deliverable contact person 1235, a deadline 1237, and a status 1239. A user 1142 can select to perform a search of merger information in a search text box 1290.

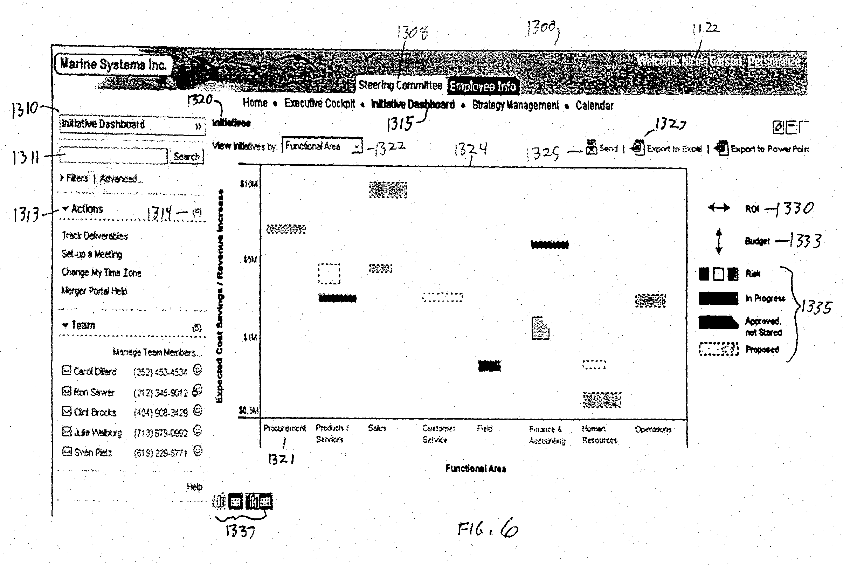

FIG. 6 illustrates an interface 1300 for an initiative dashboard 1315 in a steering committee menu 1308. An initiative panel 1320 allows a user to view a graph 1324 of initiatives. The panel 1320 includes procurement information 1321. A selector 1322 shows an initiative graph 1324 by functional area, cost savings, revenue increase, or other initiative options. The panel 1320 shows a graph legend 1335 with different types and statuses of merger information. The graph 1324 can present merger financial information for a functional area, such as a return on investment 1330 or a budget 1333.

A user 1122 can send the initiative information, such as graph 1324, to other stakeholders via an icon 1325 or transfer the information to an external software object, such as an Excel spreadsheet by Microsoft Corporation via an icon 1327

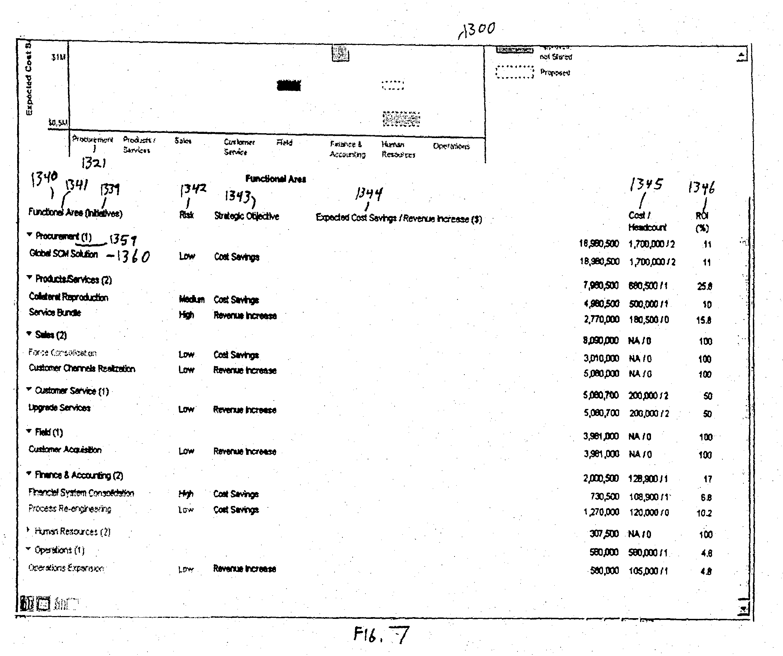

The interface 1300 allows a user to access a graph 1324, a list (shown in FIG. 7), or a graph and a list of initiative information via icons 1337. Furthermore, the interface 1300 can have a panel 1310 with a text box 1311 to allow the user 1122 to search for items or people, as well as to perform a number 1314 of other actions 1313.

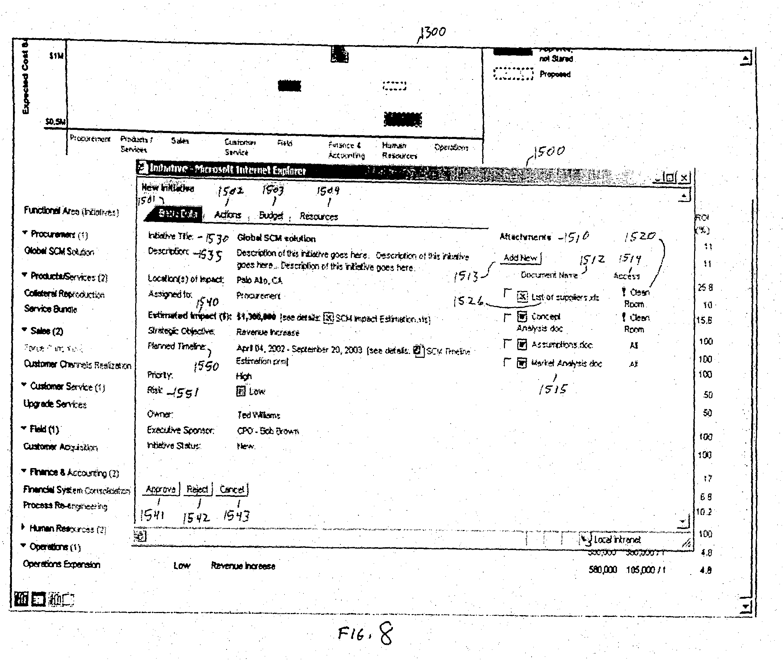

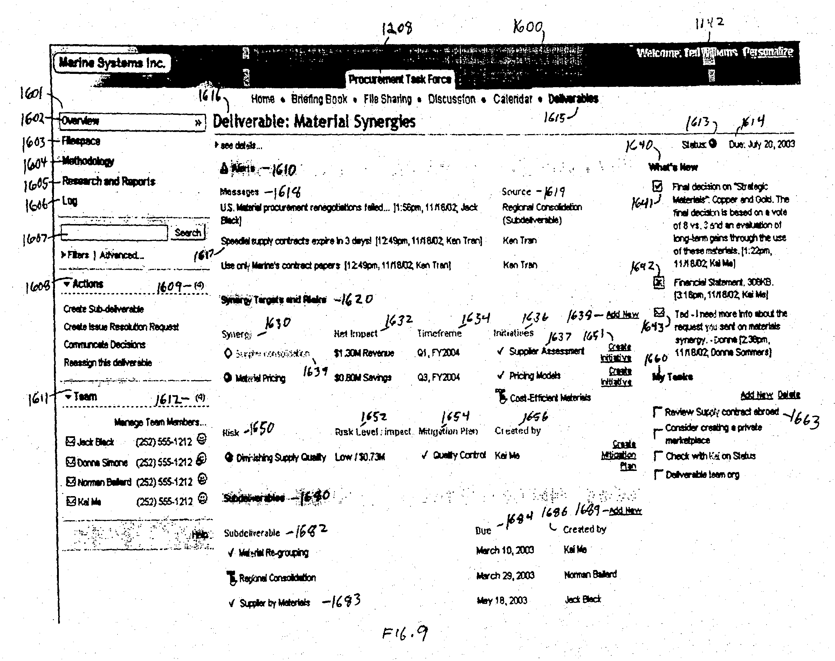

The interface 1300 includes a panel 1340 (FIG. 7) that presents information from the initiative graph 1324 in a list or table format. The panel 1340 presents a functional area 1341 for a number of initiatives 1339. An initiative risk level 1342, a strategic objective 1343, and an expected cost savings 1344 can also be presented. Additionally, a return on investment 1346 and a cost per headcount 1345 can be shown for listed initiatives. A user selects an initiative item 1360, under a procurement heading 1359, to view another panel, as shown in panel 1500 in FIG. 8.

Referring now to FIG. 8, the panel 1500 includes detailed initiative information for the procurement initiative item 1360. The panel 1500 presents tab menus of basic data 1501, actions 1502, budget 1503, and resources 1504. The initiative 1360 in FIG. 8 can be presented with a heading 1530 and a detailed description 1535. Additionally, details of an estimated impact 1540 of the merger initiative 1530 are presented, including a planned timeline 1550 and a risk level 1551. After analyzing the procurement initiative information 1501, the user 1122 can approve, reject or cancel the initiative 1530 via buttons 1541, 1542, 1543.

The user 1122 can view and add attachments 1510 of objects 1515 to the panel 1500 via button 1513. An exemplary attachment 1510 for the procurement initiative item 1360 includes information regarding a list of suppliers 1526. The panel presents the name 1512 of an object 1515 and the level of access 1514 a user 1122 has to the object 1515.

The panel 1500 can include a tool to model a "clean room" environment 1520 during the merger process. The clean room concept during a merger typically includes members of the involved organizations physically meeting in a room and exchanging information and objects. Only the members of a clean room environment can view and examine the confidential and privileged information of other merger organizations. If the merger deal is unsuccessful and the merger deal fails, then the clean room members usually leave their organization for reasons of conflicts of interest, or are transferred to other parts of their organization where they will not be interacting with the other merger organizations.

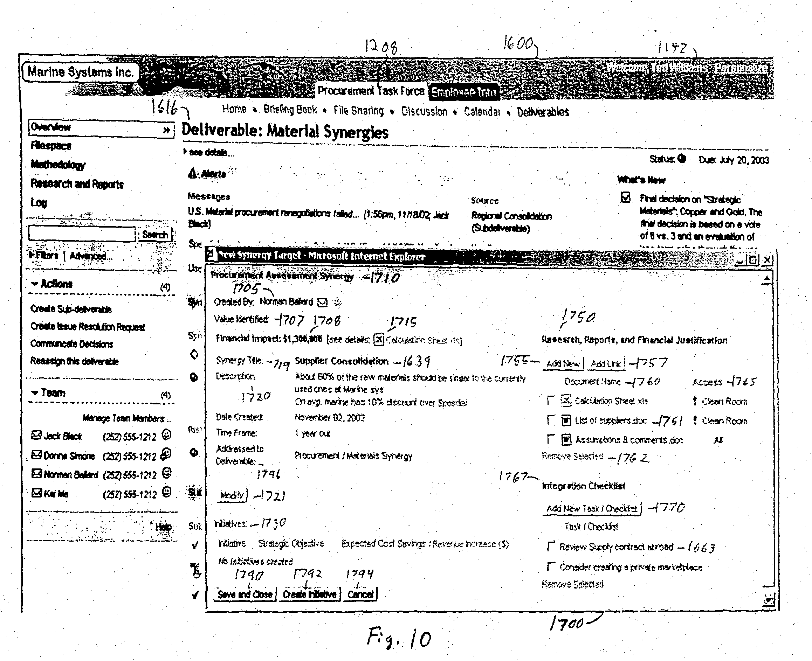

FIG. 9 shows an exemplary interface 1600 with a procurement task force tab 1208 that has a menu of views including a deliverables view 1615. The interface 1600 includes a variety of supply-related information and resources. A user 1142 views a synergies panel 1616 with an alerts section 1610, a synergy targets and risks section 1620, and a sub-deliverables section 1680. In the alert section 1610, the user 1142 can inspect procurement-related messages 1618, along with a message source 1619. For instance, a message 1618 can contain supplier contract notices 1617. The user 1142 can view a net impact 1632 of a synergy 1630 supporting an initiative 1636, such as supplier assessment, in a given time frame 1634. The user 1142 can also evaluate a risk level impact 1652 of a merger risk 1650, such as diminishing supply quality, from a plan 1654 generated by a stakeholder listed in column 1656.

The sub-deliverables section 1680 presents a group of sub-deliverables 1682 with corresponding deadlines 1684 and owners 1686. An exemplary sub-deliverable 1680 is a checklist of suppliers 1683, which can be sorted by materials. The interface 1600 facilitates supplier consolidation 1639 and supplier assessment 1637. The user 1142 can add other synergies 1630, risks 1620 and sub-deliverables 1680 to the panel 1616 via links 1638, 1689.

The interface 1600 presents a general status indicator 1613 and a due date 1614. Another panel 1640 shows recent news, emails 1643, checklists 1641, and objects 1642. Additionally, panel 1660 shows one or more personalized tasks, such as a supply contract review 1663.

Another panel 1601 in the interface 1600 presents a user 1142 with access to several other views, including a file space view 1603, a methodology view 1604, a view of research and reports 1605, and a view of a merger log 1606. The panel 1601 can include a link (not shown) to access human resource-related synergy tools. The panel 1601 can also have search capabilities 1607 and links to a number 1609 of actions 1608. Moreover, a user 1142 can use the presented contact information to contact a number 1612 of other procurement team members 1611.

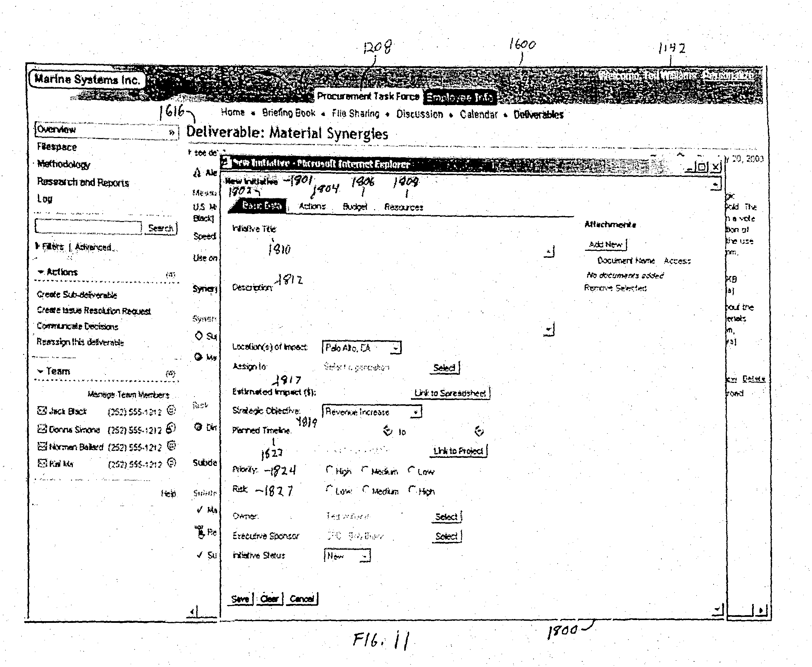

A user 1142 selects a synergy item 1630, such as supplier consolidation 1639, to access another interface 1700 in FIG. 10 of detailed procurement synergy information. FIG. 10 shows interface 1700 for a synergy category (e.g., procurement assessment) 1710 and synergy (e.g., supplier consolidation) 1639 created by a stakeholder 1705. The interface 1700 shows an identified value 1707 from a synergy 1710, such as a financial impact 1708 and any related attachments 1715. The identified value 1707 shows a particular synergy title 1719 and a description summary 1720. The user 1142 can modify the identified value 1707 via button 1721 and create merger-related initiatives 1730.

The interface 1700 also includes a list of objects 1750 that justifies the synergy 1710 with research, reports, and financial information. For example, the object list 1750 includes a list of suppliers 1761. The user 1142 adds an object or a link to the list 1750 via buttons 1755 and 1757, or even removes a listed item via link 1762. The list 1750 can identify a particular level of user access 1765 to an object. The access level 1765 can include a clean room level of access.

The user 1142 is allowed to properly checklist integration issues 1767. For example, a checklist issue 1767 can be a review of supply contracts 1663. The user 1142 can add tasks via button 1770 to ensure proper integration of the procurement synergy 1639. The user 1142 can also generate a new initiative via button 1792, cancel the synergy via button 1794, or save synergy information and close the interface 1700 via button 1790.

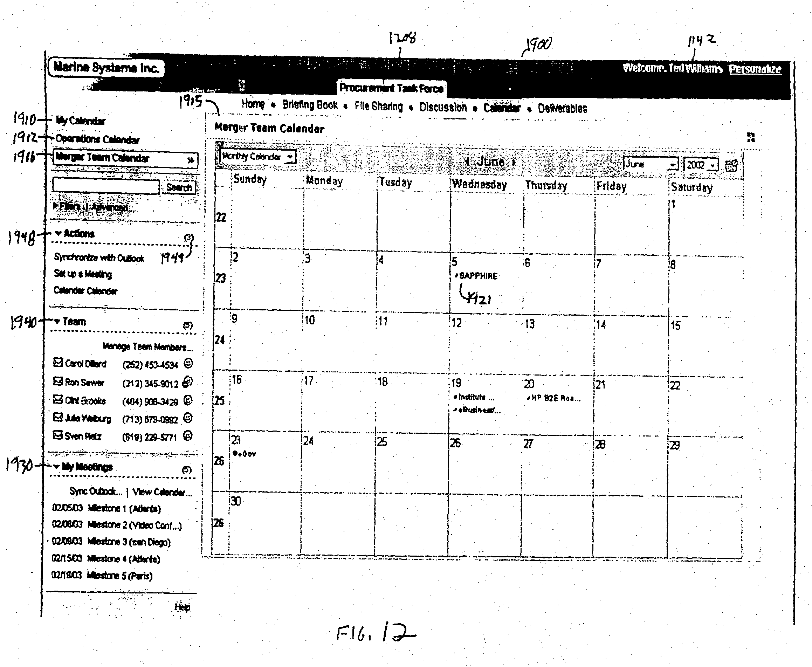

The user 1142 can generate a new initiative 1730 from the button 1792 in FIG. 10 or from the link 1651 in FIG. 9. The new initiative panel 1800 in FIG. 11 resembles the initiative panel 1500 in FIG. 8, but the panel 1800 allows a user to generate initiative information. In general, the panel 1800 allows a user 1142 to enter detailed initiative information. The panel 1800 presents tab menus of basic data 1802, actions 1804, budget 1806, and resources 1808. The user 1142 enters an initiative title 1810 and description 1812. The user 1142 can enter an estimated impact 1817, a strategic objective 1819, and a planned timeline 1822. Moreover, the user 1142 can enter a priority level 1824 and a risk level 1827.

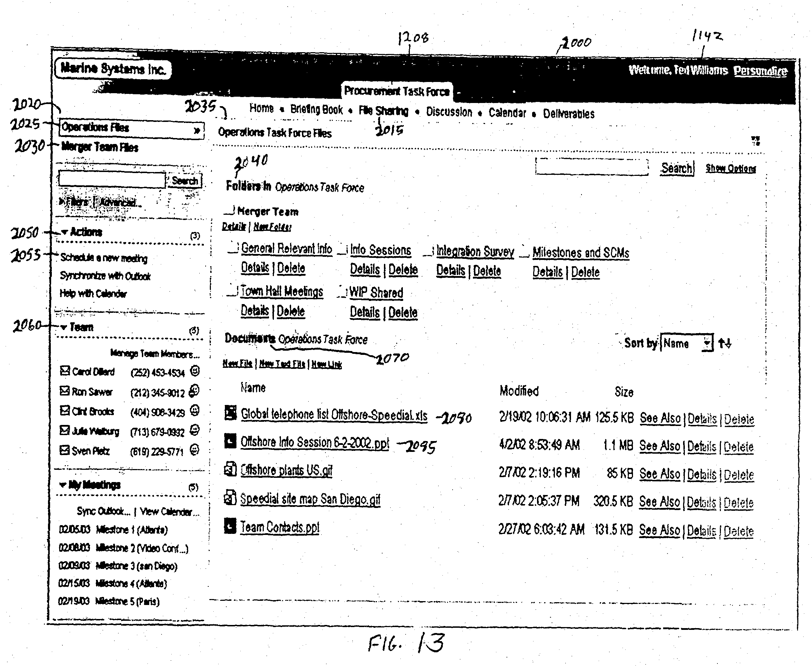

FIG. 12 shows an example of a calendar interface 1900 for the procurement task force 1940. The calendar interface 1900 can have an event 1921 that can be scheduled by a user 1142 or a member of a procurement task force 1940. The user 1142 can also collaborate with a calendar 1912 of another merger group. The user 1142 can access a personal calendar 1910 to incorporate all of the events from each calendar in which the user 1142 has access. The personal calendar (not shown) also can store and present personal user events and meetings 1930. Furthermore, the user 1142 can perform a number 1949 of actions 1948 in the calendar interface 1900.

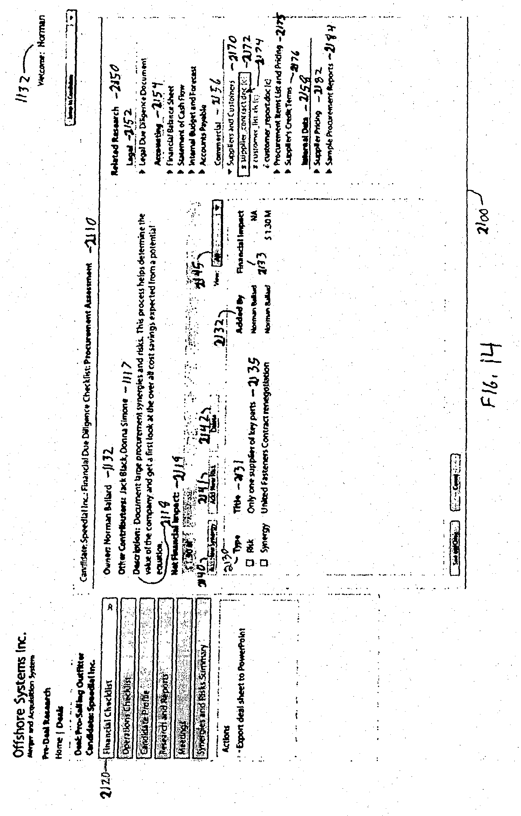

FIG. 13 illustrates an interface 2000 that allows stakeholders from various groups to collaborate and share information during the merger process 1100. In particular, FIG. 13 shows an interface 2000 for a stakeholder user 1142 in the procurement task force. The procurement task force tab 1208 presents the user 1142 with a menu of views, including a view 2015 for sharing objects with stakeholders in the procurement task force. The interface 2000 facilitates collaboration by presenting a view 2035 for the procurement task force stakeholders to share folders 2040 and documents 2070 with stakeholders in the operations task force.

Shared objects can be internal or external. Examples of these externally-generated objects include an Excel® spreadsheet 2080 or a PowerPoint® presentation 2085. The external objects 2080 and 2085 can be generated by software made by Microsoft Corporation.

The stakeholder user 1142 in the procurement task force also can share objects with stakeholders in a merger team 2030. Additionally, the stakeholder user 1142 can view and access other procurement task force team members 2060 and initiate merger actions 2050, such as scheduling a new meeting 2055.

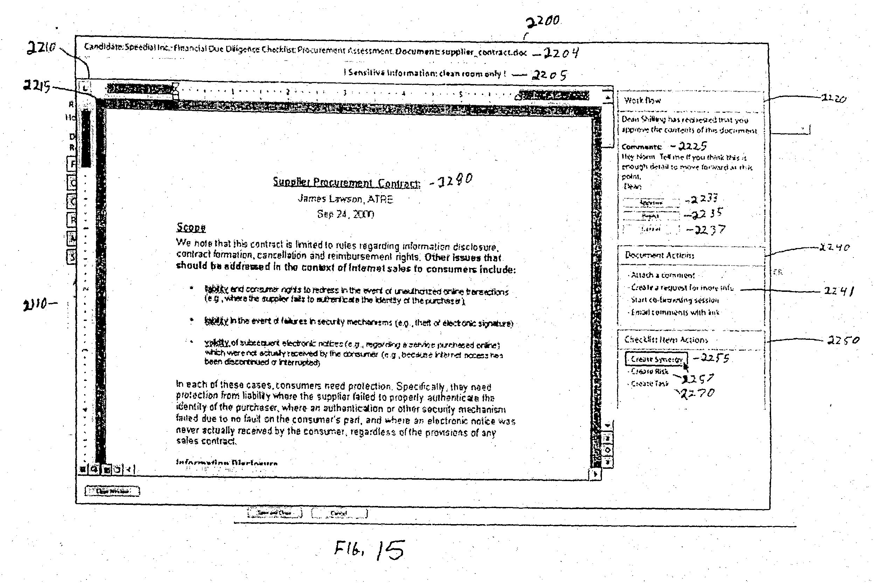

FIG. 14 shows an interface 2100 with a financial checklist 2120 and checklist item 2110. A user 1132 can add a synergy or a risk to the financial checklist 2120 via buttons 2140, 2141. A user 1132 can also delete an item from the checklist 2120 via button 2142. Along with detailed description 2118 of a checklist item 2110, the interface 2100 presents the name of an owner 1132 and other contributors 2117 for the item 2110.

The interface 2100 allows a user 1132 to view (via field 2145) all of the entered risks and synergies by type 2130, title 2131, owner 2132, and financial impact 2133. For instance, the user 1132 can assess a given supplier risk 2135.

The interface 2100 can also present related research 2150 with one or more lists of legal 2152, accounting 2154, commercial 2156, and internal data 2158. The research 2150 can include a variety of procurement information. Some examples of such research 2150 include information on suppliers and customers 2170, supplier contracts 2172, customer lists 2174, procurement items list and pricing 2175, and credit terms for one or more suppliers 2176. Other related research 2150 can include supplier pricing 2182 and sample procurement reports 2184.

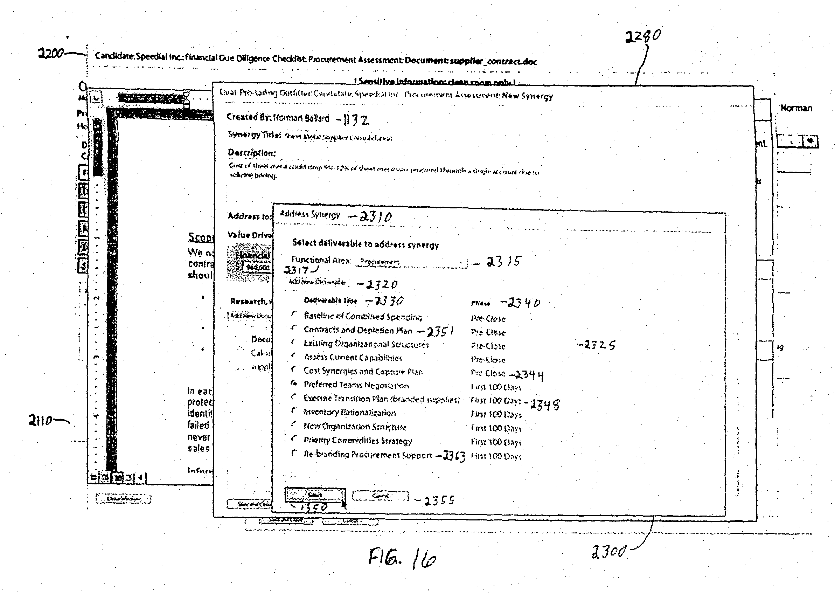

FIG. 15 presents an interface 2200 with a panel 2210 for an object (e.g., a document) 2215 in a merger checklist 2204. The interface 2200 is presented when a supplier contract document 2172 is selected from interface 2100 (FIG. 14). The supplier procurement contract 2200 can include information for various contract parameters, including legal parameters, financial guidelines, temporal guidelines, strategic goals, and contract objectives. The interface 2200 can identify that the procurement object 2215 includes sensitive information for a clean room participant 2205. The interface 2200 includes a panel 2220 to facilitate merger workflow between stakeholders. The panel 2220 allows a user to easily approve, reject, or cancel a request via buttons 2233, 2235, 2237. The panel 2220 can include comments 2225 from a stakeholder.

The interface 2200 can include a panel 2240 for one or more document actions, such as creating a request 2241. Furthermore, the interface 2200 can include a checklist item actions panel 2250 to allow a user to generate a synergy 2255, a risk 2257, or a task 2270.

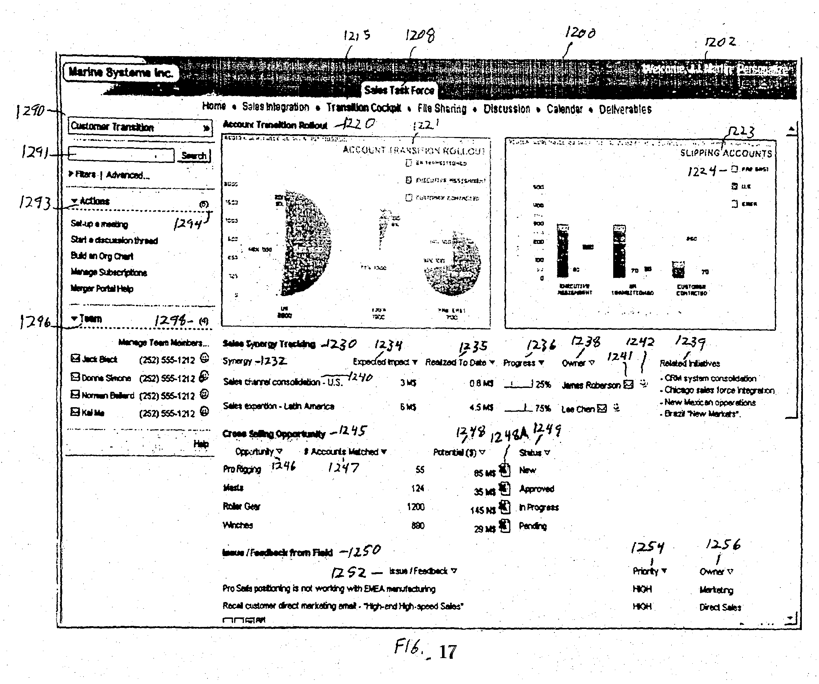

FIG. 16 presents a synergy interface 2300 for a procurement functional area 2315. A user can select the create synergy link 2255 in panel 2250 in FIG. 15 to access a new synergy interface 2280 in FIG. 16. If a user 1132 decides to address a deliverable to a synergy target 2310 in interface 2280 then the interface 2300 can be presented. The interface 2300 allows the user 1132 to select a functional area 2317 for the synergy via pulldown menu field 2315. The user 1132 adds a new deliverable to a list 2325 of deliverables via button 2320. Some examples of listed deliverables include a plan for contracts 2351 and a re-branding of procurement support 2363. The list 2325 can present a deliverable title 2330 and a merger phase 2340 for the deliverable, such as a pre-close phase 2344 or a phase 2348 in the first one hundred days of the merger. The interface 2300 allows the user 1132 to submit or cancel selected deliverables to address synergy 2310 via buttons 2350, 2355. Further features and benefits in relation to figures 1-16 can be derived from the following characterizations:

1. A method of facilitating an enterprise change comprising: treating two or more information systems as a single logical information system to execute pre-change due diligence and post-change integration of the enterprise change, the enterprise change comprising at least one of a merger and an acquisition; and providing a user interface to access the logical information system to manage supplier information and supplier resources. 2. The method of Aspect 1, further comprising: providing a procurement user interface to access the logical information system to manage procurement information and resources; and allowing the procurement user interface to present at least one of a synergies panel, a merger risk, a synergy target, and a sub-deliverable, the procurement user interface presenting an impact of a synergy and a risk level impact. 3. An article comprising a machine-readable medium storing instructions operable to cause one or more machines to perform operations comprising: identifying sources of supplier spending in a merger of at least two organizations, wherein the identifying sources of supplier spending comprises displaying sources of supplier spending in a user interface; identifying supplier resource spending for at least one of the organizations; and facilitating supplier consolidation of at least one of the organizations, wherein the facilitating comprises displaying a list of suppliers in the user interface; and creating an initiative based on the consolidation. 4. The article of Aspect 3, wherein creating the initiative comprises displaying a menu, wherein the menu comprises basic data, a plurality of actions, a budget, and one or more merger-related resources. 5. A system for planning a merger of at least two organizations, the system comprising a clean room object and a module to consolidate suppliers of at least one of the organizations, the system further comprising a list of consolidated items, the list comprising a lowest negotiated supplier price and a resulting post-merger cost savings. 6. The system of Aspect 5, wherein the system further comprises at least one of a list of consolidated items with volume information and a list of consolidated suppliers with volume information, at least one of the lists presenting a percent change in volume. 7. A system for planning a merger of at least two organizations, the system comprising a process adapted to allow one or more merger members to access procurement information, the process comprising a user interface adapted to allow a user to search for stakeholders, a deliverables view, and a financial impact of obtaining one or more goods from a supplier. 8. The system of Aspect 7, in which the process further comprises a planned timeline and a risk level, the process presenting merger financial information, the financial information comprising a budget and a return on investment, the deliverables view comprising one or more sub-deliverables, the system further comprising one or more procurement-related messages, the messages comprising supplier contract information. 9. A method comprising: facilitating consolidation of suppliers for an organization in a merger of at least two organizations; facilitating an assessment of supplier information of at least one of the organizations; and presenting a user interface adapted to facilitate the consolidation of the suppliers and facilitate the assessment of supplier information, the user interface comprising personalized tasks.

10. A system for planning a merger of at least two organizations comprises: a procurement synergy; a procurement initiative item related to the procurement synergy; and an attachment related to the item, the attachment being a supply-related clean-room object. 11. A system for implementing a merger of at least two organizations, wherein the system comprises: a first user interface adapted for a procurement stakeholder for a first organization; and a second user interface adapted for a procurement stakeholder for a second organization, the second user interface facilitating sharing of one or more procurement objects with the first user interface. 12. The computer system of Aspect 11, wherein at least one of the interfaces presents contact information for at least one procurement stakeholder of one of the organizations, the system further comprising a synergy item. 13. A system for planning a merger of at least two organizations, the system comprising information repositories, a clean room, and an interface adapted to present research information, the research information including one or more lists of legal, accounting, commercial, and internal data. 14. The system of Aspect 13, further comprising at least one of information on suppliers and customers, supplier contracts, customer lists, procurement item lists, credit terms for one or more supplier, supplier prices, and sample procurement reports. 15. The system of Aspect 13, further comprising a supplier contract document.

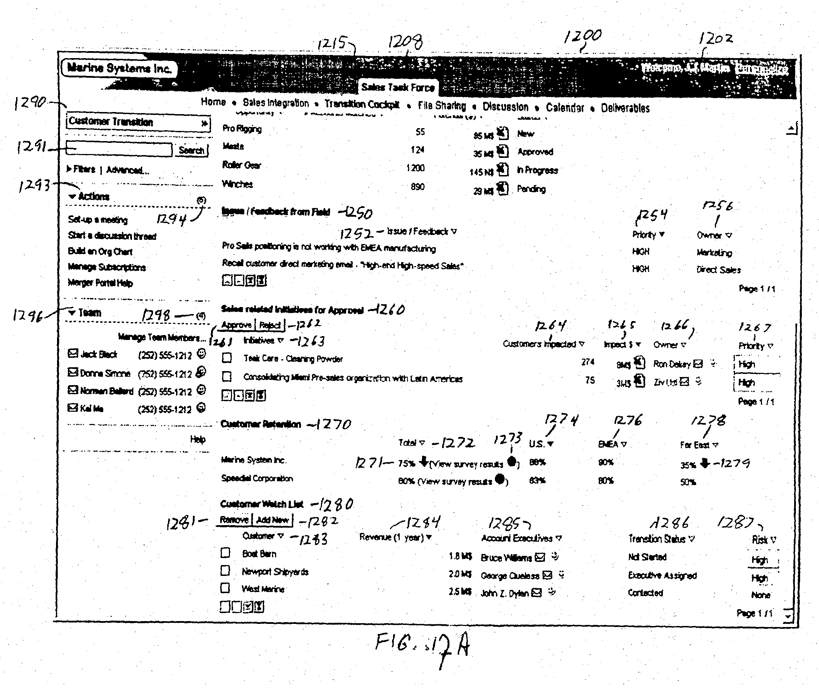

FIGS. 17-38 illustrate exemplary user interfaces generally relating to sales management as a result of restructuring, such as mergers & acquisitions (M&As), for one or more organizations.

In an aspect, there is disclosed a method including providing a single logical physically distributed information system across one or more information systems of at least two enterprises, wherein the enterprises are being combined, and providing a user interface to access the single logical physically distributed information system to execute one or more merger activities of the enterprises, the merger activities including a sales-related integration and a management of sales support activities, the sales support activities including addressing one or more customer issues for customer retention. In embodiments, the merger activities further can include customer-related communications, the user interface allowing a user to access the single logical physically distributed information system to execute at least one of pre-merger and post-merger activities, wherein the post-merger activities can include a post-merger assessment and a measurement of one or more achieved synergies. The user interface can be adapted to the role of the user and a phase of the merger, a security of the user interface is related to the role of the user, the role of the user including an executive of one or more sales-related accounts.

In another aspect, there is disclosed a method including providing a user interface adapted to manage one or more cross-selling opportunities for at least one organization involved in a merger with another organization, and allowing a user to edit one or more cross-selling opportunities presented in the user interface. In embodiments, the method can include providing information for at least one of the cross-selling opportunities in the user interface, the information including financial information, providing a notification template in the user interface, and providing a trigger date in the user interface.

In another aspect, there is disclosed a system for managing a merger of at least two organizations including a module and a graphical user interface adapted to assist retention of one or more customers of at least one of the organizations. In embodiments, the system further includes a first tool adapted to provide predefined templates for customer-related objects, wherein the customer-related objects can include customer documents and electronic mailings. The system can also include a second tool adapted to track one or more customer reactions to merger developments, the merger developments including merger-related news and merger-related announcements. The system can include a third tool adapted to assist in at least one of an assignment, a mapping, and a transfer of one or more customer accounts, the one or more customer accounts including sales-related accounts. The third tool can be adapted to facilitate a performance comparison of at least two customer-related personnel for at least one of the merger organizations, the two customer-related personnel including two account executives.

In another aspect, there is disclosed a method for managing a merger of at least two organizations including providing a module adapted to proactively identify and present on a user interface a sales counterpart in a first merger organization related to a member of a second merger organization. In embodiments, the method can include producing an electronic mailing, the production of the electronic mailing including importing lists of data, the lists including a customer list and a customer assignment list, consolidating the lists of data, the consolidating including syntactic mapping of one or more character fields, configuring an electronic mailing content, and screening the electronic mailing content, the content including one or more accounts. The method can include delivering the electronic mailing content to a sales-related merger member, and providing an exception workflow for undeliverable electronic mailings.

In another aspect, there is disclosed a system for planning a merger of at least two organizations, the system including an interface presenting financial information for one or more sales-related and customer-related initiatives of at least one organization, the financial information presented in a list or graph.

In another aspect, there is disclosed a system including sales-related interfaces for a merger of at least two organizations, user interface components adapted to interact with sales-related interfaces, and a layer of application logic services, the layer interacting with sales-related interfaces, and the application logic services relating to the merger.

Turning now to the figures, FIG. 17 shows an example of a tool interface 1200 for a stakeholder 1202 with access to a sales task force menu 1208. Other possible personalized views for stakeholders in the sales task force interface 1200 include views for sales integration, file sharing, discussions, deliverables, and a calendar. The view presented in interface 1200 is a transition cockpit view 1215. The view 1215 allows the stakeholder 1202 to access and manage sales-related transition tools for the merger, including an account transition rollout 1220 and sales synergy tracking 1230. The account transition rollout 1220 presents graphs 1221 and charts 1223 of accounting information, including regional or divisional account information 1224 and accounts 1223 that are slipping from schedule.

Interface 1200 further presents a panel 1245 to allow a user 1202 to view and analyze one or more user-identified cross selling opportunities. One or more stakeholders can identify one or more cross-selling opportunities 1246 and the disclosed software can expedite and help ensure the rollout and monitoring of the execution of the opportunity. The panel 1245 can present one or more opportunities 1246 and a number of accounts matched 1247 for each opportunity. A status 1249 and a potential value 1248 of each opportunity can be evaluated and presented in a linked object 1248A.

The linked object 1248A can be an external software object, such as an Excel® spreadsheet by Microsoft Corporation.

FIG. 17 and FIG. 17A present an exemplary panel 1250 for issues or feedback 1252 from customers or other merger stakeholders. The feedback 1252 can arrive from stakeholders who sell or market products or services to customers and can include a corresponding priority level 1254. The feedback 1252 can provide the merger organizations with valuable information on marketing, selling, and advertising products and services. The feedback 1252 can also allow a merger organization to identify strengths and weaknesses in organizational products, services, strategy, personnel, and goals during the merger process. Moreover, the feedback 1252 can allow merger organizations to track customer reactions to merger developments and announcements.

FIG. 17A further presents a panel 1260 for sales-related initiatives for approval from a stakeholder. The panel 1260 presents buttons for approval 1261 and rejection 1262. The panel 1260 can present a checklist of initiatives 1263 with a number of impacted customers 1264, a financial impact 1265, an owner 1266 and a priority level 1267 for each initiative 1263. Sometimes, a merger organization can desire to assure customers that organizational changes will enhance customer service and customer relationships. Additionally, merger organizations can want to prevent rival organizations from securing customer accounts. The interface 1200 presents a panel 1270 for each merger organization with a measure of customer retention 1272. The panel 1270 presents one or more retention rates 1271 for a division or region 1274, 1276, 1278. Alternatively, the interface can present customer satisfaction rates 1271, including customer surveys 1273. The customer survey 1273 can be presented in an external object. Moreover, the panel 1270 can indicate if there has been any movement (via an arrow) 1279 of the rates 1271 (e.g., increasing or decreasing rates 1271).

Furthermore, the interface 1200 can have a panel 1290 with a text box 1291 to allow the user 1202 to search for items or people, as well as to perform a number 1294 of other actions 1293. The user 1202 can also contact a number 1298 of merger team members 1296.

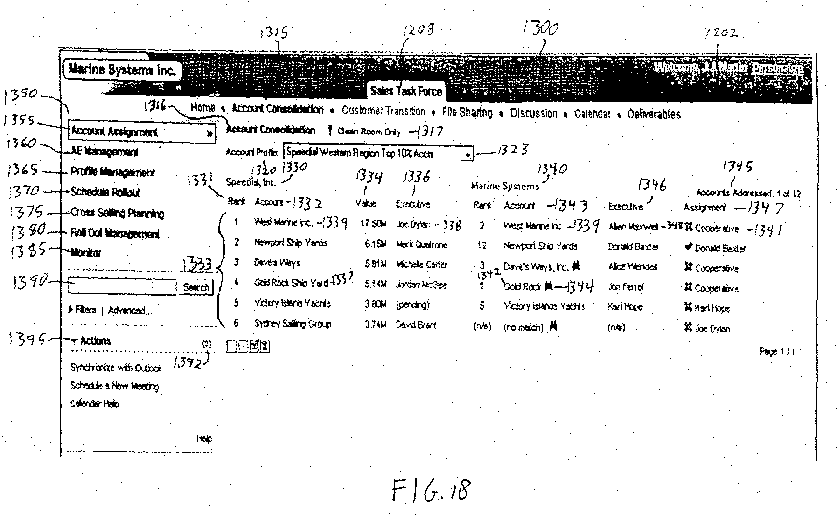

FIG. 18 presents an exemplary interface 1300 to allow a user 1202 to consolidate customer accounts 1315 from the sales task force menu 1208. The interface 1300 can present an account profile 1320 of a merger organization 1330 and sort a list 1333 of customer accounts 1332 based on one or more predefined parameters in a pull down menu 1323. The interface can help identify and match similar accounts 1332, 1343 from at least two merger organizations 1330, 1340. The interface 1300 presents a value 334 of each account 1332 for a number 1345 of accounts, and sort accounts 1332 by account values 1334.

Customer service personnel 1336, 1346 from each merger organization 1330, 1343 are presented, and an assignment 1347 made for the person responsible for the account. For instance, Joe Dylan 1338 from Speedial, Inc. 1330 and Allen Maxwell 1348 from Marine Systems 1340 have a cooperative assignment 1341 for a West Marine Inc. account 1339.

Alternatively, either executive 1336, 1346 from the merger organizations 1330, 1340 individually are assigned to be responsible for a customer account 1332. When the customer names 1337, 1342 do not completely match, the interface 1300 allows the user 1202 to manually select a customer from a list for exception listing. The user 1202 selects a link (e.g., icon 1344) to access the customer list.

The interface 1300 also presents a panel 1350 allowing a user 1202 to access one or more links to merger-related views, including an account assignment view 1355, an account executive (AE) management view 1360, and a profile management view 1365. Other linked views include a schedule rollout view 1370, a cross selling planning view 1375, a rollout management view 1380, and a view 1385 for monitoring the merger process. The panel 1350 allows a user to perform a search 1390, and perform a number 1392 of other merger-related actions 1395.

The panel 1300 also includes a tool to model a "clean room" environment 1317 during the merger process. The clean room concept during a merger typically involves members of the involved organizations physically meeting in a room and exchanging information and objects. Only the members of a clean room environment can view and examine confidential and privileged information of other merger organizations. If the merger deal is unsuccessful and fails, then the clean room members often leave their organization for reasons of conflicts of interest, or are transferred to other parts of their organization where they will not be interacting with the other merger organizations.

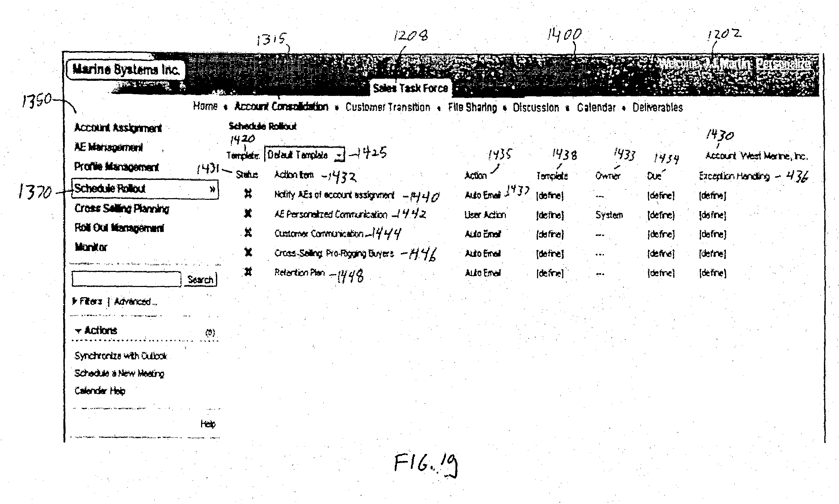

FIG. 19 presents an interface 1400 that allows a user 1202 to consolidate accounts 1315 in the sales task force menu 1208. The user 1202 selects to view a schedule rollout view via link 1370. The user 1202 also views a schedule rollout template 1420 from a template format in a pull down menu 1425. The user 1202 examines a status 1431 of an action item 1432. A status indicator 1431A (e.g., an "X" indicator) signifies that the action has not been completed. The user 1202 also performs an action 1435, such as automatically sending an email 1437 and defining a template 1438. Additionally, an owner 1433 and a due date 1434 of the action item 1432 can be presented. The interface 1400 also facilitates exception handling 1436 for the action items 1432. Some exemplary action items 1432 include notifying an account executive (AE) of an assignment 1440, facilitating AE personalized communication 1442, and conducting customer communication 1444. Other exemplary action items 1432 involve a cross-selling opportunity 1446 and a retention plan 1448.

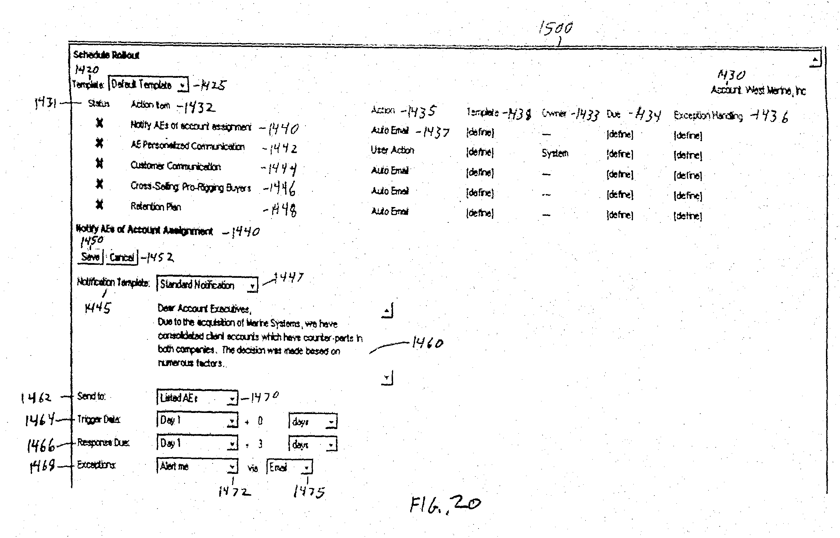

FIG. 20 presents an interface 1500 in which the user 1200 can select to notify an AE of an account assignment 1440. A notification template 1445 and a template format in a pull down window 1447 are presented. A message can be entered in a text box field 1460. The user 1202 can then send the assignment notification 1440 to one or more stakeholders shown in a pull down menu 1470. The notification 1440 includes a trigger date 1464 and a response date 1466. The interface 1500 also facilitates exceptions 1468 to the notification 1440, such as sending an alert email 1472, 1475.

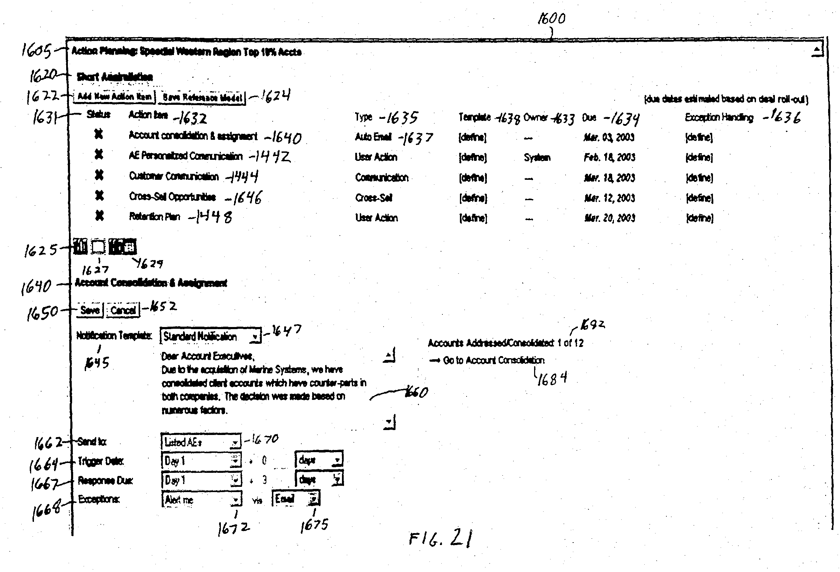

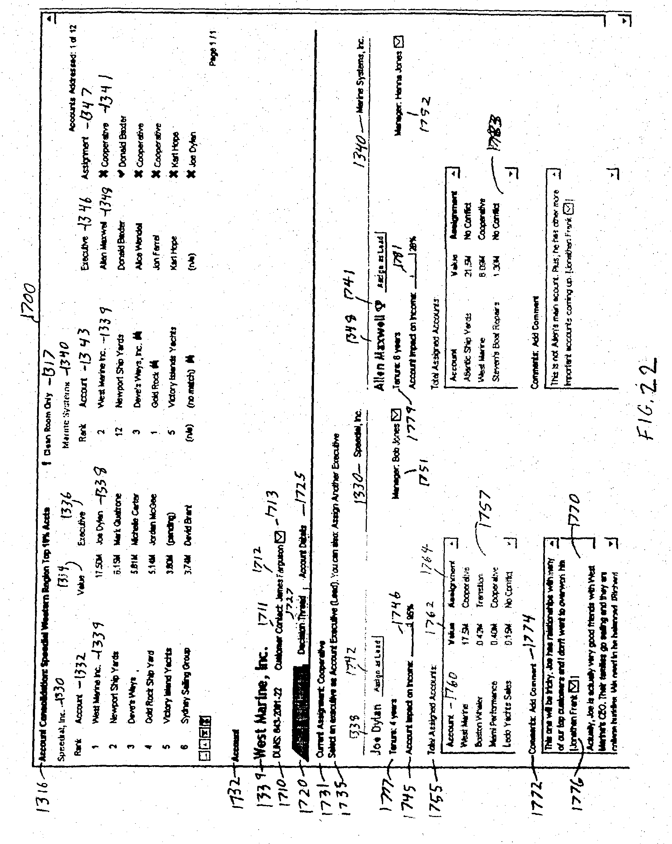

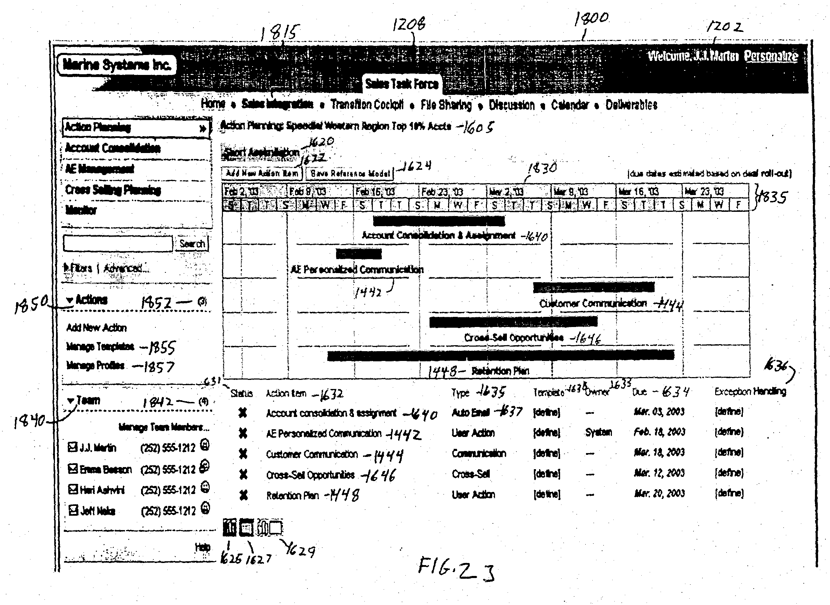

FIG. 21 presents an interface 1600 that facilitate action planning 1605 for one or more accounts. The interface 1600 includes a panel 1620 for an assimilation of action items 1632. The panel 1620 presents a status 1631 and an action type 1635 for each action item 1632 including, an action type 1635 for automatically sending an email 1637. The panel 1620 can also include a template 1638, an owner 1633, a deadline 1634, and an exception handler 1636. Some exemplary action items 1632 can include account consolidation and assignment 1640, AE personalized communication 1442, and customer communication 1444. Other action items 1632 includes cross selling opportunities 1646 and a retention plan 1448. The panel 1620 presents a graph 1625 of action items 1632, a list 1627 of action items 1632 or both a graph and a list of action items 1629.

FIG. 21 additionally presents a panel 1640 for account consolidation and assignment. The panel 1640 presents a notification template 1645 and a template format in a pull down window 1647. A message or description can be entered in a text box field 1660. Account notification can be sent to one or more stakeholders listed in a pull down menu 1670. The notification can include a trigger date 1664 and a response date 1667. The interface 1600 facilitates exceptions 1668, such as sending an alert email 1672, 1675. Furthermore, the interface 1600 presents a number 1682 of consolidated or addressed accounts, and presents a link 1684 to an account consolidation view.

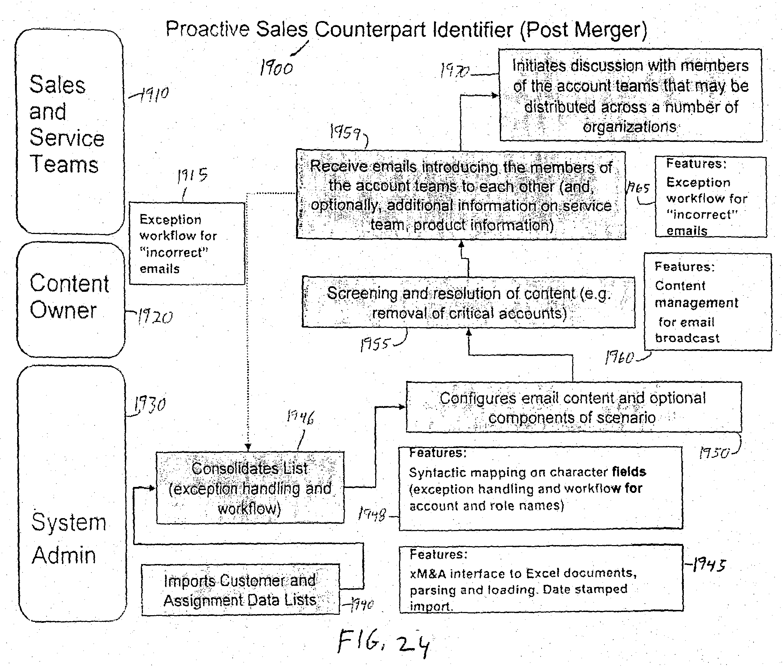

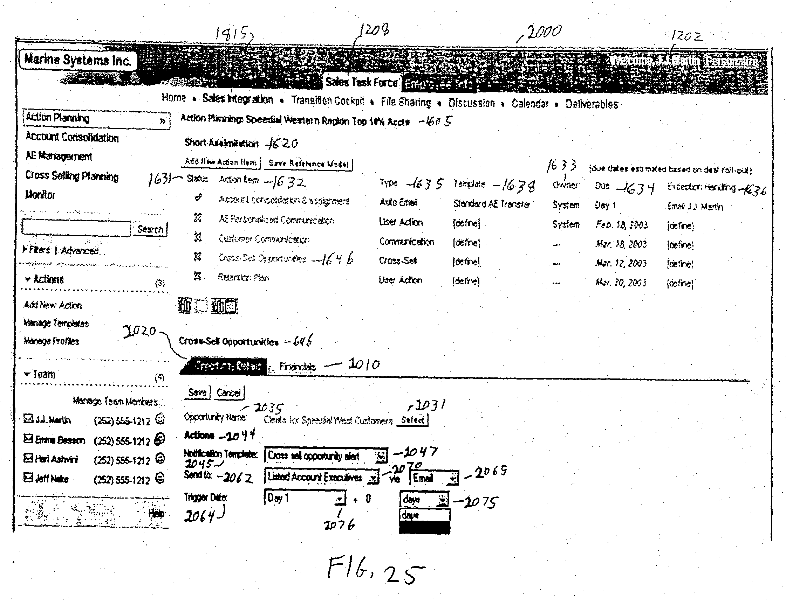

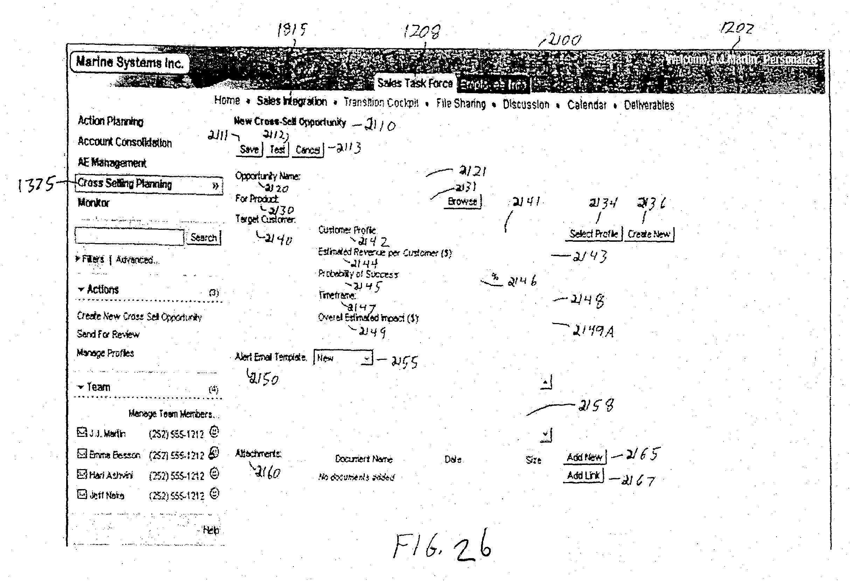

An account consolidation interface 1700 in FIG. 22 can be presented from the link 1684 in interface 1600 or from selecting an account 1332 in the account list 1333 in FIG. 17. Panel 1316 in interface 1700 presents similar account consolidation information as shown in the account list 1333. The user 1202 selects an account title 1339 to present additional account detail 1339 in another account panel 1732.

The panel 1732 shows the account 1339, an account identification number 1710, a customer contact name 1712, and an email link 1713 for the customer contact 1711. The account panel 1732 shows a tabbed menu for account assignments 1720, decision threads 1727, and other account details 1725. The decision thread 1727 presents a log of a collaborative decision process in which merger managers can exchange ideas and communications. The tab 1720 selected and presented in the interface 1700 is the account assignment tab 1720.

The interface 1700 presents a current assignment type 1731 and allows the user 1202 to select a lead person 1735 for the account 1339. The interface 1700 allows the user 1202 to examine and comparatively inspect account information for at least two of the merger organizations 1330, 1340. The interface 1700 shows one or more details for executives 1338, 1348 of the account 1339 for one or more merger organizations 1330, 1340. For example, interface 1700 can show a manager 1751, 1752 and a length of tenure 1777, 1779 for each account executive 1338, 1348. The interface 1700 can help identify if an account executive 1348 has a notable achievement 1741. A measurement 1746, 1781 for an impact the account 1339 has on income 1745 for each organization 1330, 1340.

System 10 allows the user 1202 to reduce a risk of having redundant personnel working on the same customer accounts. In addition to possibly consolidating customer accounts, system 10 allows a number of customer support personnel to be consolidated. Moreover, the system 10 allows user 1202 to determine and select the most capable personnel to manage certain customer accounts. For example, the user 1202 can choose to assign 1731, 1735 the account executive 1348 with the notable achievement 1741 to handle the account 1339. The presented information for account executive 1338, 1348 can also include a combination of sales, finance, and human resource information.

Furthermore, interface 1700 presents a list 1757, 1783 of total assigned accounts 1755 for each account executive 1338, 1348. Each list 1757, 1783 shows customer accounts 1760 with account values 1762 and assignment information 1764. Moreover, interface 1700 shows a comment 1772 text box 1770 for a user 1202 to add comments 1774. The text box 1770 can have a link 1776 for discussed contacts.

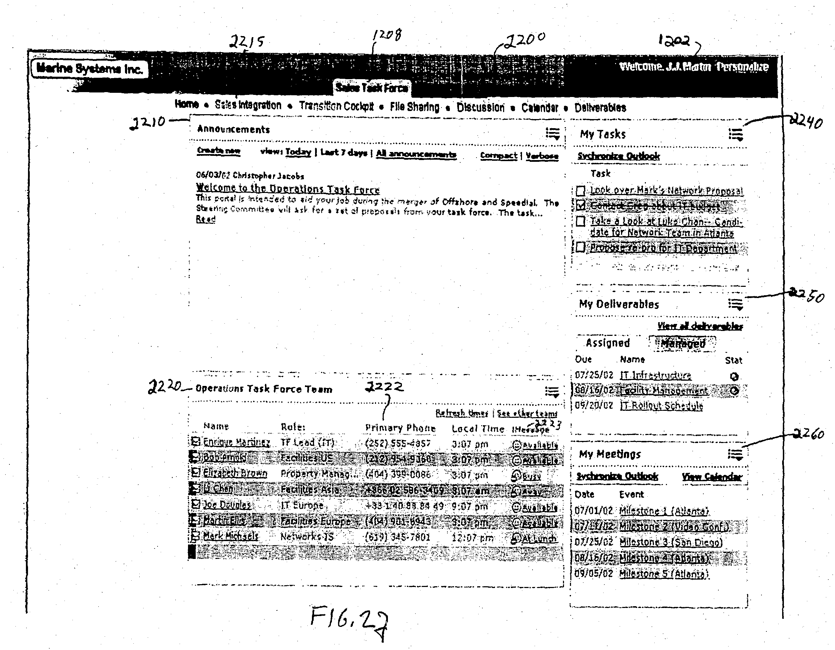

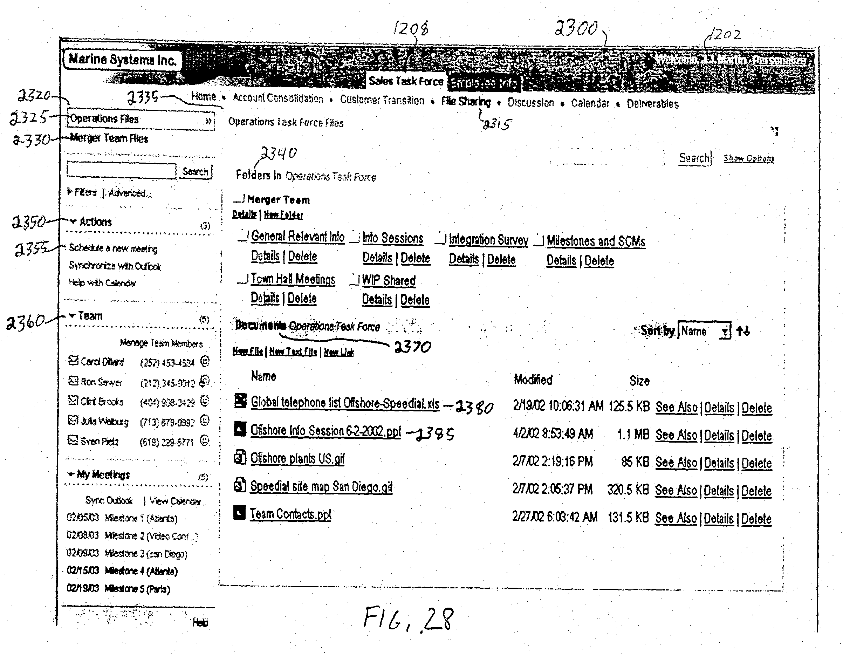

FIG. 23 presents an interface 1800 for a stakeholder user 1202 for sales integration 1815 in the sales task force menu 1208. The interface 1800 facilitates action planning 1605 for one or more accounts, as shown in interface 1600. The interface 1800 presents a Gantt chart 1830 of the assimilation actions 1632. The Gantt chart 1830 presents a time period 1835 for each action 1632. The stakeholder 1202 inspects the status 1631 of the action items 1632 to ensure customer satisfaction. The stakeholder 1202 can also contact a number 1842 of other sales task force members 1840, and access a number 1852 of actions 1850, such as managing templates 1855 and profiles 1857.

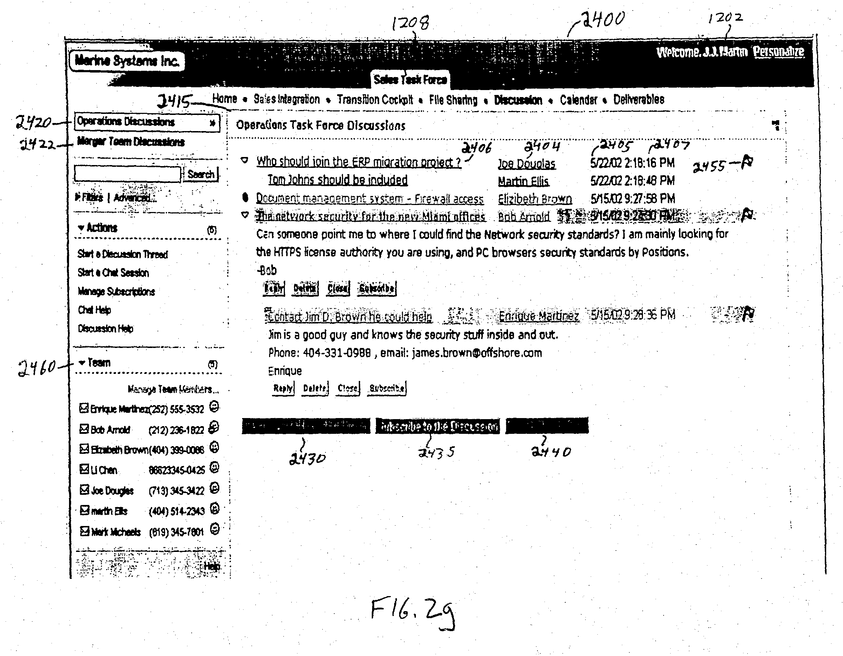

FIG. 24 shows a block diagram of the proactive sales counterpart identifier 1900. A system administration 1930 of one of the merger organizations imports customer and assignment data lists at 1940 and consolidates the list at 1946. Then electronic document (e.g., email) content and optional components of the scenario are configured at 1950. The system administration 1930 can have an object interface 1945 for importing the data, and syntactic mapping on character fields 1948 for configuring and consolidating the data. The owner 1920 of the content can screen the electronic documents at 1955 with a content management tool 1960. The content screening at 1955 can involve removing one or more accounts. The sales and service teams 1910 can receive electronic documents that introduce the account team members of the merger organizations at 1959, and initiate a discussion between the account team members of those merger organizations at 1970. Any incorrect emails 1915 (e.g., exception workflow) can be sent in block 1965 to the system administration 1930 for further consolidation 1946.

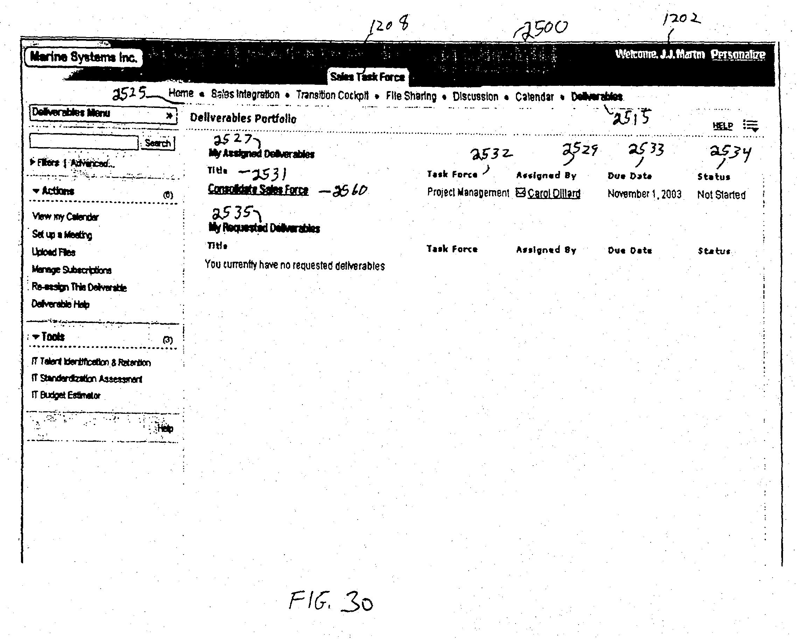

FIG. 25 presents an interface 2000 that facilitates action planning 1605 for one or more accounts. In particular, the interface 2000 includes the action planning items 1632 shown in interface 1600. The interface 2000 includes an action panel to track, manage, and edit cross-selling opportunities 1646. The interface 2000 has a tab 2020 for details of the opportunity 1646, and a tab 2010 with related financial information 2010. The user 1202 can select, generate, and edit an opportunity name 2035 via button 2031. The user 1202 can access a pull down menu 2047 of notification template 2045 to send an email 2062 to a stakeholder via pull down menus 2070, 2065. The action 2044 has an automatic trigger date 2064 to send the email 2065 via pull down menus 2075, 2076.

FIG. 26 presents an interface 2100 with a panel for the user 1202 to generate a new cross-selling opportunity 2110. The user 1202 can select the cross-selling planning link 1375 to access the interface 2100. The interface 2100 allows the user 1202 to enter an opportunity name 2120 for a targeted product 2130 via text boxes 2121, 2131. Moreover, the interface 2100 allows the user 1202 to select, edit, or generate a new customer profile 2142 for a target customer 2140 via buttons 2134, 2136 and text box 2141.

Text boxes 2143, 2146, 2148, 2149A in the interface 2100 can allow the user 1202 to enter financial information, such as an estimated revenue per customer 2144, a probability of success 2145, a timeframe 2147, and an overall estimated impact 2149. In addition to a text box 2158, the user 1202 can also access a pull down menu 2155 of alert email templates 2150. Furthermore, the user 1202 can add a new attachment 2160 or an attachment link via buttons 2165, 2167. The user 1202 can save, test, or cancel the cross-selling opportunity 2110 generated in the interface 2100 via buttons 2111, 2112, 2113.

FIG. 27 illustrates an exemplary home page interface 2200 for a stakeholder 1202 in the sales task force 1208. The interface 2200 can be personalized 2202 for the stakeholder 1202 and greet the stakeholder 1202 with an announcement panel 2210. The stakeholder 1202 can view an operations task force team panel 2220, along with contact information 2222 and instant message availability 2223 of team members. The interface 2200 has a feature or utility 2223 that allows a stakeholder to send a private, real-time message to stakeholders on the system. The interface 2200 can have personalized panels for tasks 2240, deliverables 2250, and meetings 2260 and events.

FIG. 28 illustrates an interface 2300 that allows stakeholders from various groups to collaborate and share information during the merger. In particular, interface 2300 is shown for stakeholder 1202 in the sales task force. The sales task force tab 1208 presents the stakeholder 1202 with a menu of views, including a view 2315 for sharing objects with stakeholders in the sales task force. The interface 2300 facilitates collaboration by presenting a view 2335 for the sales task force stakeholders to share folders 2340 and documents 2370 with stakeholders in the operations task force. Some of the shared documents can be external objects 2380, 2385.

The stakeholder 1202 in the sales task force also shares objects with stakeholders in a merger team 2330. Additionally, the stakeholder 1202 views and access other sales task force team members 2360 and initiate merger actions 2350, such as scheduling a new meeting 2355.

FIG. 29 illustrates an exemplary interface 2400 with a panel 2415 for group discussions. The interface user 1202 can access a merger issue 2406 posted by a member 2404 of a team 2460. The interface 2400 shows the time 2407 and date 2405 of the posting of the issue 2406. A flag or follow-up indicator 2455 signifies that the issue 2406 should be resolved quickly. The team member 1202 can begin a new discussion 2430, subscribe to a discussion 2435, or delete a discussion 2440 from the panel 2415.

The interface 2400 also provides collaborative discussions between members of different merger groups. For example, the user interface 2400 can be accessed by members from a merger team 2422, in addition to members of the operations task force 2420.

FIG. 30 presents an exemplary interface 2500 with a panel 2525 for sales task force deliverables 2515. The interface 2500 presents the user 1202 with a personalized section 2527 for assigned deliverables and a personalized section 2535 for requested deliverables. Each section 2527, 2535 has a deliverable title 2531, a related task force 2532, a stakeholder assignor 2529, a deadline 2533, and a status 1534. An exemplary deliverable 2560 is a consolidation of the sales force.

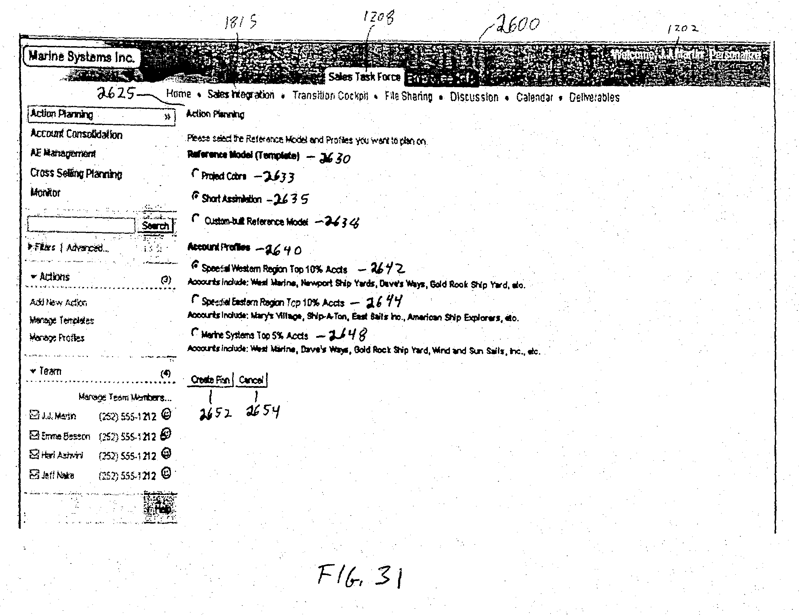

FIG. 31 presents an interface 2600 for stakeholder user 1202 for sales integration 1815 in the sales task force menu 1208. The interface 2600 facilitates action planning 2625 for the sales task force. The user 1202 can select a reference model template 2630 and a pre-defined account profile 2640 for planning. Some exemplary reference model templates 2630 includes a project 2633, an assimilation 2635, and a custom-built reference model 2638. Some exemplary account profiles 2642, 2644, 2648 can also be presented by the interface 2600. This interface 2600 allows the user 1202 to create an action plan via button 1652 or to cancel a selected plan via button 2654.

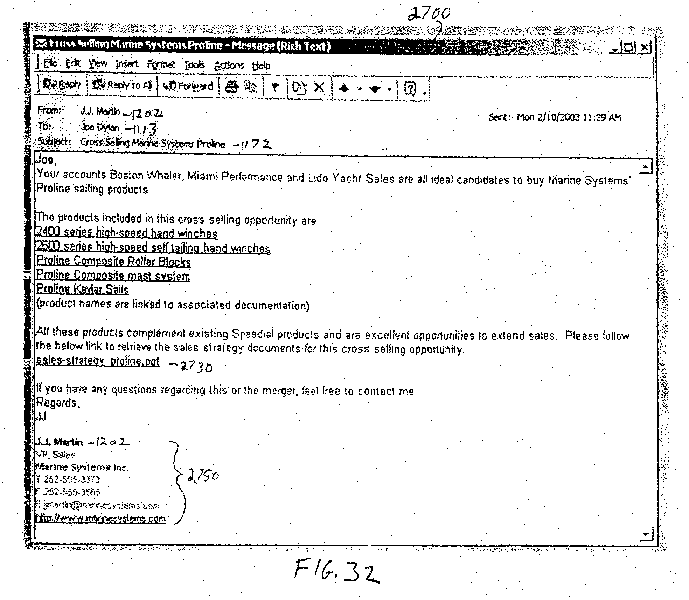

FIG. 32 presents an email 2700 related to a cross-selling opportunity 1172 that can be generated by a sales team leader 1202. The email 2700 can be personalized with predefined information 2750 and sent to the account executive 1113. The email 2700 can be role specific with predetermined content, and be automatically sent to all members servicing a specific account. The email 2700 can include sales-related links 2730 and attachments.

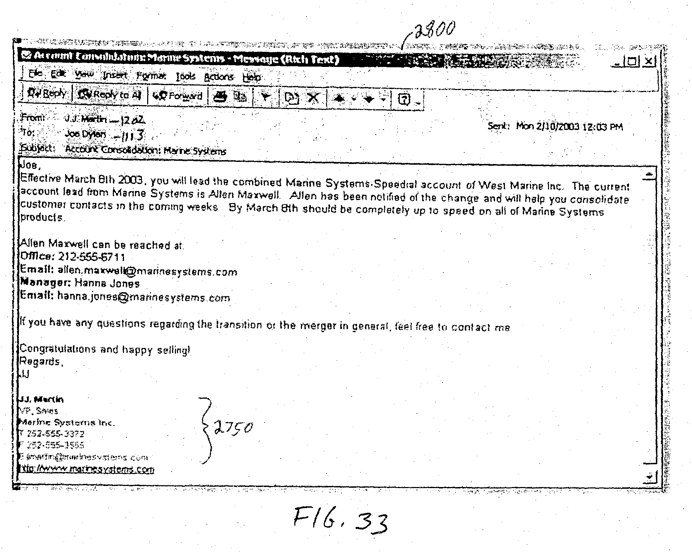

FIG. 33 shows that an email 2800 is generated to notify the account executive 1113 of account consolidation information.

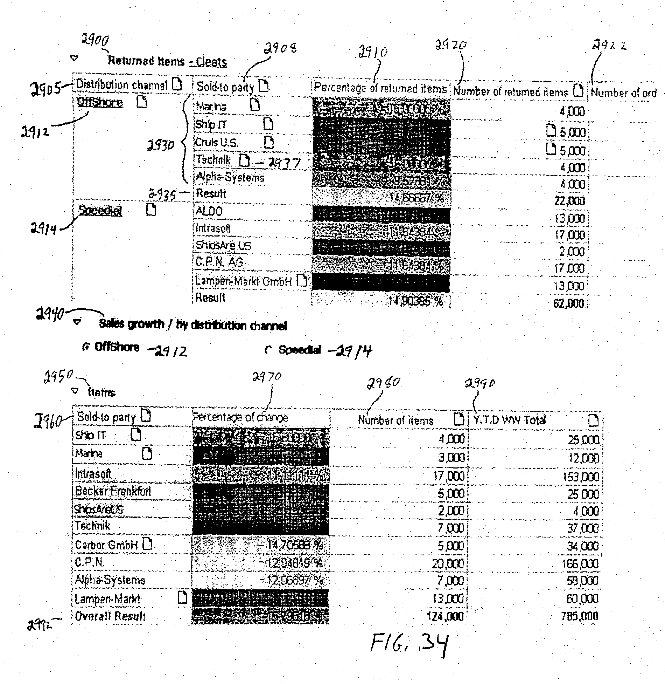

FIG. 34 presents several exemplary panels 2900, 2940, 2950 with sales-related information. Panel 2900 presents a list 2930 of customers for each merger organization 2912, 2914. The panel 2900 can show the list 2930 and a result 2935 based on a distribution channel 2905 and customers 2908. Additionally, a percentage of returned items 2910, a number of returned items 2920, and a number of orders 2922 are presented to the user 1202. One or more linked objects 1937 can also be presented.

Panel 2940 designates sales growth information for one of the merger organizations 2912, 2914 to be shown in panel 2950. The designated panel 2950 shows sales items sold to a customer 2960. The designated panel 2950 also shows a percentage of change 2970, a number of items 2980, a year-to-date world-wide total 2990, and an overall result 2992.

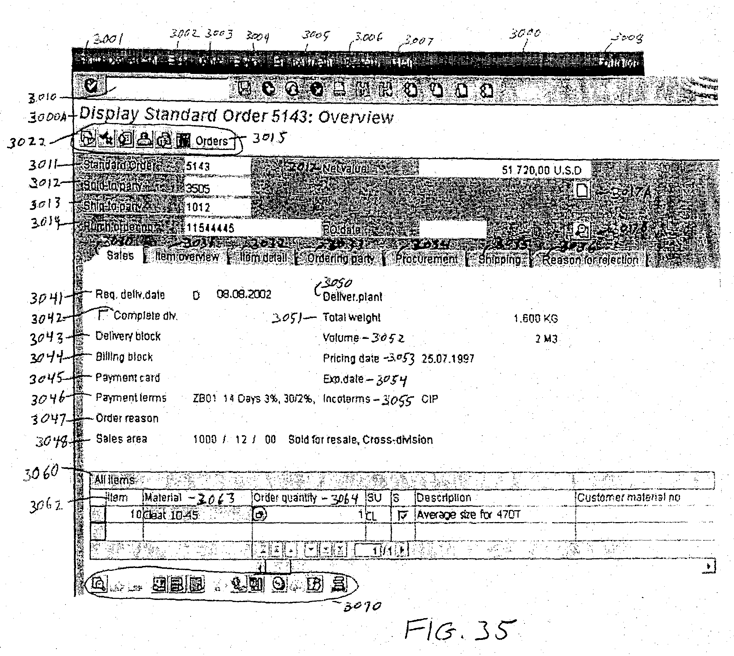

FIG. 35 shows an illustrative interface 3000 for a stakeholder, such as a customer sales representative, to inspect and manage a customer order 3000A. The interface 3000 has a menu to present a sales document 3001, to edit the interface via selector 3002, or to find a particular aspect of sales information via selector 3003. The menu can also have selectors 3004, 3008, 3005, 3006, 3007 for extra features, functions, environmental and system variables, and help resources. The interface 3000 can also have a text box 3010 for searches, and a toolbar 3022 of icon buttons to perform a variety of sales-related functions, such as accessing a table of orders via button 3015.

The interface 3000 allows the stakeholder user 1202 to generate and edit a text or number description for an order 3011, a customer 3012, a shipment target 3013, a purchase order 3014, and a net value 3017. The stakeholder user 1202 views a sales-related document via link 3017A or search for a document via link 3017B.

The interface 3000 has tabbed panels for the order 3000A. Such panels include a sales panel 3030, an item overview panel 3031, an item detail panel 3032, and an ordering party panel 3033. Other panels include panels for procurement 3034, shipping 3035, and sales-related rejections 3036. The sales panel 3030 is shown in interface 3000.

The sales panel 3030 allows a user 1202 to edit a variety of sales items for the order 3000A, such as a requested delivery date 3041, a delivery location 3050, and a shipment weight 3051 and volume 3052. The term "delivery" used in this panel 3030 refers to the goals, targets or process involved in sending a product or service to a customer. The user 1202 can signify that the delivery has been completed at 3042, and edit a name or number for a delivery block 3043 and billing block 3044. A pricing date 3053 can be edited, and a payment card (e.g., credit card) number 3045 and a payment card expiration date 3054 can also be edited by the user 1202. Moreover, the user 1202 can enter payment terms 3046 or credit terms 3055 in the interface, as well as a reason 3047 for the order 3000A and a sales area number 3048.

The sales panel 3030 can have a section 3060 listing all ordered items. The list can show an item 3062, a product material 3063, and an order quantity 3064. Furthermore, the panel 3030 can have a toolbar 3090 to perform a variety of graphical interface functions.

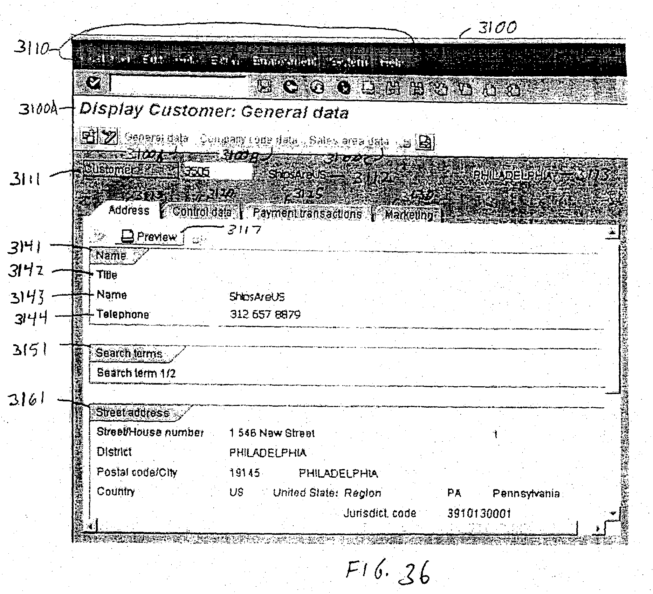

FIG. 36 presents an exemplary interface 3100 to allow user 1202 to generate and edit general data 3100A for a customer. The interface 3100 has a menu 3110 of features and options to manipulate the interface 3100 or to edit and locate customer-related information. The interface 3100 has links to present another interface for company code data 3100B and data 3100C for a sales area. The interface 3100 can also show a customer name 3112, a customer number 3111, and a customer location 3113.

The interface 3100 can include tabbed panels that allow a user to generate and edit customer-related information, such as a customer address 3115 and control data 3120. The interface 3100 also includes a tabbed panel for payment transactions 3125 and a panel for marketing 3130.

The address panel 3115 includes a name panel 3141 to allow a user to generate and edit a title 3142, a name 3143, and a telephone number 3144 for the customer 3112. The address panel 3115 also allows the user to conduct a search 3151 and to edit a street address 3161.

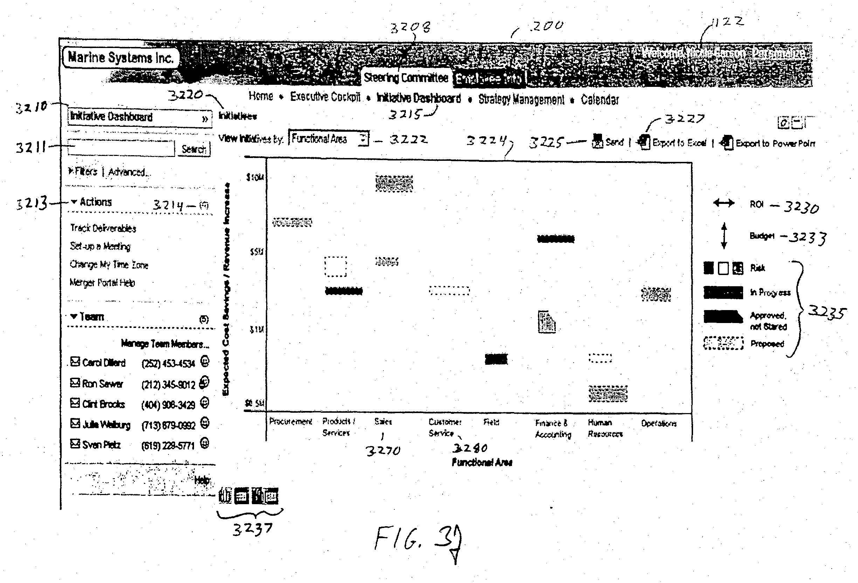

FIG. 37 illustrates an interface 3200 for an initiative dashboard 3215 in a steering committee menu 3208. The initiative panel 3220 allows user 1202 to view a graph 3224 of initiatives. A selector 3222 shows an initiative graph 3224 by functional area, cost savings, revenue increase, or other initiative options. The panel 3220 shows a graph legend 3235 with different types and statuses of merger information. The graph 3224 can also present merger financial information for a functional area, such as a return on investment 3230 or a budget 2233.

A user 1122 can send the initiative information, such as graph 3224, to other stakeholders via icon 3225 or transfer the information to an external software object, such as an Excel spreadsheet 3227 by Microsoft Corporation.

The interface 3200 allows a user to access a graph 3224, a list, or a graph and a list of initiative information via icons 3237. Furthermore, the interface 3200 has a panel 3210 with a text box 3211 to allow the user 1122 to search for items or people, as well as to perform a number 3214 of other actions 3213.

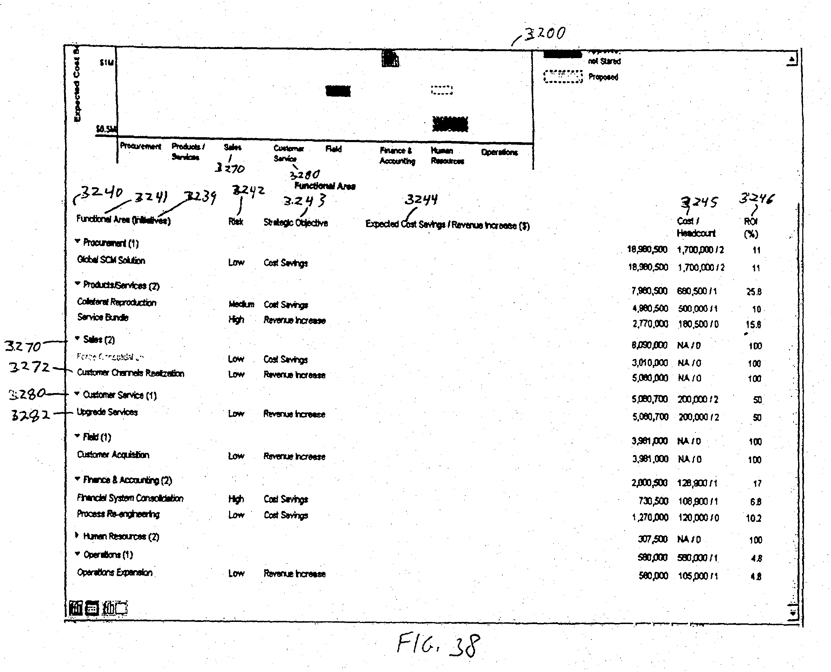

The interface 3200 includes a panel 3240 (FIG. 38) that presents information from the initiative graph 3224 in a list or table format. The panel 3240 presents a functional area 3241 for a number 3239 of initiatives. An initiative risk level 3242, a strategic objective 3243, and an expected cost savings 3244 can also be presented. Additionally, a return on investment 3246 and a cost per headcount 3245 are shown for listed initiatives.

The panel 3240 presents one or more sales and customer services functional areas 3270, 3280 as shown in the graph 3224 in FIG. 37. A sales functional area 3270 includes a realization of customer channels initiative 3272. A customer service functional area 3280 can include upgrading services initiative 3282.

Further features and benefits in relation to the above described figures 17-38 can be derived from the following characterizations: 1. A method comprising: providing a single logical physically distributed information system across one or more information systems of at least two enterprises, wherein the enterprises are being combined; and providing a user interface to access the single logical physically distributed information system to execute one or more merger activities of the enterprises, the merger activities comprising a sales-related integration and a management of sales support activities, the sales support activities comprising addressing one or more customer issues for customer retention. 2. The method of aspect 1, wherein the merger activities further comprise customer-related communications, the user interface allowing a user to access the single logical physically distributed information system to execute at least one of pre-merger and post-merger activities, wherein the post-merger activities comprise a post-merger assessment and a measurement of one or more achieved synergies. 3.

The method of Aspect 2, wherein the user interface is adapted to the role of the user and a phase of the merger, a security of the user interface is related to the role of the user, the role of the user comprising an executive of one or more sales-related accounts. 4. A method comprising: providing a user interface adapted to manage one or more cross-selling opportunities for at least one organization involved in a merger with another organization; and allowing a user to edit one or more cross-selling opportunities presented in the user interface. 5. The method of Aspect 4 further comprising: providing information for at least one of the cross-selling opportunities in the user interface; the information comprising a financial information; providing a notification template in the user interface; and providing a trigger date in the user interface. 6. A system for managing a merger of at least two organizations comprising a module and a graphical user interface adapted to assist retention of one or more customers of at least one of the organizations.

7. The system of Aspect 6, wherein the system further comprising a first tool adapted to provide predefined templates for customer-related objects, wherein the customer-related objects comprise customer documents and electronic mailings. 8. The system of Aspect 7 further comprising a second tool adapted to track one or more customer reactions to merger developments, the merger developments comprising merger-related news and merger-related announcements. 9. The system of Aspect 8 further comprising a third tool adapted to assist in at least one of an assignment, a mapping, and a transfer of one or more customer accounts, the one or more customer accounts including sales-related accounts. 10. The system of Aspect 9 wherein the third tool is adapted to facilitate a performance comparison of at least two customer-related personnel for at least one of the merger organizations, the two customer-related personnel including two account executives. 11. A method for managing a merger of at least two organizations comprising providing a module adapted to proactively identify and present on a user interface a sales counterpart in a first merger organization related to a member of a second merger organization. 12. The method of Aspect 11 further comprising: producing an electronic mailing, the production of the electronic mailing comprising: importing lists of data, the lists including a customer list and a customer assignment list; consolidating the lists of data, the consolidating including syntactic mapping of one or more character fields; configuring an electronic mailing content; and screening the electronic mailing content, the content including one or more accounts. 13. The method of Aspect 12 further comprising: delivering the electronic mailing content to a sales-related merger member; and providing an exception workflow for undeliverable electronic mailings. 14. A system for planning a merger of at least two organizations, the system comprising an interface presenting financial information for one or more sales-related and customer-related initiatives of at least one organization, the financial information presented in a list or graph. 15. A system comprising: sales-related interfaces for a merger of at least two organizations; user interface components adapted to interact with sales-related interfaces; and a layer of application logic services, the layer interacting with sales-related interfaces, and the application logic services relating to the merger.

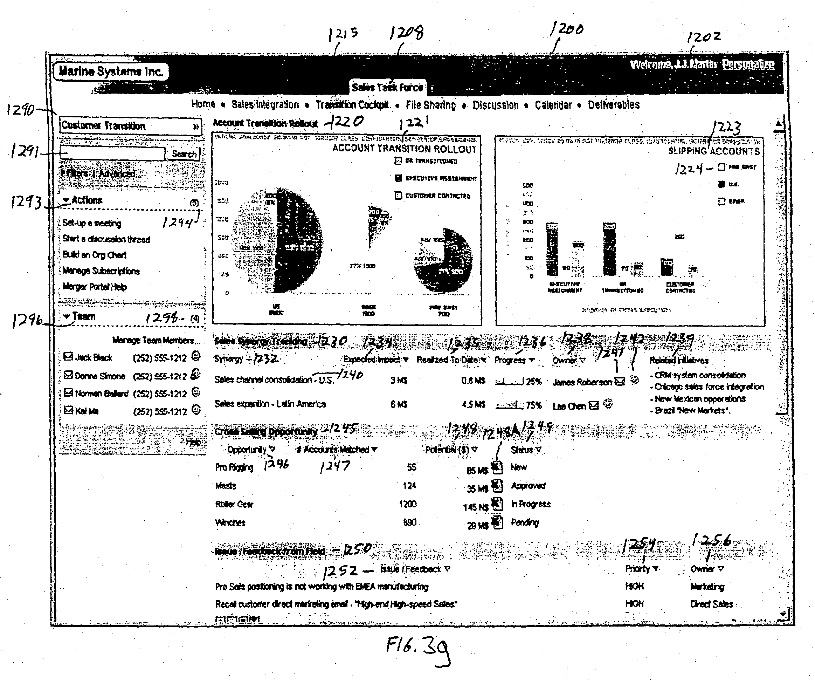

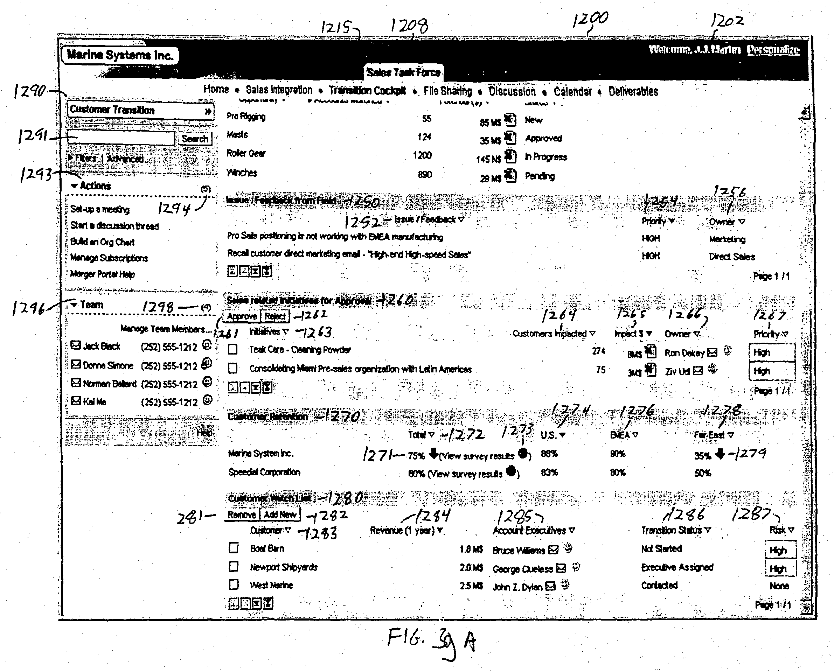

FIGS. 39-46 illustrate exemplary user interfaces generally relating to services integration in a method according to the invention.

In an aspect, there is disclosed a method for managing a corporate restructuring of at least two organizations including presenting a user interface including information relating to consolidating customer accounts for at least one of the restructuring organizations, and presenting a template in the user interface, the template including a rollout template menu, a pull down window, a list of action items, and a status relating to each action item in the list. In embodiments, the list of action items can include at least one of an account executive assignment notification, an account executive personalized communication, a customer communication, a cross selling opportunity, and a retention plan, an action including a transmission of an email.

In another aspect, there is disclosed a method including providing a single logical physically distributed information system across one or more information systems of at least two enterprises being combined, and providing a user interface to allow a user to access the single logical physically distributed information system to execute one or more pre-merger activities, merger activities, and post-merger activities, the merger activities including customer-related integration and resources, the post-merger activities including a post-merger assessment and a measurement of one or more achieved merger synergies. In embodiments, the merger activities can include providing customer-related communications, and managing and planning customer support activities, the customer support activities including addressing one or more customer issues and concerns. The user interfaces can be adapted to a role of the user and a phase of the merger, the user role including an executive of one or more customer accounts, a security of the user interface related to the phase of the merger and a role of the user.

In another aspect, there is disclosed a method including facilitating consolidation of customer-related information for a first organization being merged with a second organization, the customer-related information including customer accounts, the consolidation including matching one or more customer accounts of the organizations, and facilitating consolidation of customer-related assignments of at least one of the organizations. In embodiments, the method can include providing an exception list for non-matched customer accounts, and tracking a status of customer-related engagements.

In another aspect, there is disclosed a system for managing a merger of at least two organizations, wherein the system can include a software process and user interface adapted to assist customer satisfaction during a merger period, the software process being stored in a medium. In embodiments, the system can include a first tool adapted to retain one or more customers, a second tool adapted to provide collaborative customer retention planning, and/or a third tool to provide targeted and personalized electronic mailing to customers of at least one of the organization. The second tool can be adapted to provide a unified and aligned presentation of customer accounts from one or more merger customer support centers of at least one of the organizations, the presentation including customer records.

In another aspect, there is disclosed a system for implementing a merger of at least two organizations, the system including a software product adapted to facilitate sales-related activities of the organizations, the software product including a user interface, wherein the sales-related activities including at least one of sales consolidation, cross selling activities, and customer retention of the organizations. In embodiments, the user interface presents at least one of a synergy, an expected impact, a realized impact, and a progress of the expected impact, the user interface presents the progress in a graph and at least one of an owner of the synergy, an electronic mailing link, and one or more initiatives related to the synergy. The user interface presents information for one or more user-identified cross selling opportunities, the information including a number of matched customer accounts, a status, and a potential value, the potential value associated with an external object. The user interface can include a first panel adapted to address customer-related issues, a second panel adapted to address sales-related initiatives, the second panel including at least one of an approval button, a rejection button, a checklist of initiatives, a number of impacted customers, a financial impact, an initiative owner, and an initiative priority level, a third panel adapted to facilitate customer retention, the third panel including a measure of customer retention, one or more retention rates, and a movement of the one or more rates, a fourth panel adapted to facilitate customer retention, the fourth panel including at least one of a customer satisfaction rate, a customer survey, and a movement of the rate, wherein the customer survey can include one or more external objects, and/or a fifth panel adapted to facilitate a search of merger information and to facilitate contacting one or more merger members.

In another aspect, there is disclosed a system for managing a merger of at least two organizations, the system including a graphical user interface adapted to allow a user to consolidate customer accounts for at least one of the organizations, the graphical user interface further adapted to match customer accounts from at least two merger organizations. In embodiments, the graphical user interface can include a sorted list of customer accounts, a customer account value, a numerical representation of account ranking, information for at least one customer service personnel from each merger organization, information for a customer service personnel assignment relating to at least one account, the customer service personnel assignment including a cooperative assignment. The graphical user interface can also include information relating non-matched accounts and a clean room tool adapted for at least one stakeholder, the information relating to non-matched accounts including a second list of customer accounts.

In another aspect, there is disclosed a method for managing a merger of at least two organizations including presenting a user interface including information relating to consolidating accounts for at least one of the merger organizations, the user interface including a pull down window, a text box a trigger date, and a response date, and presenting a template in the user interface, the template including a notification template menu, a list of action items, and an owner relating to each action item in the list. In embodiments, the list of action items can include at least one of an account executive assignment notification, an account executive personalized communication, a customer communication, a cross selling opportunity, and a retention plan, an action item includes transmission of an email. The method can also include facilitating exception handling for at least one of the action items. The user interface can present at least one of a list and a graph, the graph presents a time period for each listed action.

In another aspect, there is disclosed a system for managing a merger of at least two organizations including a services unification module, the services unification module including one or more user roles, the user roles including at least one of customers, services taskforce members, service representatives, and integration project managers. In embodiments, the services unification module can include one or more inputs, the inputs including a list of customer accounts, a list of products sold to one or more customers, a list of customer-related services, a list of customer-related personnel, and a list of service providers. The services unification module further can include one or more outputs, the outputs including an account services consolidation plan, a merged account repository, a customer communication, a tracking statistic, and a customer-satisfaction statistic.

Turning now to the figures, FIG. 39 shows an example of an interface 1200 for a stakeholder 1202 with access to a sales task force menu 1208. Other possible views for stakeholders in the sales task force interface 1200 include views for sales integration, file sharing, discussions, deliverables, and a calendar. The view presented in interface 1200 is a transition cockpit view 1215. The view 1215 allows the stakeholder 1202 to access and manage sales-related transition tools for the merger, including an account transition rollout 1220 and sales synergy tracking 1230. The account transition rollout 1220 presents graphs 1221 and charts 1223 of accounting information, including regional or divisional account information 1224 and accounts 1223 that are slipping from schedule.

The system 10 facilitates sales channel consolidation 1240 in the sales synergy tracking section 1230. The section 1230 can present a synergy 1232, an expected impact 1234, a realized impact 1235, and a progress 1236 of the expected impact. The expected impact progress 1236 is displayed as a percentage in a bar graph. The section 1230 can also show an owner 1238 of a synergy, along with a link for an email 1241 and a real-time messaging and availability utility 1242. Also, the section 1230 can present one or more initiatives 1239 related to the synergy 1232.

The availability feature or utility 1242 allows a stakeholder to send a private, real-time message to another user on the system 10. The availability utility 1242 can be a real-time alternative to email and allow a chat session outside of a chat room. The utility 1242 can be made by an external software tool from a unit of AOL Time Warner Inc. of New York, New York.

Interface 1200 further presents a panel 1245 to allow a user 1202 to view and analyze one or more user-identified cross selling opportunities. One or more stakeholders can identify one or more cross-selling opportunities 1246. The panel 1245 presents one or more opportunities 1246 and a number of accounts matched 1247 for each opportunity. A status 1249 and a potential value 1248 of each opportunity are evaluated and presented in a linked object 1248A.

The linked object 1248A can be an external software object, such as an Excel@ spreadsheet by Microsoft Corporation. In general, objects can be internal or external to the disclosed software, but can coexist with each other.

FIG. 39 and FIG. 39A present an exemplary panel 1250 for issues or feedback 1252 from customers or other merger stakeholders. The feedback 1252 arrives from stakeholders who sell or market products or services to customers and includes a corresponding priority level 1254. The feedback 1252 provides the merger organizations with valuable information on marketing, selling, and advertising products and services. The feedback 1252 also allows a merger organization to identify strengths and weaknesses in organizational products, services, strategy, personnel, and goals during the merger process 1100. Moreover, the feedback 1252 allows merger organizations to track customer reactions to merger developments and announcements.

FIG. 39A further presents a panel 1260 for sales-related initiatives for approval from a stakeholder. The panel 1260 present buttons for approval 1261 and rejection 1262. The panel 1260 presents a checklist of initiatives 1263 with a number of impacted customers 1264, a financial impact 1265, an owner 1266 and a priority level 1267 for each initiative 1263. The interface 1200 can present a panel 1270 for each merger organization with a measure of customer retention 1272. The panel 1270 can present one or more retention rates 1271 for a division or region 1274, 1276, 1278. Alternatively, the interface 1200 presents customer satisfaction rates 1271, including customer surveys 1273. The customer survey 1273 is presented in an external object. Moreover, the panel 1270 indicates if there has been any movement (via an arrow) 1279 of the rates 1271 (e.g., increasing or decreasing rates 1271).

Furthermore, the interface 1200 has a panel 1290 with a text box 1291 to allow the user 1202 to search for items or people, as well as to perform a number 1294 of other actions 1293. The user 1202 can contact a number 1298 of merger team members 1296.

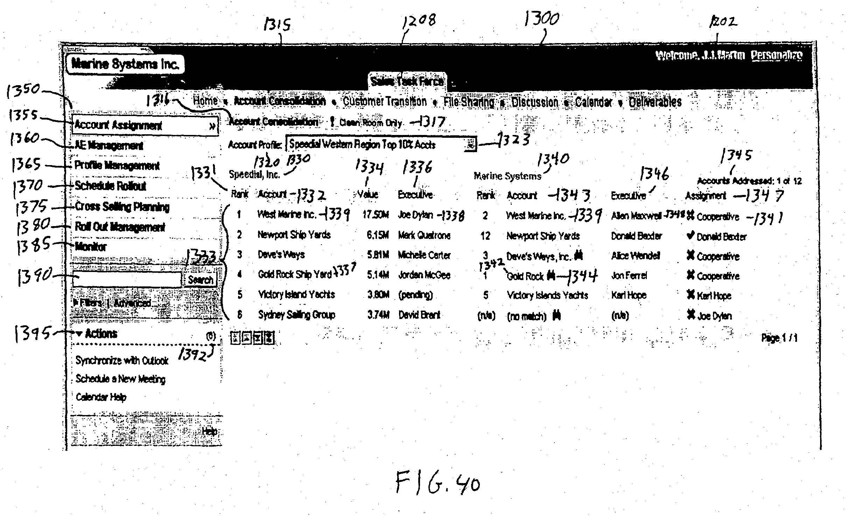

As shown in Figs. 40-44 the system 10 includes a graphical user interface and can be adapted to consolidate customer accounts for at least one of the organizations.

FIG. 40 presents an interface 1300 to allow the user 1202 to consolidate customer accounts 1315 from the sales task force menu 1208. The interface 1300 presents an account profile 1320 of a merger organization 1330 and sort a list 1333 of customer accounts 1332 based on one or more predefined parameters in a pull down menu 1323. The interface 1300 identifies and matches similar accounts 1332, 1343 from at least two merger organizations 1330, 1340. The interface 1300 presents a value 1334 of each account 1332 for a number 1345 of accounts, and sort accounts 1332 by account values 1334.

Customer service personnel 1336, 1346 from each merger organization 1330, 1343 can be presented, and an assignment 1347 made for the person responsible for the account. For instance, Joe Dylan 1338 from Speedial, Inc. 1330 and Allen Maxwell 1348 from Marine Systems 1340 have a cooperative assignment 1341 for a West Marine Inc. account 1339. Alternatively, either executive 1336, 1346 from the merger organizations 1330, 1340 can individually be assigned to be responsible for a customer account 1332. When the customer names 1337, 1342 do not completely match, the user 1202 is allowed to manually select a customer from a list for exception listing. The user 1202 selects a link (e.g., icon 1344) to access the customer list.

The interface 1300 also presents a panel 1350 allowing a user 1202 to access one or more links to merger-related views, including an account assignment view 1355, an account executive (AE) management view 1360, and a profile management view 1365. Other linked views can include a schedule rollout view 1370, a cross selling planning view 1375, a rollout management view 1380, and a view 1385 for monitoring the merger process. The panel 1350 also allows the user to perform a search 1390, and perform a number 1392 of other merger-related actions 1395.

The interface 1300 also includes a tool to model a "clean room" environment 1317 during the merger process 1100. The clean room concept typically involves members of the involved organizations physically meeting in a room and exchanging information and objects. Typically, only the members of a clean room environment can view and examine the confidential and privileged information of other merger organizations. If the merger deal is unsuccessful and the merger deal fails, then the clean room members often leave their organization for reasons of conflicts of interest, or are transferred to other parts of their organization where they will not be interacting with the other merger organizations.

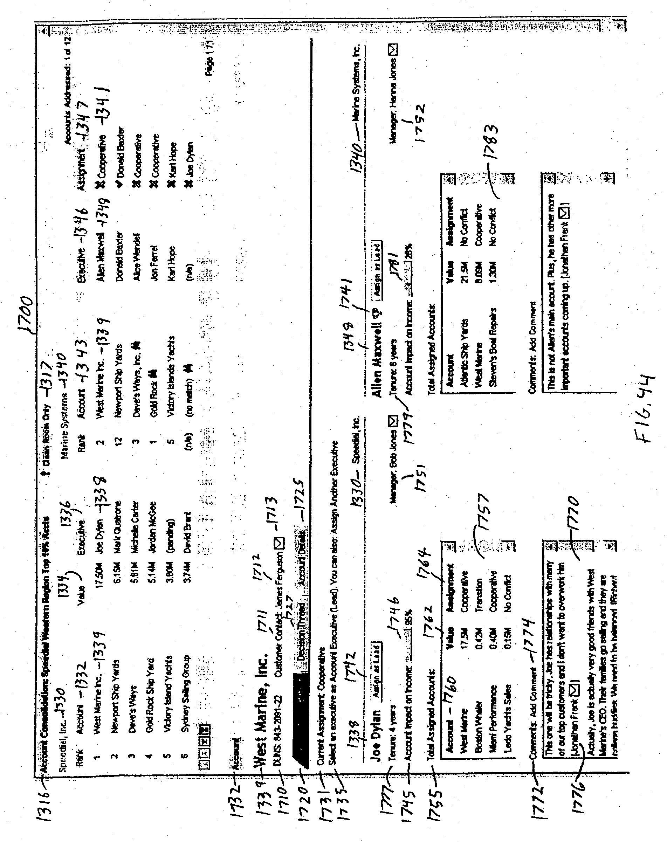

As shown in FIGS. 40 and 44, a graphical user interface is adapted to display customer account information for at least one of the organizations. The graphical user interface can include a menu that is adapted to display one or more views relating to account assignments, decision threads, and account details.

The graphical user interface can further include an account identification number, a customer contact, a customer contact electronic mailing link, a measurement for an account impact, and an account assignment view. The account assignment view can include an assignment type, a selector relating to an account lead, and information relating one or more account executives. The account executive information can include at least one of a length of tenure, a notable achievement, a list of assigned accounts, and information relating to a management stakeholder. The list of assigned accounts can relate to at least one of the account executives, in which the list of assigned accounts can comprise assigned accounts, assignment information, and a text box.

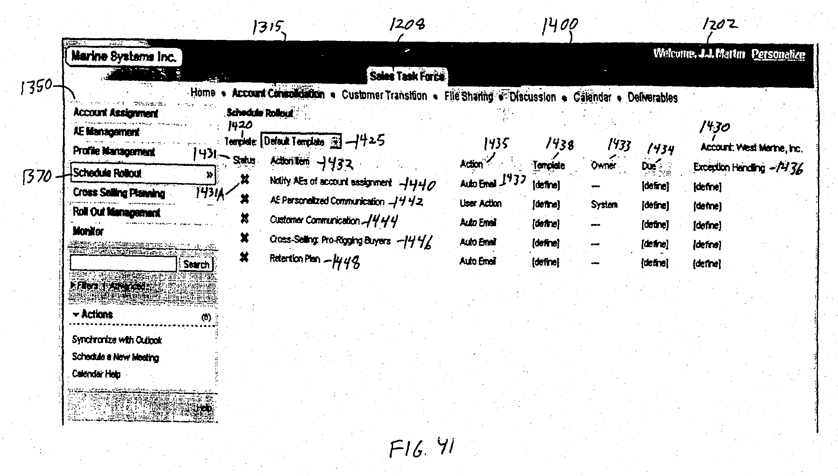

As shown in FIGS. 41-45, a user interface includes information relating to consolidating accounts for at least one of the merger organizations. The user interface can include a pull down window, a text box, a trigger date, and a response date. The user interface can also present a template including a notification template menu, a list of action items, and an owner relating to each action item in the list.

The list of action items can include at least one of an account executive assignment notification, an account executive personalized communication, a customer communication, a cross selling opportunity, and a retention plan. The action item can comprise a transmission of an email.

FIG. 41 presents an interface 1400 that allows a user 1202 to consolidate accounts 1315 in the sales task force menu 1208. The user 1202 can select to view a schedule rollout view via link 1370. The user 1202 can also view a schedule rollout template 1420 from a template format in a pull down menu 1425. The user 1202 examines a status 1431 of an action item 1432. A status indicator 1431A (e.g., an "X" indicator) signifies that the action has not been completed. The user 1202 can perform an action 1435, such as automatically sending an email 1437 and defining a template 1438. Additionally, an owner 1433 and a due date 1434 of the action item 1432 can be presented. The interface 1400 also facilitates exception handling 1436 for the action items 1432. Some exemplary action items 1432 include notifying an account executive (AE) of an assignment 1440, facilitating AE personalized communication 1442, and conducting customer communication 1444. Other exemplary action items 1432 involve a cross-selling opportunity 1446 and a retention plan 1448.

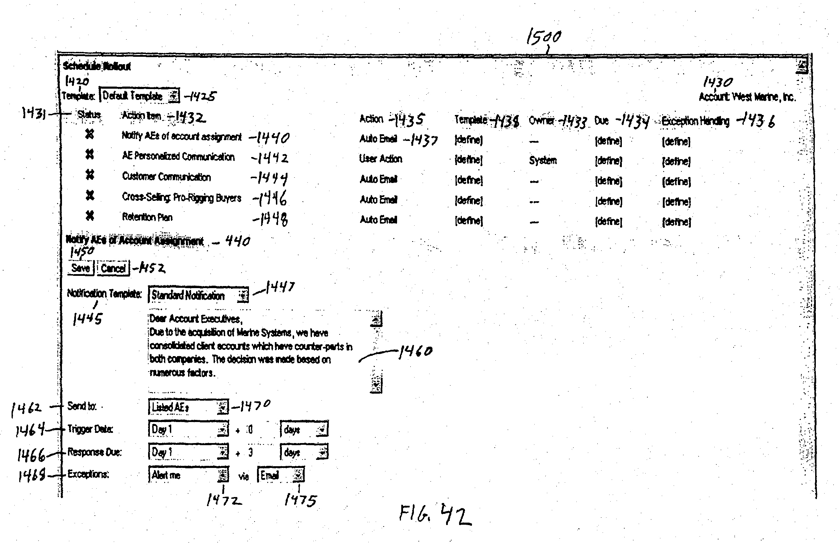

FIG. 42 presents an interface 1500 in which the user 1202 can select to notify an AE of an account assignment 1440. A notification template 1445 and a template format in a pull down window 1447 is presented. A message can be entered in a text box field 1460. The user 1202 can then send the assignment notification 1440 to one or more stakeholders shown in a pull down menu 1470. The notification 1440 can include a trigger date 1464 and a response date 1466. The interface 1500 also facilitates exceptions 1468 to the notification 1440, such as sending an alert email 1472, 1475.

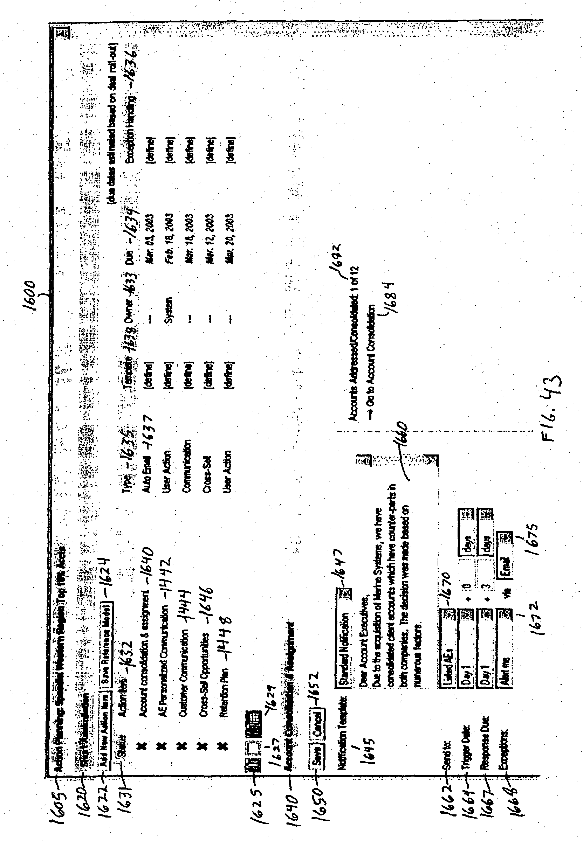

FIG. 43 presents an interface 1600 that facilitates action planning 1605 for one or more accounts. The interface 1600 includes a panel 1620 for an assimilation of action items 1632. The panel 1620 presents a status 1631 and an action type 1635 for each action item 1632 including an action type 1635 for automatically sending an email 1637. The panel 1620 can also include a template 1638, an owner 1633, a deadline 1634, and an exception handler 1636. Some exemplary action items 1632 can include account consolidation and assignment 1640, AE personalized communication 1442, and customer communication 1444. Other action items 1632 include cross selling opportunities 1646 and a retention plan 1448. The panel 1620 presents a graph 1625 of action items 1632, a list 1627 of action items 1632 or both graph 1625 and the list 1632 of action items 1629.

FIG. 43 additionally presents a panel 1640 for account consolidation and assignment. The panel 1640 presents a notification template 1645 and a template format in a pull down window 1647. A message or description can be entered in a text box field 1660. Account notification can be sent to one or more stakeholders listed in a pull down menu 1670. The notification includes a trigger date 1664 and a response date 1667. The interface 1600 facilitates exceptions 1668, such as sending an alert email 1672, 1675. Furthermore, the interface presents a number 1682 of consolidated or addressed accounts, and present a link 1684 to an account consolidation view.

An account consolidation interface 1700 in FIG. 44 can be presented from the link 1684 in interface 1600 in Fig 42 or the interface 1700 can be presented from selecting an account 1332 in the account list 1333 in FIG. 39. Panel 1316 in interface 1700 can present similar account consolidation information as shown in the account list 1333. A user 1202 can select an account title 1339 to present additional account detail 1339 in another account panel 1732.

The panel 1732 shows the account 1339, an account identification number 1710, a customer contact name 1712, and an email link 1713 for the customer contact 1711. The account panel 1732 shows a tabbed menu for account assignments 1720, decision threads 1727, and other account details 1725. The decision thread 1727 presents a log of a collaborative decision process in which merger managers can exchange ideas and communications. The tab 1720 selected and presented in the interface 1700 is the account assignment tab 1720.

The interface 1700 presents a current assignment type 1731 and allows the user 1202 to select a lead person 1735 for the account 1339. The interface 1700 allows the user 1202 to examine and comparatively inspect account information for at least two of the merger organizations 1330, 1340. The interface 1700 shows one or more details for executives 1338, 1348 of the account 1339 for one or more merger organizations 1330, 1340. For example, the interface 1700 shows a manager 1751, 1752 and a length of tenure 1777, 1779 for each account executive 1338, 1348. An account executive 1348 having a notable achievement 1741 as shown. A measurement 1746, 1781 for an impact the account 1339 has on income 1745 for each organization 1330, 1340 can be shown.

The interface 1700 can present a list 1757, 1783 of total assigned accounts 1755 for each account executive 1338, 1348. Each list 1757, 1783 shows customer accounts 1760 with account values 1762 and assignment information 1764. Moreover, the interface 1700 can show a comment 1772 text box 1770 for a user to add comments 1774. The text box 1770 can have a link 1776 for discussed contacts.

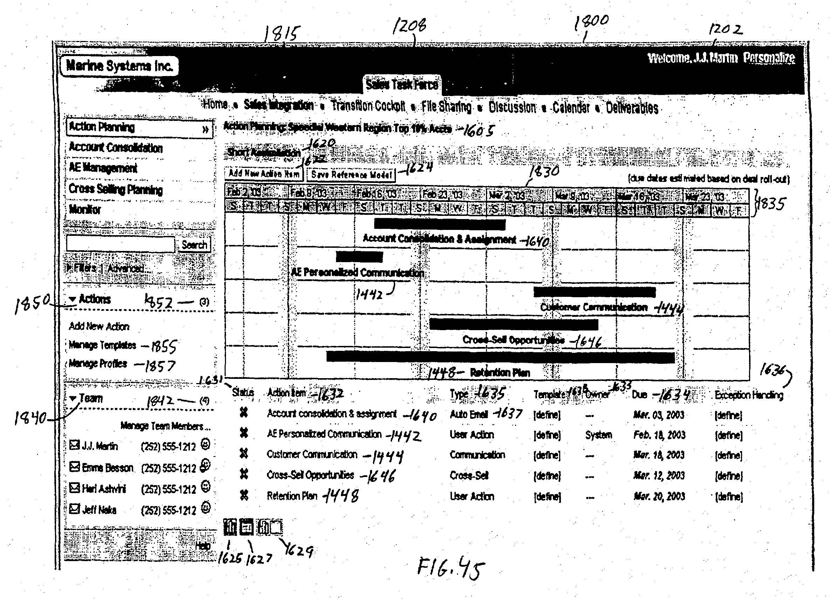

FIG. 45 presents an interface 1800 for stakeholder user 1202 for sales integration 1815 in the sales task force menu 1208. The interface 1800 facilitates action planning 1605 for one or more accounts, as shown in interface 1600. The interface 1800 presents a Gantt chart 1830 of the assimilation actions 1632. The Gantt chart 1830 presents a time period 1835 for each action 1632. The stakeholder 1202 can inspect the status 1631 of the action items 1632 to ensure customer satisfaction. The stakeholder 1202 can also contact a number 1842 of other sales task force members 1840, and access a number 1852 of actions 1850, such as managing templates 1855 and profiles 1857.

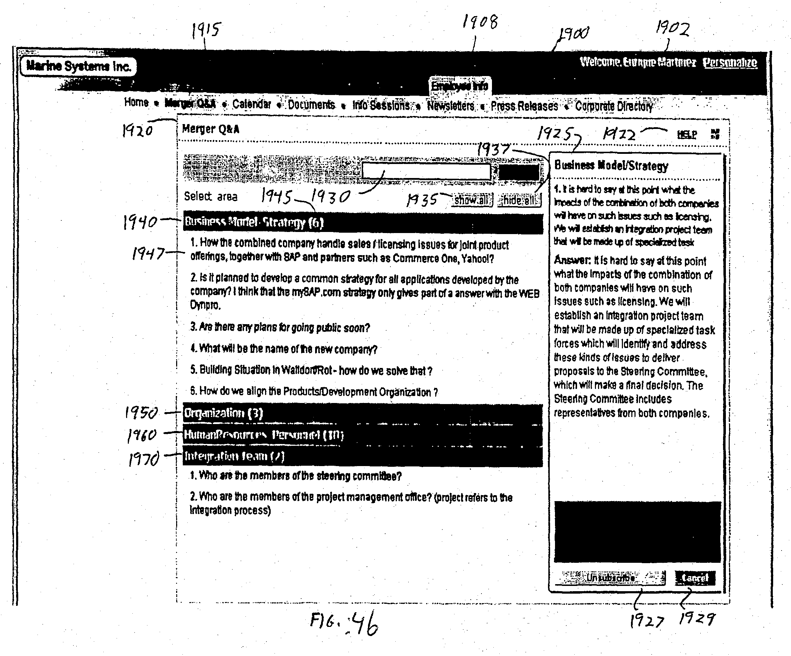

FIG. 46 presents an interface 1900 for a stakeholder 1902 to access a menu 1908 for employees with a panel 1920 for merger-related questions and answers (Q&A) 1915. The Q&A interface 1900 allows merger organizations to address commonly asked questions from employees. The interface 1900 presents a central, integrated Q&A format to address common questions and reduce an amount of misinformation and confusion that can arise during the merger process 1100.

The panel 1920 shows categories for various Q&A merger topics. As an example, some Q&A categories can include a business model and strategy category 1940, an organizational category 1950, a human resource and personnel category 1960, and an integration team category 1970. The user 1902 can select a single category 1940 to view a number 1945 of listed questions 1947 for that category 1940. Additionally, the user 1902 can select a button 1935 to show all listed questions for all categories or select a button 1937 to hide all questions for all of the categories. The user 1202 can further select a question 1947 to view a panel 1925 with a response or answer to address the question 1947. Employees to subscribe or unsubscribe 1927 can merger-related Q&A categories. The panel 1925 can be cancelled 1929 and closed by the user 1902. In the event the employee stakeholder 1902 has other questions or desires other resources, the interface 1900 can provide a text box 1930 for searches and a link 1922 for help and reference views.

Further features and benefits in relation to the above described figures 39-46 can be derived from the following characterizations: 1. A method for managing a corporate restructuring of at least two organizations, the method comprising: presenting a user interface including information relating to consolidating customer accounts for at least one of the restructuring organizations; and presenting a template in the user interface, the template including a rollout template menu, a pull down window, a list of action items, and a status relating to each action item in the list. 2. The method of Aspect 1 wherein the list of action items comprises at least one of an account executive assignment notification, an account executive personalized communication, a customer communication, a cross selling opportunity, and a retention plan, an action including a transmission of an email. 3. A method comprising: providing a single logical physically distributed information system across one or more information systems of at least two enterprises being combined; and providing a user interface to allow a user to access the single logical physically distributed information system to execute one or more pre-merger activities, merger activities, and post-merger activities, the merger activities including customer-related integration and resources, the post-merger activities including a post-merger assessment and a measurement of one or more achieved merger synergies. 4. The method of aspect 3, wherein the merger activities further comprise: providing customer-related communications; and managing and planning customer support activities, the customer support activities including addressing one or more customer issues and concerns. 5. The method of Aspect 3, wherein the user interfaces are adapted to a role of the user and a phase of the merger, the user role including an executive of one or more customer accounts, a security of the user interface related to the phase of the merger and a role of the user. 6.

A method comprising: facilitating consolidation of customer-related information for a first organization being merged with a second organization, the customer-related information including customer accounts, the consolidation including matching one or more customer accounts of the organizations; and facilitating consolidation of customer-related assignments of at least one of the organizations. 7. The method of Aspect 6 further comprising: providing an exception list for non-matched customer accounts; and tracking a status of customer-related engagements. 8. A system for managing a merger of at least two organizations, wherein the system comprises a software process and user interface adapted to assist customer satisfaction during a merger period, the software process being stored in a medium. 9. The system of Aspect 8 further comprising: a first tool adapted to retain one or more customers; a second tool adapted to provide collaborative customer retention planning; and a third tool to provide targeted and personalized electronic mailing to customers of at least one of the organization. 10. The system of Aspect 9, wherein the second tool is adapted to provide a unified and aligned presentation of customer accounts from one or more merger customer support centers of at least one of the organizations, the presentation including customer records. 11. A system for implementing a merger of at least two organizations, the system including a software product adapted to facilitate sales-related activities of the organizations, the software product including a user interface, wherein the sales-related activities include at least one of sales consolidation, cross selling activities, and customer retention of the organizations. 12. The system of Aspect 11, wherein the user interface presents at least one of a synergy, an expected impact, a realized impact, and a progress of the expected impact, the user interface presents the progress in a graph and at least one of an owner of the synergy, an electronic mailing link, and one or more initiatives related to the synergy. 13. The system of Aspect 11, wherein the user interface presents information for one or more user-identified cross selling opportunities, the information including a number of matched customer accounts, a status, and a potential value, the potential value associated with an external object. 14. The system of Aspect 11, wherein the user interface comprises: a first panel adapted to address customer-related issues; a second panel adapted to address sales-related initiatives, the second panel including at least one of an approval button, a rejection button, a checklist of initiatives, a number of impacted customers, a financial impact, an initiative owner, and an initiative priority level; a third panel adapted to facilitate customer retention, the third panel including a measure of customer retention, one or more retention rates, and a movement of the one or more rates; a fourth panel adapted to facilitate customer retention, the fourth panel including at least one of a customer satisfaction rate, a customer survey, and a movement of the rate, wherein the customer survey comprises one or more external objects; and a fifth panel adapted to facilitate a search of merger information and to facilitate contacting one or more merger members. 15. A system for managing a merger of at least two organizations, the system comprising a graphical user interface adapted to allow a user to consolidate customer accounts for at least one of the organizations, the graphical user interface further adapted to match customer accounts from at least two merger organizations. 16. The system of Aspect 15, wherein the graphical user interface comprises a sorted list of customer accounts, a customer account value, a numerical representation of account ranking, information for at least one customer service personnel from each merger organization, information for a customer service personnel assignment relating to at least one account, the customer service personnel assignment including a cooperative assignment. 17. The system of Aspect 15, wherein the graphical user interface further comprises information relating non-matched accounts and a clean room tool adapted for at least one stakeholder, the information relating to non-matched accounts including a second list of customer accounts. 18. A method for managing a merger of at least two organizations comprising: presenting a user interface including information relating to consolidating accounts for at least one of the merger organizations, the user interface including a pull down window, a text box a trigger date, and a response date; and presenting a template in the user interface, the template including a notification template menu, a list of action items, and an owner relating to each action item in the list. 19. The method of Aspect 18, wherein the list of action items comprises at least one of an account executive assignment notification, an account executive personalized communication, a customer communication, a cross selling opportunity, and a retention plan, an action item includes transmission of an email. 20. The method of Aspect 18 further comprising facilitating exception handling for at least one of the action items. 21. The method of Aspect 18, wherein the user interface further presents at least one of a list and a graph, the graph presents a time period for each listed action. 22. A system for managing a merger of at least two organizations comprising a services unification module, the services unification module including one or more user roles, the user roles including at least one of customers, services taskforce members, service representatives, and integration project managers. 23. The system of Aspect 22, wherein the services unification module comprises one or more inputs, the inputs comprising: a list of customer accounts; a list of products sold to one or more customers; a list of customer-related services; a list of customer-related personnel; and a list of service providers. 24. The system of Aspect 22, wherein the services unification module further comprises one or more outputs, the outputs comprising: an account services consolidation plan; a merged account repository; a customer communication; a tracking statistic; and a customer-satisfaction statistic.

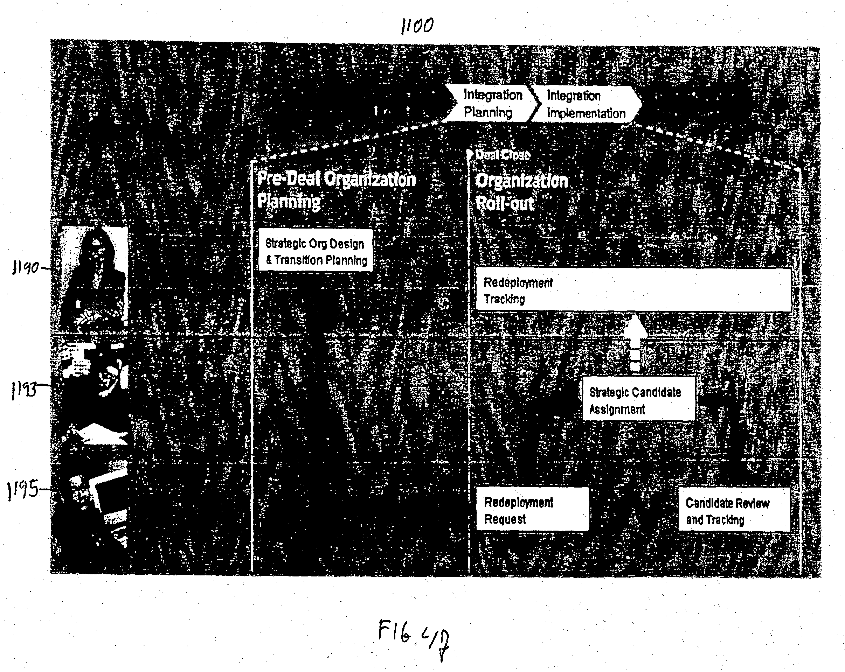

FIGS. 47-68 illustrate exemplary user interfaces generally relating to benefits and compensation realignment in a method according to the invention.

In an aspect, there is disclosed a method including providing a single logical physically distributed information system across one or more information systems of at least two enterprises, wherein the enterprises can be being restructured, and providing a user interface to access the single logical physically distributed information system, the single logical physically distributed information system executing one or more restructuring activities, pre-restructuring activities, and post-restructuring activities, the restructuring activities including compensation realignment. In embodiments, the user interface can be adapted to at least one of a role of the user and a phase of a restructuring, the user role including an internal expert and an external expert of one of the enterprises, wherein the internal expert includes at least one of an executive, an employee, a manager, an investor, and an owner of one of the enterprises, the external expert including at least one of a consultant, an advisor, an analyst, and a specialist associated with one of the organizations.

In another aspect, there is disclosed a system for planning a merger of at least two organization, the system including a software product, the software product including a user interface and a compensation comparison and level mapping tool, the compensation comparison and level mapping tool relating to analogous positions and compensation levels in the merging organizations.

In another aspect, there is disclosed a method for planning a merger of at least two organizations including human-resource tools, the human-resource tools including a compensation cost assessment tool, a compensation comparison and level mapping tool, and a self-servicing tool for employees and managers, the human-resource tools including one or more user interfaces. In embodiments, the user interfaces can be adapted to present a compensation pay level for one or more employees, the user interfaces further adapted to allow a user to exchange merger information with a stakeholder and to present a time planning period. The method can also include product generating, posting, and sharing information.

In another aspect, there is disclosed a system for implementing a merger of at least two organizations including a process software module to realign a benefit and compensation package for an employee of at least one of the organizations, the process module including a graphical user interface. In embodiments, the process module can include a compensation comparison and level mapping tool, a policy publication tool, a link to human resource policies, and a self-servicing tool operable for employees and managers. The benefit and compensation package can be based on a geographic location.

In another aspect, there is disclosed a system for implementing a merger of at least two organizations including one or more interfaces for at least one of compensation realignment and benefit realignment, the one or more interfaces relating to one or more benefits for first and second related positions in the organizations, the first position from a first organization, and the second position from a second organization. In embodiments, the system can also include one or more interfaces for organizational-wide compensation, and an interface for self-servicing one or more managers and employees. The self-servicing interface can be adapted to allow managers and employees to select, copy, and paste personal information related to one organization to relate to another merger organization. The one or more interfaces can provide assess to one or more compensation options for one or more employees. The one or more interfaces can allow a user to devise one or more benefits based on a plurality of organizational resources and budgets.

Further features and benefits in relation to FIGS. 47-68 can be derived from the following characterizations: 1. A method comprising: providing a single logical physically distributed information system across one or more information systems of at least two enterprises, wherein the enterprises are being restructured; and providing a user interface to access the single logical physically distributed information system, the single logical physically distributed information system executing one or more restructuring activities, pre-restructuring activities, and post-restructuring activities, the restructuring activities including compensation realignment. 2. The method of Aspect 1, wherein the user interface is adapted to at least one of a role of the user and a phase of a restructuring, the user role including an internal expert and an external expert of one of the enterprises, wherein the internal expert including at least one of an executive, an employee, a manager, an investor, and an owner of one of the enterprises, the external expert including at least one of a consultant, an advisor, an analyst, and a specialist associated with one of the organizations. 3. A method for planning a merger of at least two organizations, the method comprising human-resource tools, the human-resource tools comprising: a compensation cost assessment tool; a compensation comparison and level mapping tool; and a self-servicing tool for employees and managers, the human-resource tools including one or more user interfaces. 4. The method of Aspect 3, wherein the user interfaces are adapted to present a compensation pay level for one or more employees, the user interfaces further adapted to allow a user to exchange merger information with a stakeholder and to present a time planning period. 5. The method of Aspect 3, further comprising product generating, posting, and sharing information. 6. A system for implementing a merger of at least two organizations, the system comprising process software module to realign a benefit and compensation package for an employee of at least one of the organizations, the process comprising a graphical user interface. 7. The system of Aspect 6, wherein the process further comprises a compensation comparison and level mapping tool, a policy publication tool, a link to human resource policies, and a self-servicing tool operable for employees and managers. 8. The system of Aspect 7, wherein the benefit and compensation package is based on a geographic location. 9. A system for implementing a merger of at least two organizations, the system comprising one or more interfaces for at least one of compensation realignment and benefit realignment, the one or more interfaces relating to one or more benefits for first and second related positions in the organizations, the first position from a first organization, and the second position from a second organization.

10. The system of Aspect 9, further comprising one or more interfaces for organizational-wide compensation, and an interface for self-servicing one or more managers and employees. 11. The system of Aspect 10, wherein the self-servicing interface is adapted to allow managers and employees to select, copy, and paste personal information related to one organization to relate to another merger organization. 12. The system of Aspect 9, wherein the one or more interfaces provide assess to one or more compensation options for one or more employees. 13. The system of Aspect 12, wherein the one or more interfaces allow a user to devise one or more benefits based on a plurality of organizational resources and budgets.

Turning now to the figures, A view of headcount planning and employee redeployment is shown in an organization design chart 1100 of FIG. 47. In pre-deal planning 1110, strategic organization design and transition planning 1140 are implemented by an organizational design task force 1190. A line manager 1195 receives a redeployment request 1150 and sends the redeployment request to a human resource generalist 1193 to assign a strategic candidate 1160. The human resource generalist 1193 then sends the assignment to the line manager 1195 to review and tracks the candidate 1180. Additionally, the task force 1190 tracks redeployments 1110 of employees from a closing of the deal 1120 to an organization rollout period 1130.

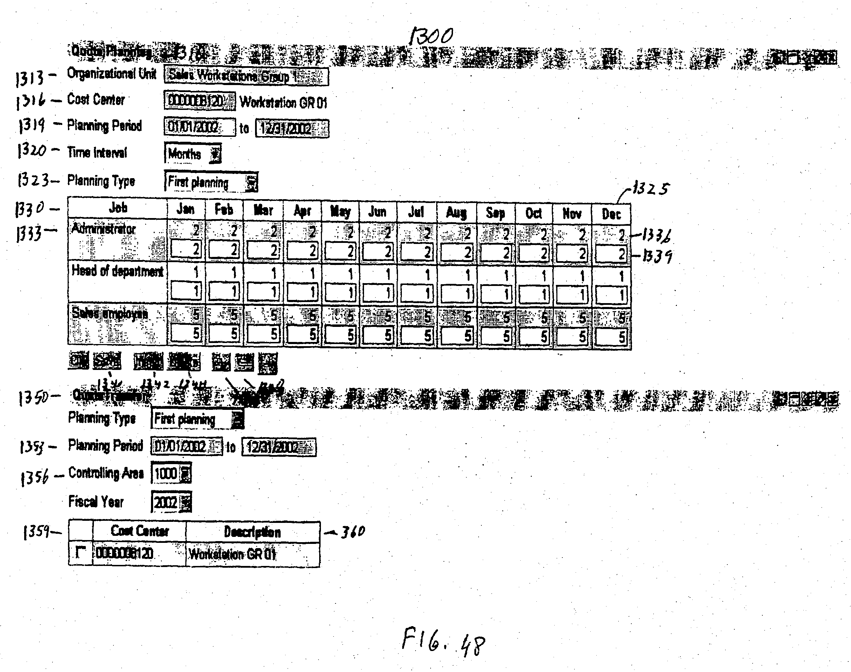

FIG. 48 shows an interface 1300 for a headcount quota tool. The interface 1300 presents a quota planning panel 1310, and a quota transfer panel 1350. In the quota planning panel 1310, a user can view an organizational unit 1313, cost center 1316, and planning type 1323. The user can also inspect the quota planning 1310 for a planning period 1319 in a time interval 1320, such as a time interval of months 1325. The interface 1300 shows a job description 1330, such as administrator positions 1333, with the number of desired positions 1336, and the number of filled positions 1339. The user can use a save button 1340, insert button 1342, or delete button 1344, to control job types 1330. The user can use an add button 1346, delete button 1348, or edit button to control job positions at row 1339.

The quota transfer panel 1350 presents an organizational controlling area 1356 and planning period 1353. The panel 1350 also shows a cost center 1359 and related description 1360.

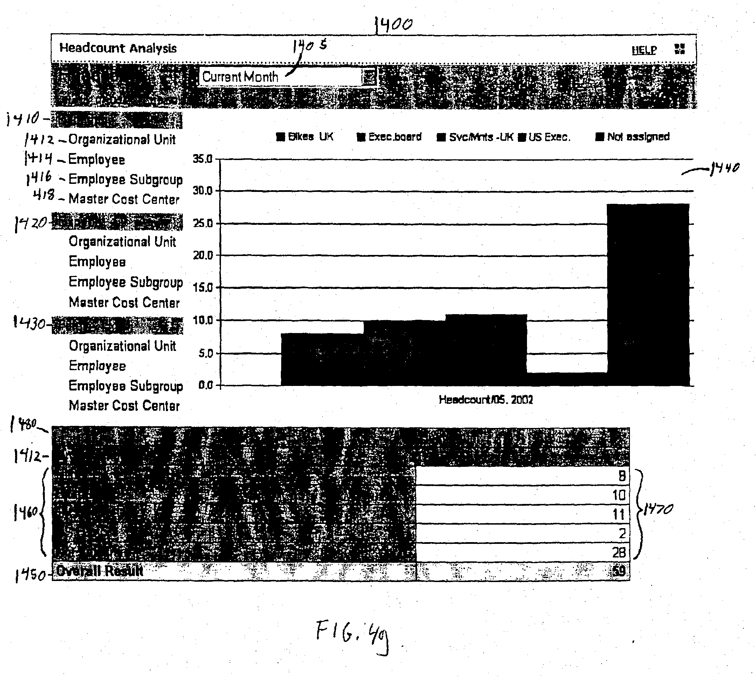

FIG. 49 illustrates an interface 1400 for a headcount analysis. The user interface 1400 presents a headcount for a time period 1405, and allows the user to exchange 1410, expand 1420, or filter 1430 one or more organizational units 1412, employees 1414, employee subgroups 1416 or cost centers 1418. The user interface 1400 also displays a chart 1440 and/or table 1480 for groups 1460 in an organizational unit 1412, as well as the number of members 1470 in each group 1460. The total number of members 450 for the organizational unit 1412 can also be displayed. The user interface 1400 can be part of a module.

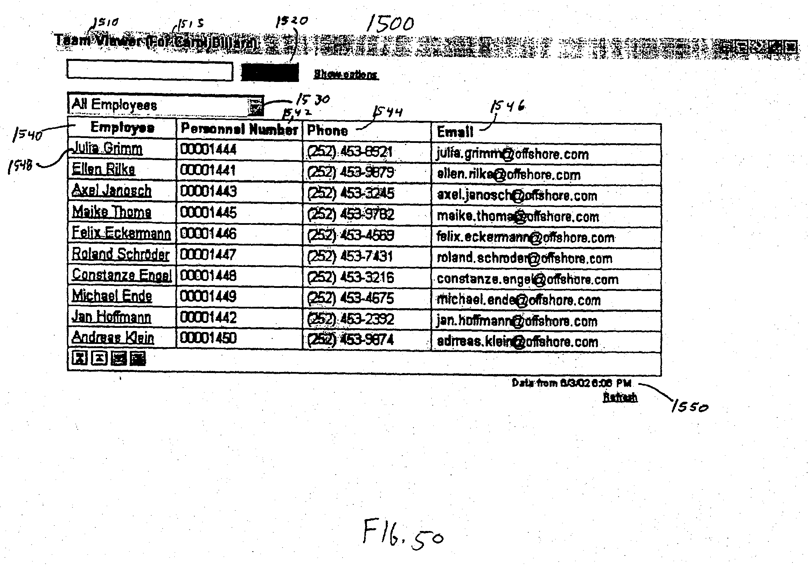

FIG. 50 illustrates an interface 1500 to present group or team information to a user 1515. The interface 1500 shows a personalized view of a team 1510 for user Carol Dillard 1515. By using a selector 1530, Carol 1515 can examine a list of employee 1530 team members along with their related contact information. The selector 1530 helps the user 1515 to find a list of team members by an identifier, such as by a personnel number 1542, or by another member identifier. The interface 1520 interacts with a search engine to locate team members by employee name 1548, personnel number 1542, phone number 1544, or email address 1546. The interface 1500 displays a real time (e.g., the moment the interface accesses and displays information) 1550 of the team information.

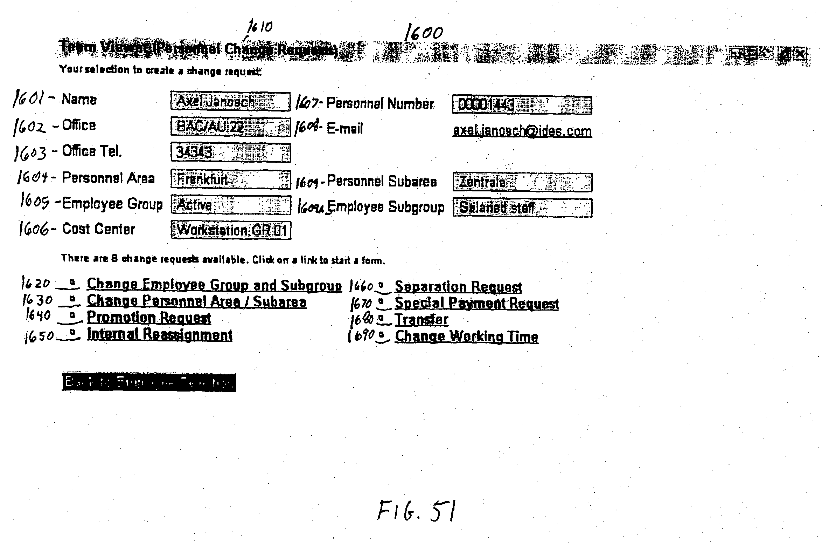

FIG. 51 illustrates an interface 1600 for a user to submit a request 1610 for a personnel change in an organization. The interface 1600 allows the user to easily edit information for an employee. For example, the interface 1600 allows the user to edit an employee's name 1601, office information 1602, telephone number 1603, personnel area 1604, employee group 1605, cost center 1606, personnel number 1607, email address 1608, personnel sub area 1609, and employee subgroup 1609A. The interface 1600 also includes links 1620-1690 to other interfaces to perform other organizational human resource tasks. The other exemplary links include a change to an employee's group or subgroup 1620, a change to a personnel area 1630, a promotion request 1640, an internal reassignment 1650, a separation request 1660, a special payment request 1670, a transfer 1680, and a change to working time 1690.

The system 10 can have a first interface to allow a user to plan a human resource project related to the merger with a resource management capability and a time management capability. Moreover, the system 10 can have another interface to deliver a targeted result related to the resource management capability and the time management capability. The second interface allows a user to generate, post, and share information related to the merger.

The system 10 performs a number of other human-resource activities. Such human-resource activities include assisting in personnel reassignment, supporting collaborative personnel assignment, displaying a panel of information related to one of the organizations, matching one or more personnel resources, and tracking a movement of one or more personnel. Other human-resource activities include editing information for the personnel and editing panels for personnel in a user interface, in which a panel can be added or removed from the user interface.

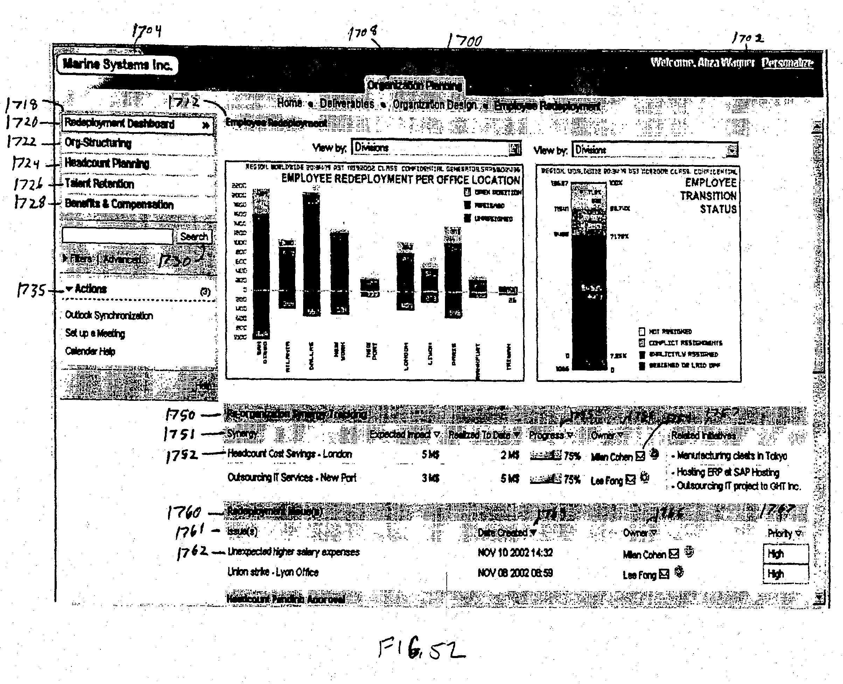

FIG. 52 illustrates an organizational planning interface 1700. The user interface 1700 can be part of a module to restructure an organization and allows a user to edit merger-related information. The interface 1700 can have a tab 1708 with a menu of user views. The tab name 1708 identifies if a user is part of a particular merger group. The tab name 1708 also indicates if the user 1702 has permission to access an organizational planning interface 1700. For example, if a tab is absent from a user's interface then the user can not be part of a particular merger group and cannot have access to information relating to that group or tab name 1708. The user interface 1700 can be formatted, organized, and personalized (e.g., icon 704) based on preferences of the organization or the related industry. The organizational planning interface 1700 can be part of the redeployment tracking features 1170.

The organizational planning interface 1700 allows a user to track one or more employees during the merger and present information that is editable and indicative of a performance level of one or more employees. The organizational planning interface 1700 also allows a user to devise one or more retention plans. The interface 1700 can present a performance information of a group or division in at least one of the organizations.

The organization planning interface 1708 presents a panel 1712 for employee redeployment, a panel 1750 for re-organization synergy tracking, and a panel 1760 for redeployment issues 1760. The user 1702 can access a panel 1718 in which the user can access links to present a redeployment dashboard 1720, an organizational structuring view 1722, a headcount planning view 1724, a talent retention view 1726, and a view 1728 for benefits and compensation. The panel 1718 permits the user 1702 to access other organization information with a search query 1730. The panel 1718 has other actions 1735 for the user 1702 to plan, manage, and communicate merger-related organizational planning tasks.

In the re-organizational synergy tracking panel 1750, the user 1702 can plan and manage organizational planning-related synergies. The term "synergy" refers to cooperative interaction among groups, especially among the acquired subsidiaries or merged parts of an organization, to create an enhanced combined effect. A "synergy" can be a value, performance, or effect that can be achieved as resources of two organizations combined will be greater than the sum of the separate individual resources. The interface 1700 allows the user 1702 to inspect the progress 1755 of a synergy 1751, such as a headcount cost savings 1752 in a London office. An owner 1756 of the synergy 1751 can be identified, and contacted with an electronic object (e.g., email 1754). The user 1702 can also determine if a synergy 1751 has a related initiative 1757 or organizational action.

Additional organizational planning issues are addressed in a redeployment issues panel 1760. The panel 1760 presents a list of issues 1761, the date an issue was generated at 1764, and the person 1766 who generated the issue. An issue 1762, such as unexpected higher salary expenses, can be tagged with a priority indicator or level 1757 (e.g., high, normal, or low). The panel 1760 allows the interface user 1702 to expeditiously address critical redeployment issues throughout the merger process.

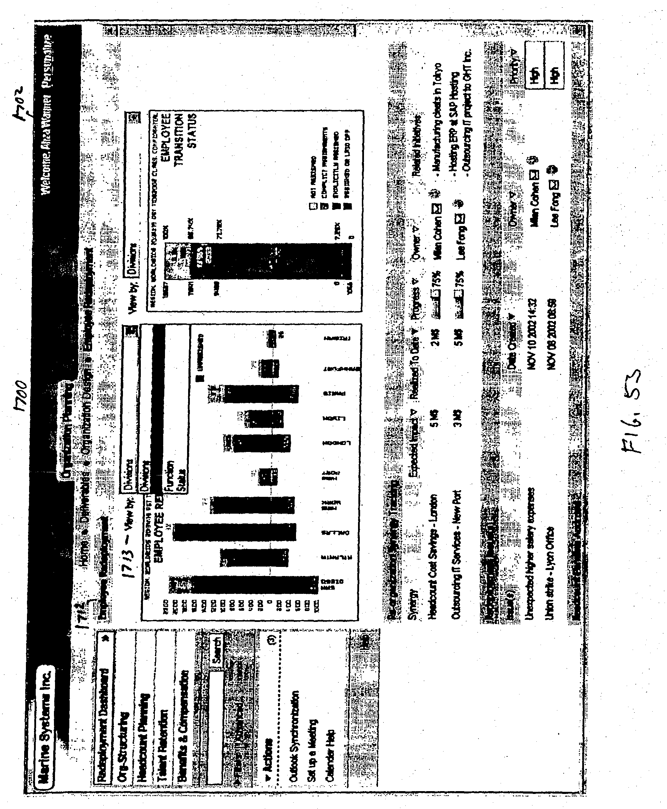

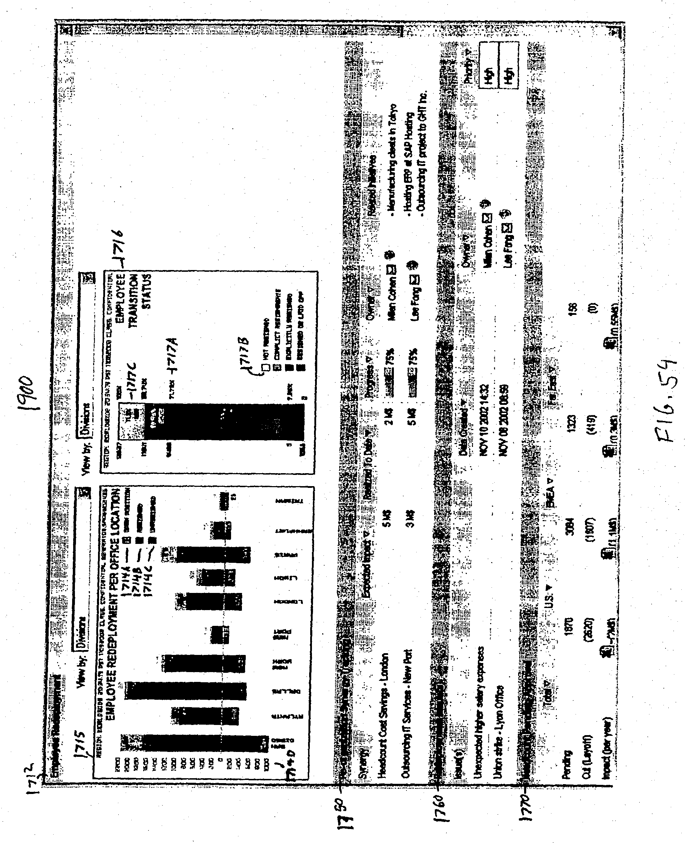

Divisions, offices, function, and status views 1713 are presented in the employee redeployment panel as illustrated in FIG. 53. A graph 1715 of the employee redeployment per office location is presented, as shown in FIG. 54. The graph 1715 shows a number 1714D of positions that are open 1714A, assigned 1714B, or unassigned 1714C for a given office location. Another graph 1716 presents the status of employee transitions or placements. The transition graph 1716 displays the percentage 1717A or number of total positions for a particular status. For example, the number 1717C of unassigned positions 1717B is displayed as 232 unassignments, or as 11.8% of allocated assignments.

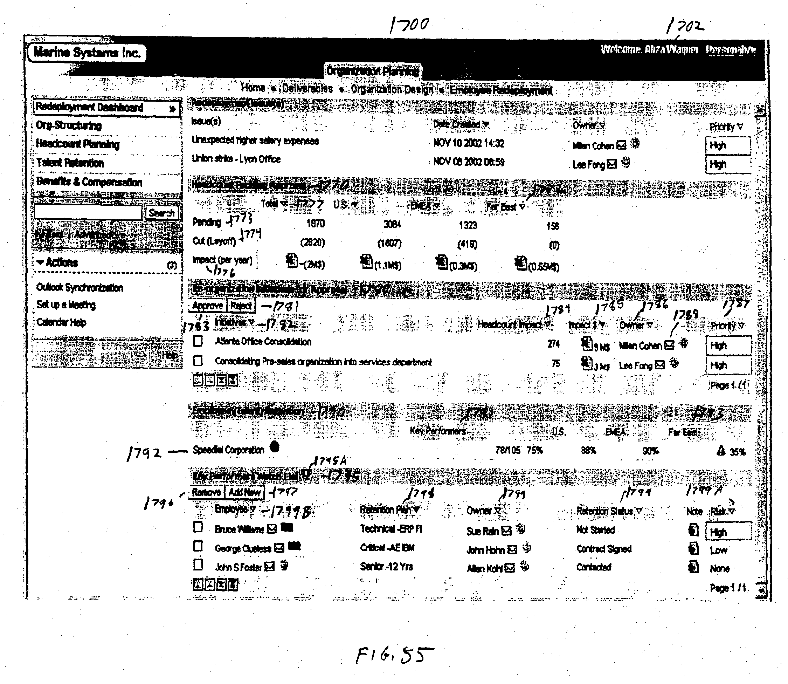

FIG. 55 illustrates another view of the organizational planning interface 1700. Organizational headcounts with pending approval are shown in panel 1770. The interface user 1702 examines the pending positions based on a total allotment 1777, or a particular region of the organization, such as a Far East region 1772. The displayed headcount approval is for pending redeployments 1773 or pending layoffs 1774. The user 1702 can inspect the financial impact 1776 of the pending positional approvals.

In addition to presenting the pending headcounts for approval 1770, the interface 1700 presents the re-organizational initiatives for approval in a panel 1780. The user 1702 can select to approve 1783 or reject 1781 initiatives 1782 when assessing organizational headcount 1784 and financial 1785 impacts. The user 1702 can use email 1788 to communicate with the owner 1786 of the initiative 1782. The user 1702 can also first address the most urgent initiatives based on an initiative priority indicator 1787.

In addition to integrating employees of the merger organizations, the organizational restructuring scenario has a tool to retain employees with a particular skill or talent, and a tool to realign employee-related benefits and compensation packages. To retain talented employees, the system 10 has a centralized database of key performers, a retention strategy planning and management tool, and identifies key personnel and candidates. The organizational restructuring tool can plan and track the movement of personnel, make employee assignments, plan teams with charters and budgets, and match and redeploy resources where needed. The organizational restructuring tool also has information for employee attrition, such as retirements and layoffs. Other human resource tasks are performed, including a link to human resource policies, a tool to publish organizational policies, as well as self-servicing tools for employees and managers.

The system also includes a user interface to present a graphical hierarchical representation of personnel in at least two of the organizations. The graphical hierarchical representation refers to a tree-like organizational chart.

FIG. 55 illustrates a panel 1790 to maintain and track talented employees. The user 1702 views the key performers 1791 in an organization 1792. The user 1702 determines if a particular region or division of the organization has a larger or smaller percentage of key performers. For example, the Far East 1793 region or division of Speedial Corporation 1792 has 35% of personnel as key performers in that region 1793. As a result, Speedial can want to layoff the non-key performers in one or more divisions during a merger.

FIG. 55 illustrates a panel 1795 to track and retain individual key performers in an organization. The panel 1795 includes information relating to a personnel retainment strategy, in which the information includes information for a geographic region of at least one of the organizations. An icon 1795A next to a panel 1795 or an organizational member can identify to the user 1702 if the panel 1795 or member relates to an organizational key performer. The user 1702 can add 1797 or remove 1796 key performers from the panel 1795 list. Members 1799 of the organization can make targeted retention plans 1798 for key performers 1799B, along with related retention status indicators 1794. The user 1702 can assess the risk 1799A of key performers who are likely to leave the organization during merger.

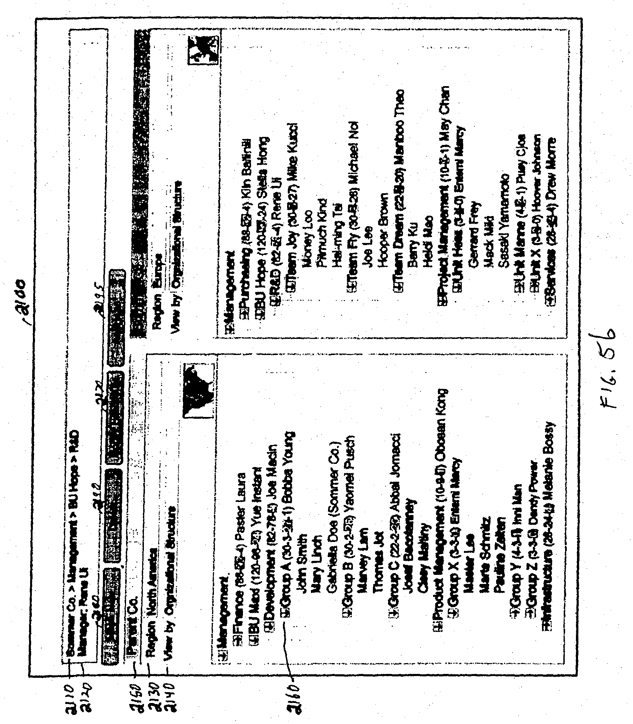

FIG. 56 shows an example page 2100 for a manager 2120 involved in planning the headcount of the merger and acquisition. The example page 2100 has a first user interface for a first organization and a second user interface for a second organization, in which both interfaces present one or more employees from each respective organization. A headcount planning module can view the organization by the region 2130 and employee function in the company. In this example, the headcount planning module can modify (via a button 2170) the current headcounts at the parent company 2150 according to the headcount information from Sommer Company 2110. The headcount planning module can also generate via a button 2180) or delete (via a button 2190) a division, team, group 2160, or unit in the parent company to accommodate the employees from Sommer Company. Depending on the staffing needs of Sommer Company 2110 and the parent company 2150 in the merger process 1100A, employees are assigned (via a button 2195) to a particular department. Other headcount planning and employee redeployment tasks, such as notifying a line manager of headcount changes, are performed in related organizational restructuring interfaces. The system 10 can include a user interface for a module to plan a budget related to the headcount.

The system 10 includes a first panel to permit a user to navigate among one or more linked interfaces, and a second panel presenting one or more members of one or more groups. The second panel includes notes, remarks, and descriptions on merger members, as well as a search query interface.

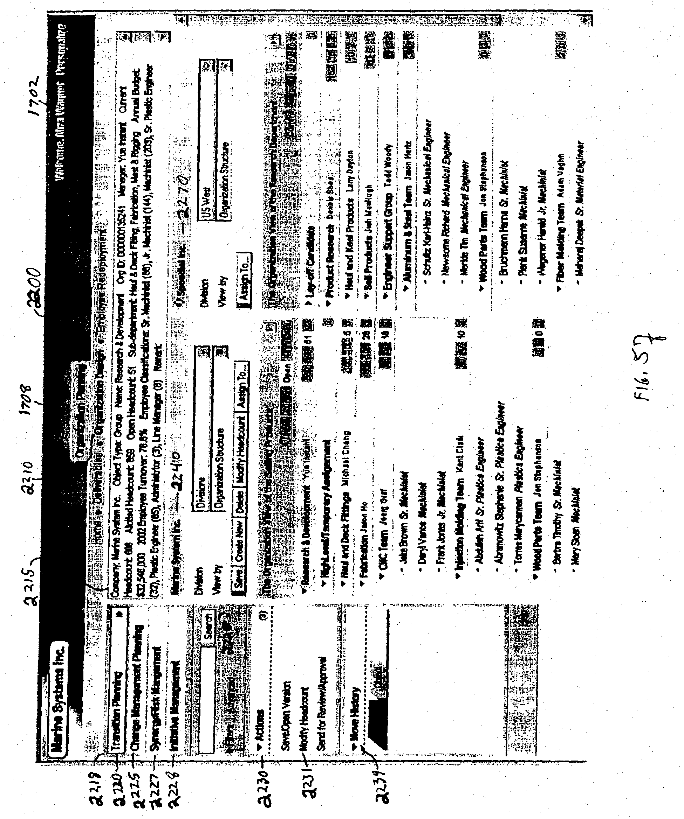

FIG. 57 illustrates an organizational design interface 2200. The interface 2200 is selected by a user 1702 in the organizational planning menu 1708. The interface 2200 includes a panel 2240 for an acquiring organization, such as Marine Systems Inc., and a panel 2270 for an acquired organization, such as Speedial Inc. The interface 2200 also includes a link to relate one or more interfaces of human resource information for each merger organization.

The organizational design interface 2200 is part of the strategic organizational design and transition planning features 1140.

A "fact sheet" panel 2215 displays organizational information, such as a financial statement, an organizational historical or background statement, investor information, and answers to frequently asked questions (FAQs). The "fact sheet" panel 2215 also displays one or more details for a particular merger group, employee headcount, headcount types, previous headcount transitions, and predicted headcount transitions.

Another panel 2218 in the interface 2200 permits the user 1702 to display various interface views, such as a transition planning view 2220, a change management planning view 2225, a synergy/risk management view 2227, and an initiative management view 2228. The user 1702 can enter a search query 2227, and perform other actions 2230 related to organizational planning 1708, such as modifying headcount 2231. Additionally, the panel 2218 allows the user 1702 to access a history 2234 of member and group movements during a merger.

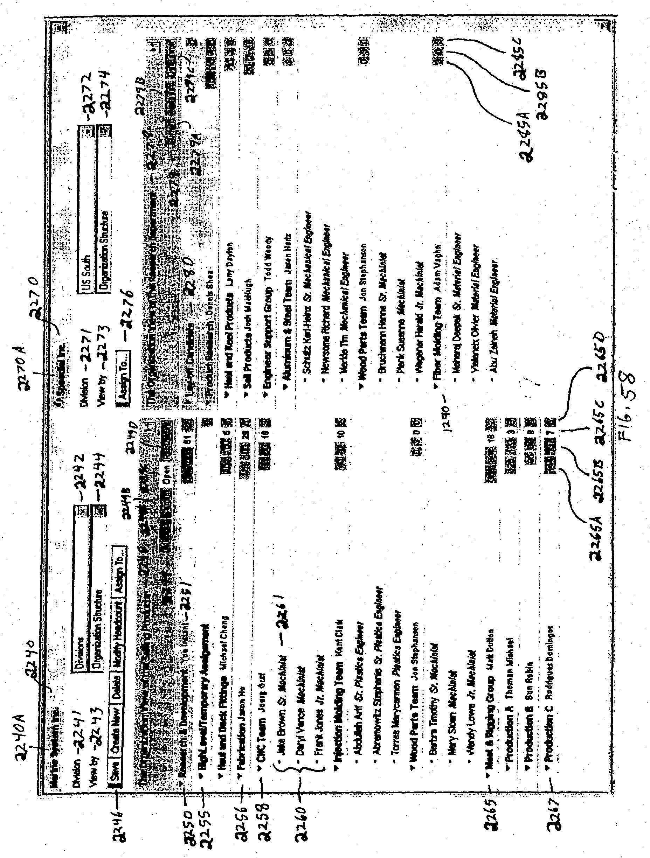

FIG. 58 presents a panel 2240 for the acquiring organization, and a panel 2270 for an acquired organization. The panels 2240 and 2270 enhance organizational design efforts when planning new headcounts, shifting headcounts, or tracking transition changes. Additionally, the panels 2240 and 2270 assist in employee reassignments by searching and matching resources, and tracking the status of employee movements.

The panel 2240 presents a view 2248 of the acquiring organization 2240A. A user 1702 can elect a division 2241 of the organization 2240A with a selector 2242. The selector 2242 opens a pull-down menu of options such as divisions, offices, function, or status. The user 1702 can also select a view 2243 with another selector 2244. The selector 2244 opens a pull-down menu of viewable options such as organizational structure, job function, and grade. Furthermore, the panel 2240 presents other options 2246 to the user 1702 including saving a profile, generating a new profile, deleting a profile, modifying organizational headcount, or making an assignment to a member of one or more organizations.

The organizational view 2248 of the sailing products display a hierarchy of departments such as research and developments 2250 and fabrication 2256. The panel 2240 identifies a leader 2251 of each department, and members of a group 2260, including an organizational title 2261 for each member. The status of a number 2249 of positions also displayed for each division, group, or subgroup. For example, the Production C subgroup 2267 in the Mast and Rigging Group 2265 presents a number 2265A of allotted positions 2249A, a number 2265B of current positions 2249B, a number 2265C of open positions 2249C, and a number 2265D of requested positions 2249D. The panel 2240 also shows the status of transitional personnel or personnel with temporary assignments 2255.

Panel 2270 presents an organizational view 2278 of a research department of an acquired organization 2270A, Speedial Inc. In panel 2270, a user 1702 elects a division 2271 of the organization 2270A with a selector 2272. However, the selector 2272 can open a different pull-down menu than the selector 2242 of panel 2240. For instance, the selector 2272 opens a pull-down menu of options displaying regional organizational divisions such as US South, US East, US West, and US Central.

As in panel 2240, panel 2270 presents information to display the status of a number of positions for each division or group. For instance, panel 2270 shows that the Fiber Molding Team 2290 has a number 2285A of current positions 2279A, a number 2285B of assigned positions 2279B, and a number 2285C of undetermined positions 2279C. The panel 2270 displays layoff candidates 2280.

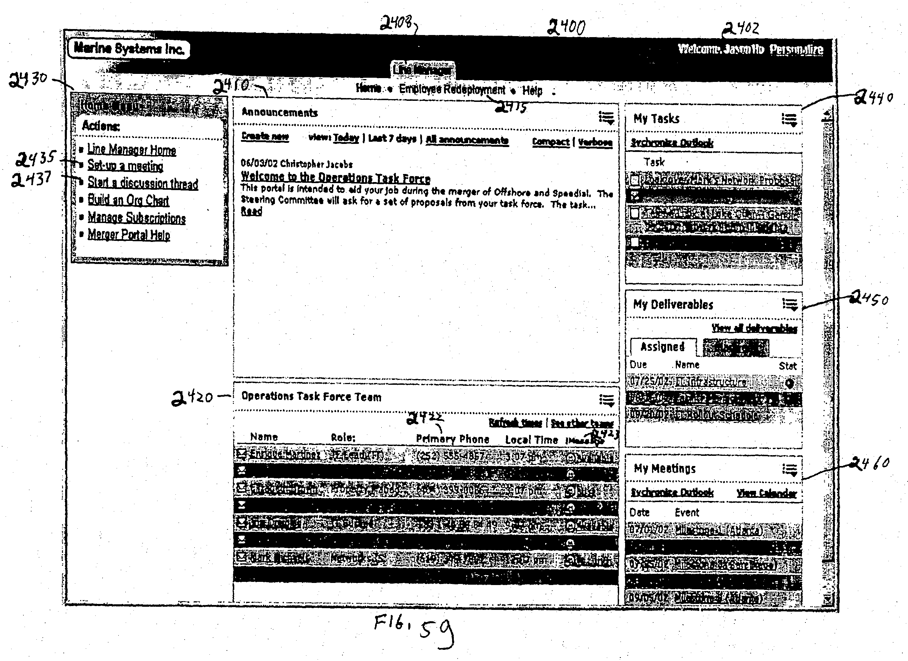

FIG. 59 illustrates an interface 2400 for a line manager 2402. The interface 2400 can be personalized 2402 for the line manager 2402, and greet the line manager 2402 with an announcement panel 2410. The line manager 2402 views a panel 2420 of the operations task force team, along with the contact information 2422 and availability 2423 of team members.

The interface 2400 allows the line manager 2400 to collaborate with other members to conduct organizational design tasks such as arranging a meeting 2435 or starting a discussion thread 2437 with panel 2430. The interface 2400 has personalized panels for tasks 2440, deliverables 1450, and meetings 2460.

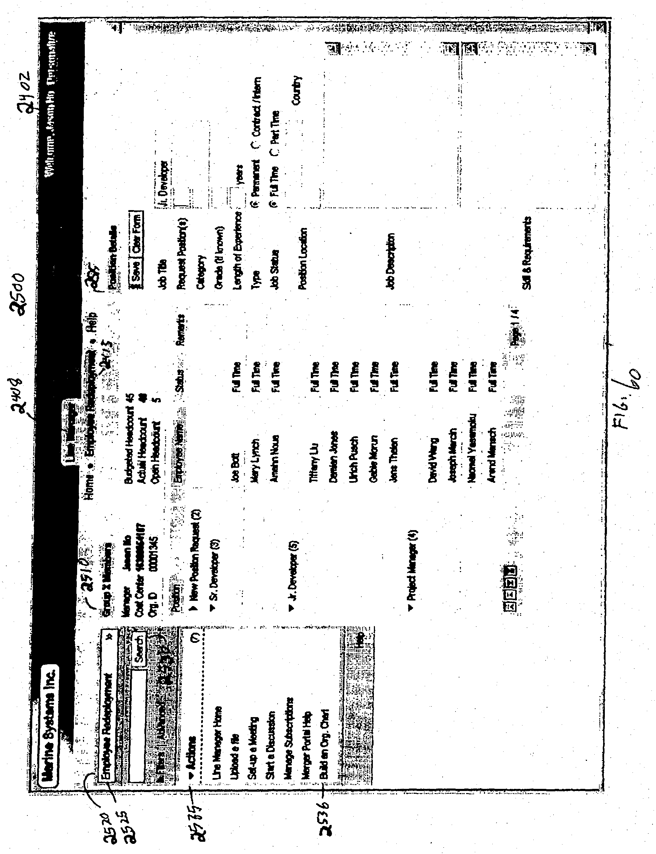

FIG. 60 illustrates an employee redeployment interface 2500 for the line manager 2402. For this interface 2500, an employee redeployment indicator 2415 is selected. The interface 2500 shows a panel 2510 for members of a group, a panel 2515 for positional details, and a panel 2520 with other navigational abilities for the user 2402. In panel 2520, the user 2402 can access an employee redeployment navigation indicator 2525, a search query interface 2530, and other user actions 2535, such as building an organizational chart. The employee redeployment interface 2500 can be part of the redeployment request features 1150.

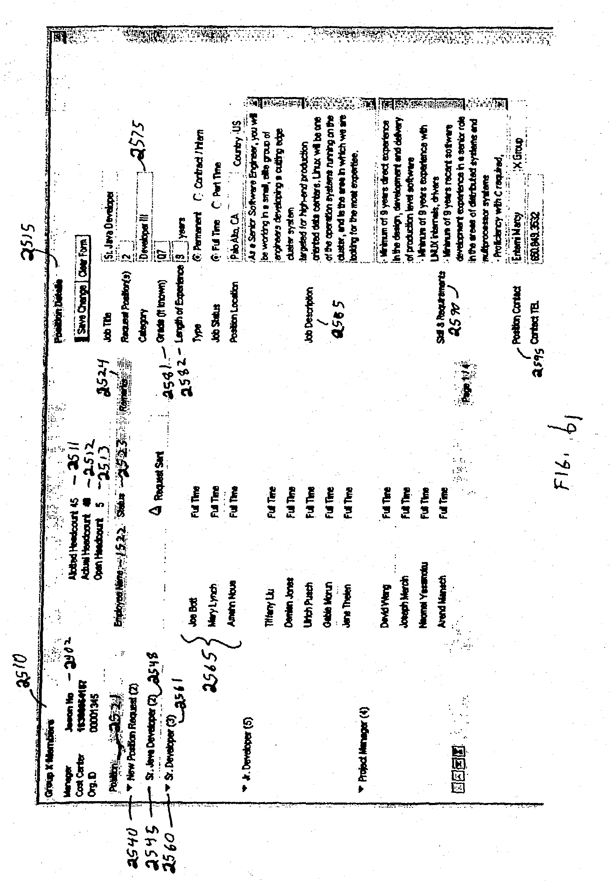

FIG. 61 presents panel 2510 and panel 2515 from interface 2500, in which panel 2515 has completed information fields, such as field 2575. In panel 2510, the line manager 2402 examines an allotted headcount value 2511, an actual headcount value 2512, and a value 2513 of open headcounts. The line manager 2402 inspects a status 2523 for organizational positions 2521 with accompanying descriptions and remarks 2524. The line manager 2402 can also access the positions in an organization by the title 2560 of the position, and view a number 2561 of members 2565 listed under a particular position.

Panel 2510 also present new position requests 2540, in addition to the types 2545 and numbers 2548 of the new position requests 2540. In FIG. 60, a position request 2545 is detailed in panel 2515 with completed fields, such as a job description 2585, and skills, experience, requirements, and work history 2590. A positional grade level 2581 and length of experience 2582 are displayed in panel 2515. The position detail panel 2515 associates a position with a contact person 2595.

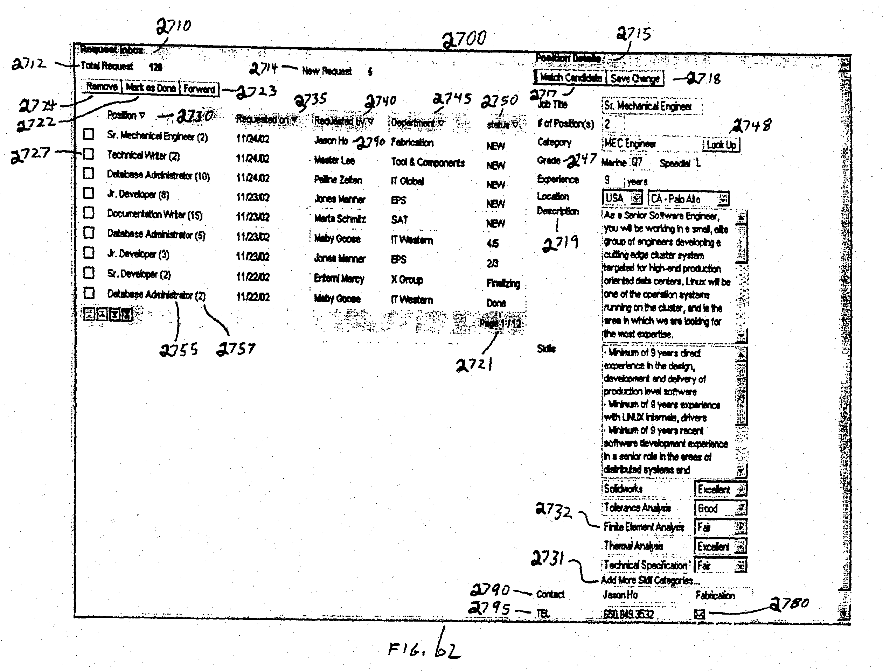

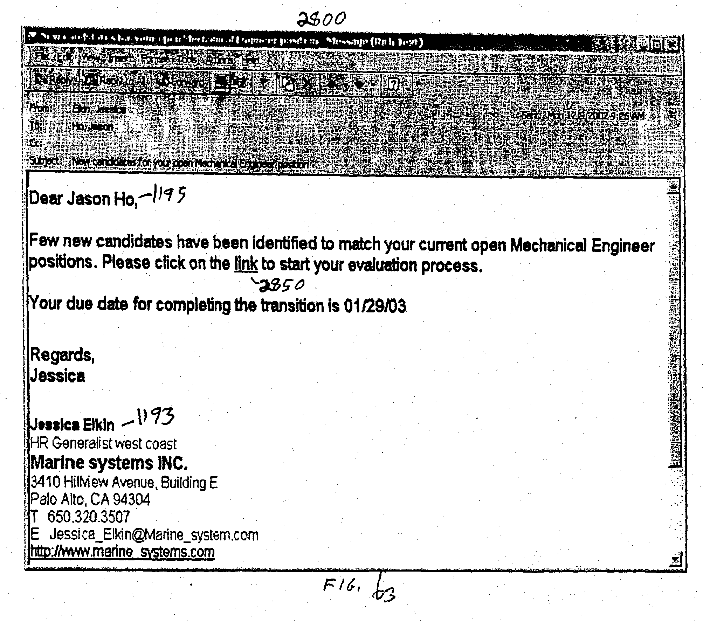

FIG. 62 shows a panel 2710 for an inbox designated for position requests, and another panel 2715 that details position parameters, such as a description 2719 of a position. The panel 2710 presents a number of total requests 2712, and a number of new requests 2714. The panel shows positions 2730 in the inbox, such as database administrators 2755. The user views listed positions 2730, a date 2735 that the positions were requested, a person 2740 who submitted the position request, a department 2745 that submitted the request, and a status 2750 of each request in the inbox. The panels shown in FIG. 63 can be part of the strategic candidate assignment features 1160.

In panel 2710, the user can remove 2724 or forward 2723 an inbox request. The user can select an indicator 2722 or select a checkbox 2727 when an inbox request has been answered or completed. If all of the inbox requests are not displayed in 2710, then the user can navigate to other inbox request pages or panels 2721.

In panel 2715, the user indicates if a candidate matches a position at 2717 and then saves any changes to the position details at 2718. Panel 2715 permits the user to edit and customize parameter fields. For instance, the user can select to add more skill categories 2731 for various positional details, such as a ranking of finite element analysis skills 2732. The panel 2715 provides a relative scale of grade levels 2747 in positions between the acquired and acquiring organizations. A "help" or reference indicator 2748 in the panel assists the user to comprehend various types of predefined position categories. Additionally, the person 2790 who submitted the position request serves as a contact person 2790. An email link 2780 and telephone address 2795 can also be displayed for the contact person 2790.

FIG. 63 illustrates an electronic object 2800 (e.g., email) that is generated as a result of the candidate review and tracking. In this example, a line manager 1195 receives an email from the human resource generalist 1193 to inform him of potential new candidate matches for open positions in his group. The line manger 1195 selects the link 2850 from the email 2800 to view the candidates and to facilitate an evaluation process.

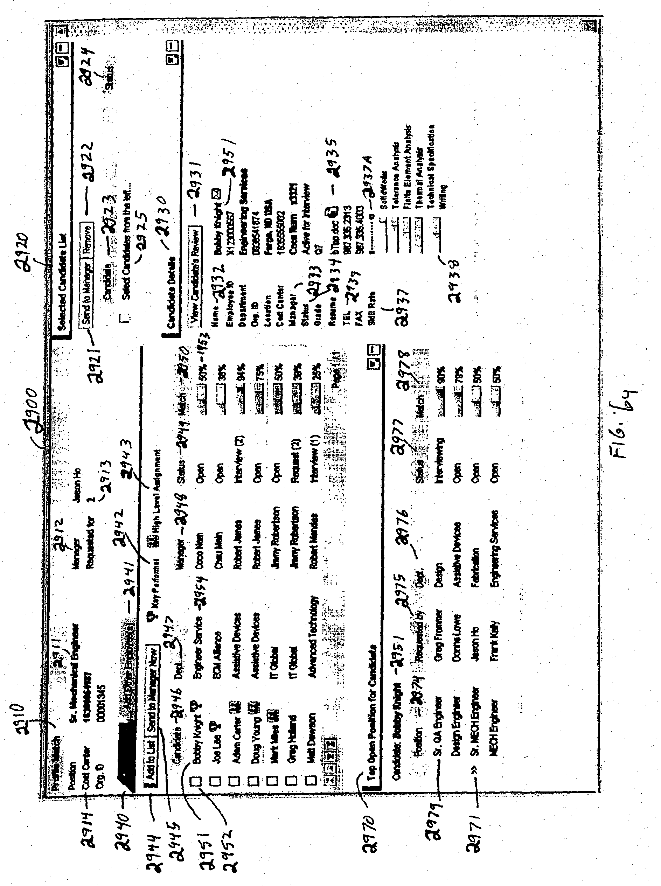

FIG. 64 illustrates an interface 2900 to aid merger organizations to identify, match, and retain candidates. In one example, the system 10 presents an information profile of a candidate for a position and match the candidate to the position. In another example, the system 10 includes a first interface to allow an organization to retain an employee and a second interface to match an employee to an organizational position, in which the match depends on one or more skill levels of the employee. The system 10 also includes a module or interface for matching or retaining an employee with a particular skill, work history, or experience. The module can include a database of key performers of at least one organization, a retention strategy planning and management tool, and an identifier of an employee skill.

For instance, a profile match panel 2910 allows a manager 2912 to find candidate matches for any number 2913 of requested positions 2911 in a designated group 2914, and to view profiles 2930 of candidates. Interface 2900 is utilized as part of the strategic candidate assignment 1160 and redeployment tracking 1170.

The manager 2912 accesses a list of matches 2940, add other candidates to the list at 2941 and 2944, and inspects a measurement of a match to one or more parameters for a position. The list 2940 presents all of the candidates 2946 in the merger organization for targeted departments 2947 and managers 2948, along with an assignment status 2949 of the candidate 2946. The list 2940 also indicates how well the profile 2930 of a candidate 2946 matches or meets the requirements for a position 2911 in a department 2947 via graphs 2953. For example, the list 2940 indicates that candidate Bobby Knight 2951 is a 50% match 2953 for a position in the engineer service department 2954. The list of 2940 also indicates if a candidate is a key performer 2942 or if a candidate should have a high level assignment 2943.

The indicators 2943 and 2942 help organizations retain key employees during a merger. Additionally, employees are assured that their new assignments will match their skills and experience levels. With the help of such retention indicators, anxious employees are not become inclined to leave their organization during the merger. Consequently, merger organizations do not have to spend resources to locate, interview, hire, and train new personnel to replace departed personnel. Moreover, merger organizations do not have to spend resources on unproductive employees who are waiting for a proper assignment.

Other members of the merger organizations can access the list 2940. The other merger members are managers, human resource personnel, executives, or officers. Such merger members can add candidates 2946 to the list 2940 via buttons at 2941 or at 2944, and immediately send a candidate profile to a manager at 2945. Such merger members can also note if a candidate is no longer available on the list with a selector (e.g., a check box) at 2952.

Panel 2970 assists an organization in finding the most appropriate available position for a candidate based on matching their skills and experience with a listed open position. For example, candidate Bobby Knight 2951 has a profile 2930 that best matches a Senior QA Engineer position 2979 as shown by graphs 2978. A manager 2912 for a department 2976 can assess if the candidate 2951 is a good match 2978. An indicator 2971 reveals to the manager 2912 that the available candidate 2951 is a better fit for other departments 2976. A status indicator 2977 reveals if a particular department 2976 is currently interviewing for a position 2974.

In addition to panels 2910 and 2970, panel 2920 presents another tool for the user or manager 2912 to access the profiles of candidates with a panel such as panel 2930. Panel 2920 interacts with the list accessed from panel list 2940 and allow the manager 2912 to access the profiles of selected candidates at 2925. The manager 2912 can remove listed candidate profiles at 2922, or send listed candidate profiles to a manager at 2921.

In panel 2930, the user can access and view a review of a candidate 2951 at 2931. The panel 2930 presents various details of a candidate profile, including a manager 2933 for the candidate 2951, an indicator of the status 2934 of the candidate 2951, and contact information 2939 for the candidate 2951. The panel 2930 alsos include a link 2935 to the resume of the candidate 2951. Furthermore, the panel 2930 includes an experience or skill rating 2937 for the candidate 2951. For instance, candidate Bobby Night 2951 has a rating in the middle of a scale 2937A for the skill of technical specification writing 2938.

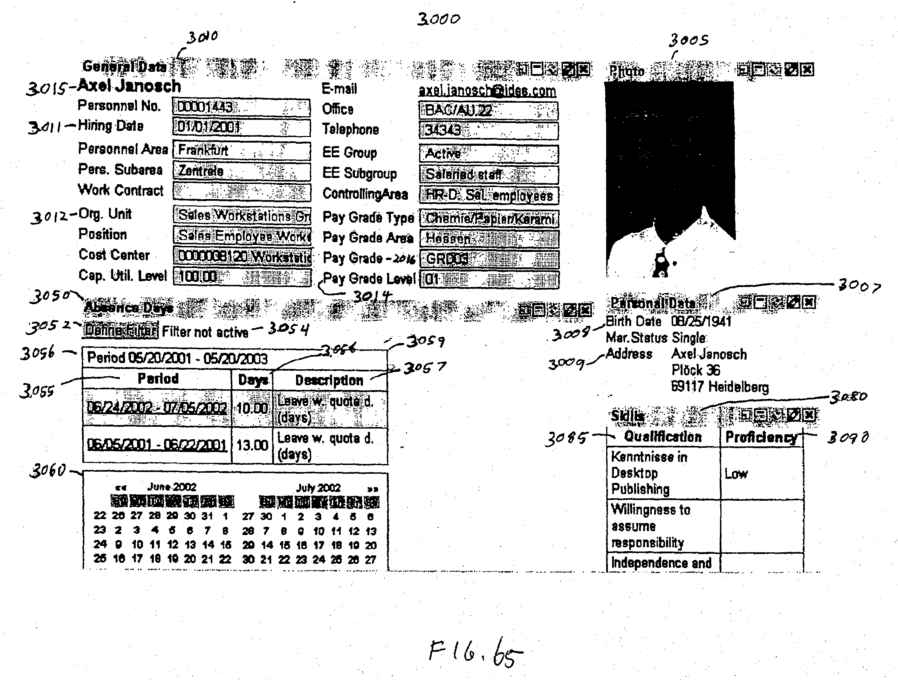

FIG. 65 illustrates an exemplary interface 3000 to assist in planning, managing, and assessing human resource information for a member of a merger organization. The interface 3000 can be utilized as part of a strategic candidate assignment 1160. Panel 3010 presents the general data of an employee 3015. The panel 3010 displays detailed human resource information on the employee 3015, such as a hiring date 3011, an organizational unit 3012, a pay grade 3016, and a pay grade level 3014.

Panel 3050 presents information on employee absenteeism 3050. The panel user can define a time period 3056 to view a chart 3059 with a description 3057 of absent days 3058 for various time periods 3055 for an employee 3015. The panel also includes a graphical calendar 3060 for the time period 3056. The graphical calendar 3060 helps the user to select a time period 3056 and specific dates.

The panel 3052 permits the user to define parameters for organizational absenteeism at 3052. For example, an organization can have a number of personal days or vacation days for an employee 3015 that should not be counted as absent days. The organization can also have a holiday during the time period 3056 that should not be counted as an absent day.

Panel 3005 allows the user to visually identify an employee with a picture or photograph.

FIG. 65 further presents employee information in panel 3007. The panel 3007 includes employee data that may not be included in panel 3010, such as personal data. The personal data includes the birth date 3008 of the employee and the address 3009 of the employee.

Panel 3080 contains information to exhibit the experience or skill level of an employee 3015. Such information can help a panel user to quickly evaluate the talent of the employee 3015. Such information can include one or more employee qualifications 3085, or proficiencies 3020.

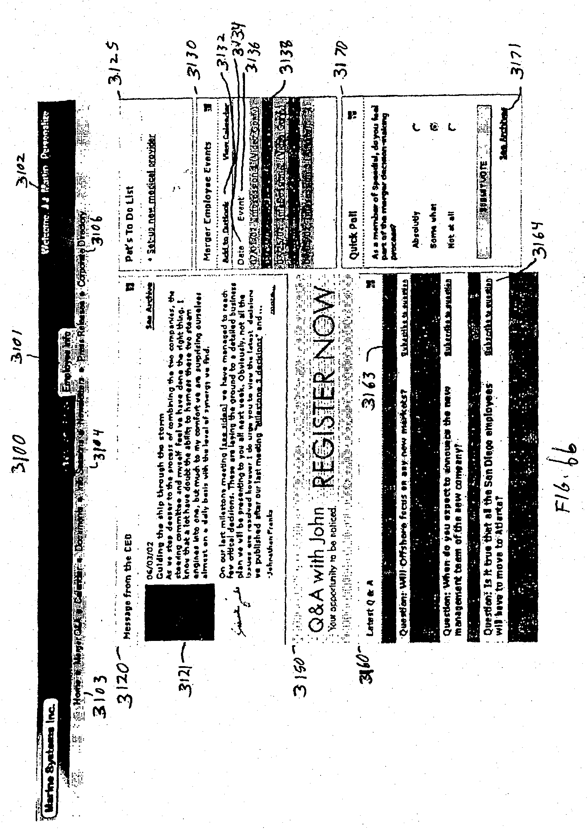

FIG. 66 illustrates an interface 3100 for an employee 3102 during a merger. The interface 3100 can have a personalized greeting for an employee 3102 and can be an intranet interface. A menu tab 3101 indicates that the interface 3100 is for an employee 3102. The employee 3102 has a home page 3103, and other pages for communication and accessing information, such as an information sessions page 3104 or a corporate directory page 3106.

An executive of an organization, such as a chief executive officer (CEO) 3121, can update employees on the progress of the merger, as illustrated in panel 3120. The employee 3102 also interacts with the CEO 3121 with panels 3150 and 3160. Panel 3160 presents a question and answer (Q&A) session that allows employees to submit questions or statements to the CEO 3121. The CEO 3121 communicates with the employee 3102, and other employees can view the communications and join the interactive discussion at 3164. Such interaction additionally allows a merger organization to retain employees, and reduces the amount of misinformation that can arise during a merger.

Panel 3125 allows the user 3102 to have a personalized merger task list. Panel 3170 allows employees to submit and view interactive polls or questionnaires. Employees can also view previous polls 3171 and Q&A sessions 3163 that have been archived.

Panel 3130 keeps employees informed of merger-related events. For example, panel 3130 displays the date 3134 and type of event 3136 related to a merger, such as a CEO breakfast event 3138 in Atlanta. The employee 3102 selects the event link of 3138 and is further presented with a page (not shown) of information related to the breakfast. The employee 3102 can also add the event to an external calendar program, such as the calendar program in Outlook® by Microsoft Corporation.

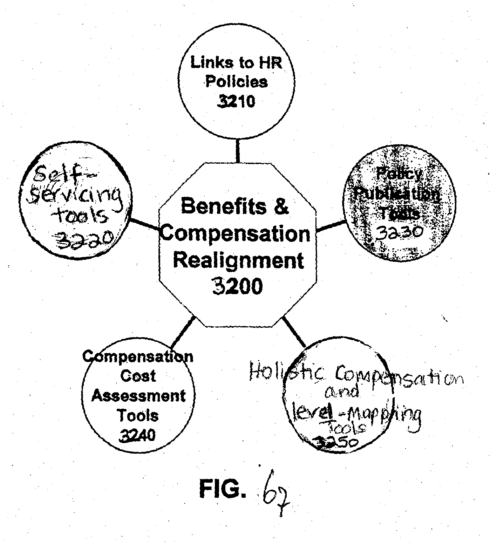

The system 10 has tools and interfaces for one or more benefit and compensation realignment objectives 3200 as shown in FIG. 67. A user interacts with one or more human-resource tools presented below with one or more user interfaces.

The system 10 helps an organization to derive a new cost-effective compensation package based on merger strategies with a holistic compensation and level-mapping tool 3250. The tool 3250 allows an acquiring organization to map analogous positions and compensation levels between positions in the acquiring organization and the acquired organization. The tool 3250 then can easily relate compensation levels for various positions during the merger. For instance, the acquiring organization can relate or map the compensation level for senior design engineering positions in the acquired organization with similar positions the acquiring organization. Hence, the system 10 can ensure that merger employees are properly compensated based on a relative pay level.

A compensation cost assessment tool 3240 helps an organization assess compensation options for employees and better devise benefit packages based on organizational resources and budgets. For example, the system allows merger organizations to examine disparate employee compensation packages and devise a new and composite package based on compensation cost.

Alternatively, instead of producing an individualized compensation package for each employee, the tool 3240 helps the user generate a composite compensation package for all employees. The composite compensation package can be classified according to an employee position level (e.g., manager, or assembly worker), or can be varied based geographic location, (e.g., California office, or Texas office). Consequently, by reducing the amount of resources needed to generate, serve, and fund individualized compensation packages, the tool 3240 reduces organizational costs associated with compensation.

The system 10 includes self-servicing tools 3220 for managers and employees. These tools 3220 reduce the amount of resources human resource personnel can need for managing employee transitions during the merger process. Additionally, these tools 3220 helps managers devise personalized compensation packages for groups or departments. The self-servicing tools 3220 include interfaces that allow managers and employees to select, copy, and paste personal information from one organization to another merger organization. The merger organizations can easily inform employees of new benefit packages with policy publication tools 3230 and links 3210 to human resource policies. The system 10 includes interfaces to permit the generation, posting, and sharing of information, as well as interfaces to allow a user to exchange merger information with a stakeholder.

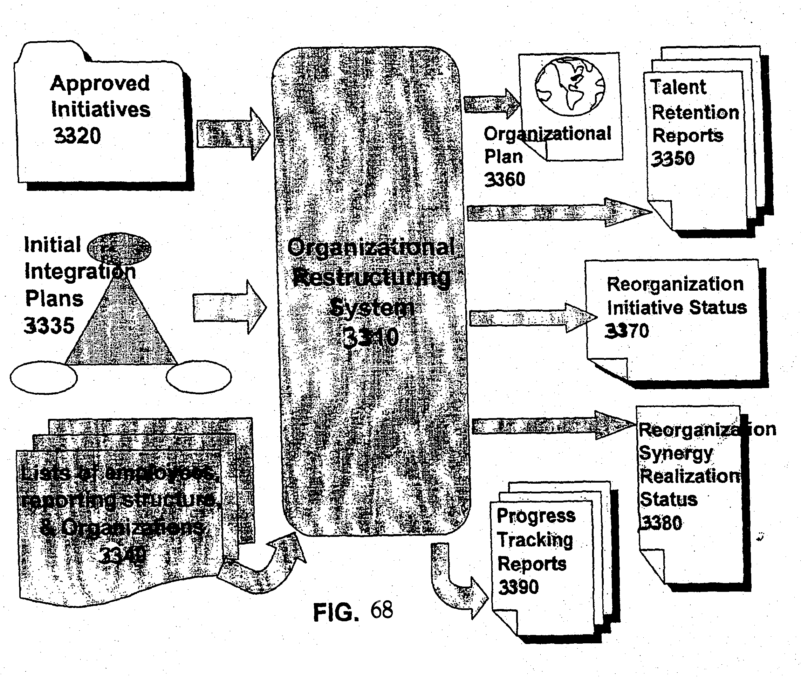

FIG. 68 illustrates a representation of an exemplary organizational restructuring system 3310 with inputs or prerequisites, and outputs or generated results. Some of the prerequisites include one or more approved initiatives 3320, initial integration plans 3335, and lists 3340 of employees, reporting structures, and organizations. Other prerequisites (not shown) include enterprise change information related to one or more of the following: historical data, financial information, sales information, marketing information, real estate property or lease information, or regional employment policies. Some of the generated results include one or more organizational plans 3360, talent retention objects or reports 3350, reorganization initiative statuses 3370, reorganization synergy realization statuses 3380, and progress tracking objects or reports 3390. Some other generated results (not shown) include enterprise change information directly or indirectly related to one or more of the following: financial objects, sales information, marketing information, distribution information, or employee-related legal objects. Moreover, the system 10 allows a machine to plan and manage a merger of at least two organizations, as well as to redeploy personnel and restructure an organizational structure of at least one of the organizations.

## Claims

1. A method of facilitating an enterprise change comprising:
- providing one or more information systems of at least two enterprises, wherein the enterprises are being combined to execute pre-change due diligence and/or post-change integration of the enterprise change, the enterprise change comprising at least one of a merger and an acquisition;
- combining said two or more information systems so as to treat said two or more information systems as a single logical information system; and
- providing a user interface to access the logical information system.

2. The method according to claim 1, further comprising:
providing a clean room object that is arranged for meeting and exchanging information and objects on a clean room user access level.

3. The method according to claim 2, wherein the clean room object comprises a first user interface adapted for a procurement stakeholder for a first organization; and
a second user interface adapted for a procurement stakeholder for a second organization, the second user interface facilitating sharing of one or more procurement objects with the first user interface.

4. The method according to claim 1, further comprising:
providing a module to consolidate suppliers of at least one of the organizations, and providing a list of consolidated items, the list comprising a lowest negotiated supplier price and a resulting post-merger cost savings.

5. The method according to claim 1, further comprising:
adapting said user interface to allow one or more merger members to access procurement information, and/or to allow a user to search for stakeholders, a deliverables view, and a financial impact of obtaining one or more goods from a supplier.

6. The method according to claim 1, further comprising:
providing a first tool adapted to provide predefined templates for customer-related objects, wherein the customer-related objects comprise customer documents and electronic mailings.

7. The method according to claim 6 further comprising:
providing a second tool adapted to track one or more customer reactions to merger developments, the merger developments comprising merger-related news and merger-related announcements.

8. The method according to claim 7 further comprising:
providing a third tool adapted to assist in at least one of an assignment, a mapping, and a transfer of one or more customer accounts, the one or more customer accounts including sales-related accounts.

9. The method according to claim 8 wherein the third tool is adapted to facilitate a performance comparison of at least two customer-related personnel for at least one of the merger organizations, the two customer-related personnel including two account executives.

10. The method according to claim 1, further comprising:
providing a module adapted to proactively identify and present on said user interface a sales counterpart in a first merger organization related to a member of a second merger organization.

11. The method according to claim 10 wherein said module is adapted to:
producing an electronic mailing, the production of the electronic mailing comprising:
importing lists of data, the lists including a customer list and a customer assignment list;
consolidating the lists of data, the consolidating including syntactic mapping of one or more character fields;
configuring an electronic mailing content; and
screening the electronic mailing content, the content including one or more accounts.

12. The method of Claim 11 wherein said module is further adapted to:
delivering the electronic mailing content to a sales-related merger member; and
providing an exception workflow for undeliverable electronic mailings.

13. The method according to claim 1, wherein the user interfaces are adapted to a role of the user and a phase of the merger, the user role including an executive of one or more customer accounts, a security of the user interface related to the phase of the merger and a role of the user.

14. The method according claim 1 further comprising:
adapting said user face to providing an exception list for non-matched customer accounts; and
tracking a status of customer-related engagements.

15. The method according to Claim 1, further comprising: adapting the user interface to comprise:
a first panel adapted to address customer-related issues;
a second panel adapted to address sales-related initiatives, the second panel including at least one of an approval button, a rejection button, a checklist of initiatives, a number of impacted customers, a financial impact, an initiative owner, and an initiative priority level;
a third panel adapted to facilitate customer retention, the third panel including a measure of customer retention, one or more retention rates, and a movement of the one or more rates;
a fourth panel adapted to facilitate customer retention, the fourth panel including at least one of a customer satisfaction rate, a customer survey, and a movement of the rate, wherein the customer survey comprises one or more external objects; and
a fifth panel adapted to facilitate a search of merger information and to facilitate contacting one or more merger members.

16. The method according to claim 1, the method further comprising providing human-resource tools, the human-resource tools comprising:
a compensation cost assessment tool;
a compensation comparison and level mapping tool; and
a self-servicing tool for employees and managers, the human-resource tools including one or more user interfaces.

17. The method according to claim 16, wherein the user interfaces are adapted to present a compensation pay level for one or more employees, the user interfaces further adapted to allow a user to exchange merger information with a stakeholder and to present a time planning period.

18. The method of claim 16, wherein the self-servicing interface is adapted to allow managers and employees to select, copy, and paste personal information related to one organization to relate to another merger organization.

19. A system for facilitating an enterprise change, wherein one or more information systems of at least two enterprises are provided and wherein the enterprises are being combined to execute pre-change due diligence and/or post-change integration of the enterprise change, the enterprise change comprising at least one of a merger and an acquisition comprising:
a layer of application logic services for interfacing said two or more information systems for forming a single logical information system from a combination of said two or more information systems; and
a user interface to access said a layer of application logic services forming said logical information system.

20. The system according to claim 19, further comprising:
a clean room object that is arranged for meeting and exchanging information and objects on a clean room user access level.

21. The system according to claim 20, wherein the clean room object comprises a first user interface adapted for a procurement stakeholder for a first organization; and
a second user interface adapted for a procurement stakeholder for a second organization, the second user interface facilitating sharing of one or more procurement objects with the first user interface.

22. The system according to claim 19, further comprising:
a module for consolidating suppliers of at least one of the organizations, and
for providing a list of consolidated items, the list comprising a lowest negotiated supplier price and a resulting post-merger cost savings.

23. The system according to claim 19, further comprising:
a first tool adapted to provide predefined templates for customer-related objects, wherein the customer-related objects comprise customer documents and electronic mailings.

24. The method according to claim 23 further comprising:
a second tool adapted to track one or more customer reactions to merger developments, the merger developments comprising merger-related news and
merger-related announcements.

25. The system according to claim 24 further comprising:
a third tool adapted to assist in at least one of an assignment, a mapping, and
a transfer of one or more customer accounts, the one or more customer accounts including sales-related accounts.

26. The system according to claim 25 wherein the third tool is adapted to facilitate a performance comparison of at least two customer-related personnel for at least one of the merger organizations, the two customer-related personnel including two account executives.

27. The system according to claim 19, further comprising:
a module adapted to proactively identify and present on said user interface a sales counterpart in a first merger organization related to a member of a second merger organization.

28. The system according to claim 1, wherein the user interface comprises:
a first panel adapted to address customer-related issues;
a second panel adapted to address sales-related initiatives, the second panel including at least one of an approval button, a rejection button, a checklist of initiatives, a number of impacted customers, a financial impact, an initiative owner, and an initiative priority level;
a third panel adapted to facilitate customer retention, the third panel including a measure of customer retention, one or more retention rates, and a movement of the one or more rates;
a fourth panel adapted to facilitate customer retention, the fourth panel including at least one of a customer satisfaction rate, a customer survey, and a movement of the rate, wherein the customer survey comprises one or more external objects; and
a fifth panel adapted to facilitate a search of merger information and to facilitate contacting one or more merger members.

29. The system according to claim 19, further comprising human-resource tools, the human-resource tools comprising:
a compensation cost assessment tool;
a compensation comparison and level mapping tool; and
a self-servicing tool for employees and managers, the human-resource tools including one or more user interfaces.

30. A program storage device readable by a processing apparatus, the device embodying a program of instructions executable by the processing apparatus to perform the steps of any one of claims 1 - 18.
